(19) Europäisches Patentamt
European Patent Office
Office européen des brevets

(11) **EP 3 159 375 A1**

(12) **EUROPEAN PATENT APPLICATION**
published in accordance with Art. 153(4) EPC

(43) Date of publication:
26.04.2017 Bulletin 2017/17

(51) Int Cl.:
*C08J 9/14* (2006.01)

(21) Application number: 15809786.5

(22) Date of filing: 17.06.2015

(86) International application number:
PCT/JP2015/003040

(87) International publication number:
WO 2015/194174 (23.12.2015 Gazette 2015/51)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 18.06.2014 JP 2014125593
18.06.2014 JP 2014125643

(71) Applicant: Asahi Kasei Construction Materials
Corporation
Tokyo 101-8101 (JP)

(72) Inventors:
• MUKAIYAMA, Shigemi
Tokyo 101-8101 (JP)
• IHARA, Ken
Tokyo 101-8101 (JP)
• HAMAJIMA, Masato
Tokyo 101-8101 (JP)

(74) Representative: Strehl Schübel-Hopf & Partner
Maximilianstrasse 54
80538 München (DE)

(54) **PHENOL RESIN FOAM AND METHOD FOR MANUFACTURING SAME**

(57) Provided is a phenol resin foam that has low initial thermal conductivity and that retains low thermal conductivity for a long period of time. The present phenol resin foam may contain a cyclopentane and a high-boiling hydrocarbon with a boiling point of from 120 °C to 550 °C and may have a density of from 10 kg/m$^3$ to 150 kg/m$^3$. The content of the cyclopentane in the phenol resin foam per 22.4 $\times$ 10$^{-3}$ m$^3$ space volume in the phenol resin foam is from 0.25 mol to 0.85 mol.

## FIG. 2

EP 3 159 375 A1

**Description**

TECHNICAL FIELD

The present disclosure relates to a phenol resin foam and a method for producing the same, especially to a phenol resin foam with low thermal conductivity that may be used as a thermal insulation material for constructions, vehicles, devices, and others, and a method for producing such a phenol resin foam.

BACKGROUND

When used as a thermal insulation material, a phenol resin foam with lower thermal conductivity may provide required thermal insulation performance in a smaller thickness, and accordingly, help reduce the amount of the thermal insulation material used and space necessary for execution. In cases of, for example, a residential house, an effective living space with respect to a construction area of the residential house may be increased.

Furthermore, once executed, the thermal insulation material remains used for a long period of time, and accordingly, needs to retain high thermal insulation performance for the long period of time.

In recent years, a concern for energy and resource saving has increased the need for long-term quality housing, and the thermal insulation material is required to have lower initial thermal conductivity and also to retain low thermal conductivity for a longer period of time than ever before.

Patent Literatures 1, 2, and 3 each describe a phenol resin foam in which a high-boiling foaming agent, such as normal pentane or isopentane, and paraffin are used in combination. Although the described phenol resin foam has improved thermal conductivity at a low temperature, there are still demands for further improvement in initial thermal conductivity and for prevention of an increase in thermal conductivity over time.

CITATION LIST

Patent Literatures

    PTL 1: JP H11-140216 (A)
    PTL 2: WO 99/11697 (A1)
    PTL 3: JP 2007-131803 (A)

SUMMARY

(Technical Problem)

The present disclosure is to provide a phenol resin foam that has low initial thermal conductivity and that retains low thermal conductivity for a long period of time, and the present disclosure is also to provide a method for producing such a phenol resin foam.

(Solution to Problem)

To solve the above problem, the present inventors have repeatedly conducted earnest studies and found the following. That is to say, perhaps because cyclopentane has a cyclic structure unlike normal pentane or isopentane, a phenol resin foam that has low initial thermal conductivity and that retains low thermal conductivity for a long period of time may be obtained when the phenol resin foam contains at least a cyclopentane and a high-boiling hydrocarbon with a boiling point within a predetermined range, and the content of the contained cyclopentane is regulated to be within a predetermined range, and moreover, the amount of the high-boiling hydrocarbon extracted in chloroform from the phenol resin foam is regulated to be within a predetermined range. Thus, the present inventors have completed the present disclosure.

In detail, the present disclosure is as follows.

    (i) A phenol resin foam that contains a cyclopentane and a high-boiling hydrocarbon with a boiling point of from 120 °C to 550 °C and that has a density of from 10 kg/m$^3$ to 150 kg/m$^3$, wherein
    a content X, in mol, of the cyclopentane per $22.4 \times 10^{-3}$ m$^3$ space volume in the phenol resin foam is from 0.25 to 0.85,
    a proportion of the cyclopentane in a hydrocarbon having a carbon number of 6 or less included in the phenol resin foam is from 60 mol% to 100 mol%, and

an extracted amount Y, in gram, of the high-boiling hydrocarbon with a boiling point of from 120 °C to 550 °C that is extracted in chloroform per 22.4 × 10⁻³ m³ space volume in the phenol resin foam when the phenol resin foam is ground and subject to extraction processing in chloroform is within the range from a coefficient b, which is calculated by the equation (2) below, to a coefficient a, which is calculated by the equation (1) below:

$$a = -11.61\,X + 31.57 \ldots (1);$$

and

$$b = 2.67\,X - 0.46 \ldots (2).$$

(ii) The phenol resin foam according to (i), wherein the high-boiling hydrocarbon with a boiling point of from 120 °C to 550 °C is in the form of liquid at a pressure of 101.325 kPa and a temperature of 30 °C.

(iii) The phenol resin foam according to (i) or (ii), wherein

the hydrocarbon having a carbon number of 6 or less included in the phenol resin foam includes from 60 mol% to 99.9 mol% of the cyclopentane, and

the hydrocarbon having a carbon number of 6 or less has an average boiling point of from 25 °C to 50 °C.

(iv) The phenol resin foam according to (i) or (ii), wherein

the hydrocarbon having a carbon number of 6 or less included in the phenol resin foam includes from 60 mol% to 99.9 mol% of the cyclopentane and from 0.1 mol% to 40 mol% of at least one type selected from any hydrocarbon having a boiling point of from - 50 °C to 5 °C, and

the hydrocarbon having a carbon number of 6 or less has an average boiling point of from 25 °C to 50 °C, and a content of the hydrocarbon having a carbon number of 6 or less in the phenol resin foam is from 0.3 mol to 1.0 mol per 22.4 × 10⁻³ m³ space volume in the phenol resin foam.

(v) The phenol resin foam according to any one of (i) to (iv), having a thermal conductivity of 0.0200 W/m·K or less both under a 10 °C environment and under a 23 °C environment.

(vi) The phenol resin foam according to any one of (i) to (v), wherein

the hydrocarbon having a carbon number of 6 or less included in the phenol resin foam includes a hydrocarbon having a boiling point of from - 50 °C to 5 °C, and

the hydrocarbon having a boiling point of from - 50 °C to 5 °C contains isobutane.

(vii) The phenol resin foam according to any one of (i) to (vi), further containing at least one of a hardly water-soluble metal hydroxide that discharges water at 150 °C or more and a hardly water-soluble phosphorus-based flame retardant that has a decomposition temperature of 150 °C or more.

(viii) The phenol resin foam according to any one of (i) to (vii), having a closed cell ratio of 90 % or more and an average cell diameter of from 40 μm to 300 μm.

(ix) The phenol resin foam according to any one of (i) to (viii), having a void area ratio of 0.2 % or less.

(x) The phenol resin foam according to any one of (i) to (ix), further containing a hydrofluoroolefin having a carbon number of 3 or 4, wherein

a content Z, in mol, of the hydrofluoroolefin having a carbon number of 3 or 4 per 22.4 × 10⁻³ m³ space volume in the phenol resin foam is from 0.01 to 0.4, and

a sum, in mol, of a content of the hydrocarbon having a carbon number of 6 or less per 22.4 × 10⁻³ m³ space volume in the phenol resin foam and a content Z, in mol, of the hydrofluoroolefin having a carbon number of 3 or 4 per 22.4 × 10⁻³ m³ space volume in the phenol resin foam is from 0.3 to 0.9.

(xi) The phenol resin foam according to (x), wherein the extracted amount Y, in gram, is a coeffiicient c or less, the coeffiicient c being calculated by the equation (3) below:

$$c = -33.6\,Z + 30.0 \ldots (3)$$

(xii) A method for producing a phenol resin foam according to any one of (i) to (ix) described on the above, the method including:

mixing a foamable phenol resin composition containing at least a phenol resin, a surfactant, a high-boiling hydrocarbon having a boiling point of from 120 °C to 550 °C, a foaming agent including a cyclopentane, and an acid curing catalyst, with use of a mixing machine; discharging the foamable phenol resin composition from a distribution part of the mixing machine; and subsequently, in a process of foaming and curing the foamable phenol resin composition by heating, pressurizing the foamable phenol resin composition from an upper and a lower direction to produce a phenol resin foam molded in a plate shape.

(xiii) A method for producing a phenol resin foam according to (x) or (xi), the method including:

mixing a foamable phenol resin composition containing at least a phenol resin, a surfactant, a high-boiling hydrocarbon having a boiling point of from 120 °C to 550 °C, a foaming agent including a cyclopentane and a hydrofluoroolefin having a carbon number of 3 or 4, and an acid curing catalyst, with use of a mixing machine; discharging the foamable phenol resin composition from a distribution part of the mixing machine; and subsequently, in a process of foaming and curing the foamable phenol resin composition by heating, pressurizing the foamable phenol resin composition from an upper and a lower direction to produce a phenol resin foam molded in a plate shape.

(xiv) The method, according to (xii) or (xiii), for producing a phenol resin, wherein a pressure at the distribution part is from 0.3 MPa to 10 MPa.

(xv) The method, according to any one of (xii) to (xiv), for producing a phenol resin, wherein

a content of water contained in the phenol resin to be charged into the mixing machine is from 2 % by mass to 20 % by mass, and wherein

in the process of foaming and curing the foamable phenol resin composition, the foamable phenol resin composition is pressurized with use of a double conveyor, and

a temperature in the double conveyor is from 60 °C to 100 °C.

(xvi) The method, according to any one of (xii) to (xv), for producing a phenol resin, wherein

in the process of foaming and curing the foamable phenol resin composition, the foamable phenol resin composition is pressurized with use of a double conveyor, and

a coefficient R, which is calculated from a content P, in % by mass, of water contained in the phenol resin to be charged into the mixing machine and a temperature Q, in °C, in the double conveyor by the equation (4) below, is from 20 to 36:

$$R = P + 0.2286\,Q \ldots (4).$$

(Advantageous Effect)

The present disclosure provides a phenol resin foam that has low initial thermal conductivity and that retains low thermal conductivity for a long period of time, and the present disclosure also provides a method for producing such a phenol resin foam. Thus, the phenol resin foam according to the present disclosure is preferable for use as a thermal insulation material for constructions, vehicles, devices, and the like.

BRIEF DESCRIPTION OF THE DRAWINGS

In the accompanying drawings:

FIG. 1 is an example of a schematic view of a mixing machine used in one of embodiments of the present disclosure; and

FIG. 2 is an example of a schematic view of a molding machine with a slat-type double conveyor used in one of embodiments of the present disclosure.

DETAILED DESCRIPTION

In the following, one of embodiments of the present disclosure (hereinafter, called the "present embodiment") is described in detail. The present disclosure is not limited to the following embodiment and may be implemented with various changes made within the scope of the subject thereof.

A phenol resin foam in the present embodiment has a density of from 10 kg/m$^3$ to 150 kg/m$^3$, preferably from 15 kg/m$^3$ to 70 kg/m$^3$. When the density is excessively low, the foam is difficult to handle due to decreased strength, and, since cell walls are thin, a foaming agent contained in the foam might be easily replaced by air, and long-term thermal insulation performance tends to be deteriorated. When the density is excessively high, the thermal conductivity of a resin part forming cell walls might be increased, and thermal insulation performance might be deteriorated.

Herein, the phenol resin foam in the present embodiment has been achieved based on the following findings made by the present inventors. That is to say, initial thermal insulation performance at 10 °C and 23 °C and long-term thermal insulation performance of the phenol resin foam may be significantly improved when the phenol resin foam contains a predetermined amount of a cyclopentane, among various types of the hydrocarbon, and a predetermined amount of a high-boiling hydrocarbon with a boiling point of from 120 °C to 550 °C, and optionally, contains a predetermined amount of a hydrofluoroolefin having a carbon number of 3 or 4.

Accordingly, the following describes the cyclopentane and the high-boiling hydrocarbon, which are contained in the phenol resin foam in the present embodiment, and the hydrofluoroolefin having a carbon number of 3 or 4, which may be optionally contained in the phenol resin foam in the present embodiment, and the contents thereof.

(Cyclopentane)

The cyclopentane mainly serves as a foaming agent and is used to reduce thermal conductivity and improve thermal insulation performance of the phenol resin foam in production of the phenol resin foam having the aforementioned density.

In the phenol resin foam in the present embodiment, the content X (in mol) of the cyclopentane per $22.4 \times 10^{-3}$ $m^3$ space volume in the phenol resin foam ranges from 0.25 to 0.85. When the content of the cyclopentane is excessively low, long-term thermal insulation performance tends to be deteriorated. When the content of the cyclopentane is excessively high, initial thermal insulation performance both at 10 °C and 23 °C tends to be deteriorated. The content X of the cyclopentane is preferably from 0.3 to 0.77, more preferably from 0.35 to 0.7, and especially preferably from 0.4 to 0.65.

The proportion of the cyclopentane in a hydrocarbon having a carbon number of 6 or less included in the phenol resin foam in the present embodiment is from 60 mol% to 100 mol%. The proportion is preferably 70 mol% or more and more preferably 75 mol% or more, and is also preferably 99.9 mol% or less. When the proportion of the cyclopentane in the hydrocarbon having a carbon number of 6 or less is excessively low, excellent thermal insulation performance of the cyclopentane tends to be deteriorated. Accordingly, the cyclopentane needs to be contained at a certain proportion or more.

Additionally, the hydrocarbon in the present embodiment refers to a compound composed solely of hydrogen and carbon atoms. Examples of the hydrocarbon having a carbon number of 6 or less may include chain aliphatic hydrocarbons of alkanes, alkenes, and dienes such as methane, ethane, ethylene, propane, propylene, butane, butene, butadiene, pentane, pentene, hexane, and hexane and cyclic aliphatic hydrocarbons of cycloalkanes and cycloalkenes such as cyclobutane, cyclopentane, and cyclohexene.

Furthermore, in the phenol resin foam in the present embodiment, the hydrocarbon having a carbon number of 6 or less included in the foam preferably includes the cyclopentane and at least one type selected from any hydrocarbon having a boiling point of from - 50 °C to 5 °C. In the hydrocarbon having a carbon number of 6 or less included in the foam, the content of the cyclopentane is preferably from 60 mol% to 99.9 mol%, and the content of the at least one type selected from any hydrocarbon having a boiling point of from - 50 °C to 5 °C is preferably from 0.1 mol% to 40 mol%. The content of the cyclopentane is more preferably from 70 mol% to 95 mol%, and the content of the at least one type selected from any hydrocarbon having a boiling point of from - 50 °C to 5 °C is more preferably from 5 mol% to 30 mol%. The content of the cyclopentane is most preferably from 75 mol% to 90 mol%, and the content of the at least one type selected from any hydrocarbon having a boiling point of from - 50 °C to 5 °C is most preferably from 10 mol% to 25 mol%.

When the hydrocarbon having a carbon number of 6 or less included in the phenol resin foam includes the cyclopentane and the hydrocarbon having a boiling point of from - 50 °C to 5 °C, a high closed cell ratio is easily achieved, and long-term thermal insulation performance is easily improved. Furthermore, when the hydrocarbon having a boiling point of from - 50 °C to 5 °C is contained, good initial thermal insulation performance at 10 °C tends to be achieved even when the content of the high-boiling hydrocarbon having a boiling point of from 120 °C to 550 °C is low, and producing cost and high flame retardance, which is one of excellent properties of the phenol resin foam, are easily maintained. However, when the content of the hydrocarbon having a boiling point of from - 50 °C to 5 °C is excessively high, the effect of improving initial thermal insulation performance at 10 °C and 23 °C tends to be decreased.

Additionally, a boiling point in the present embodiment refers to a boiling point at a normal pressure.

Herein, examples of the hydrocarbon having a boiling point of from - 50 °C to 5 °C include propane, propylene, isobutane, normal butane, 1-butene, cis-2-butene, trans-2-butene, 2-methylpropene, and butadiene. From the viewpoints of thermal conductivity and stability, propane, normal butane, and isobutane are preferable, and isobutane is especially preferable.

The hydrocarbon having a carbon number of 6 or less included in the phenol resin foam in the present embodiment preferably has an average boiling point, calculated by the equation (5) below, of from 25 °C to 50 °C. The above average boiling point is more preferably from 28.5 °C to 46.5 °C and especially preferably from 31 °C to 43 °C. When the average boiling point is excessively low, thermal conductivity of mixed gas tends to be high. Accordingly, initial thermal insulation performance at 23 °C might be deteriorated, and moreover, the effect of improving long-term thermal insulation performance may tend to be decreased because the content of the cyclopentane, which is difficult to release from the inside of cells, decreases (that is to say, the content of a hydrocarbon having a lower boiling point than the cyclopentane increases). On the other hand, when the average boiling point of the hydrocarbon having a carbon number of 6 or less is excessively high, the hydrocarbon is easily liquefied, and initial thermal insulation performance at 10 °C tends to be deteriorated. Besides, when the high-boiling hydrocarbon having a boiling point of from 120 °C to 550 °C is used in combination, cell sizes are more likely to be increased, and, due to radiation, the effect of improving thermal insulation performance might be more likely to be degraded.

$$\text{Average boiling point } T_{AV} = a \times Ta + b \times Tb + c \times Tc + \ldots (5)$$

In the equation (5) herein, a, b, c, ... represent the content percentages (molar fractions) of different types of the hydrocarbon contained, and Ta, Tb, Tc, ... represent the corresponding boiling points (°C).

Moreover, in the phenol resin foam in the present embodiment, the content of the hydrocarbon having a carbon number of 6 or less per $22.4 \times 10^{-3}$ m$^3$ (22.4 L) space volume in the foam is preferably from 0.3 mol to 1.0 mol. The content of the hydrocarbon having a carbon number of 6 or less per $22.4 \times 10^{-3}$ m$^3$ space volume in the foam is more preferably 0.35 mol or more and even more preferably 0.45 mol or more, and is more preferably 0.85 mol or less, even more preferably 0.77 mol or less, especially preferably 0.7 mol or less, and most preferably 0.65 mol or less. When the content of the hydrocarbon having a carbon number of 6 or less is low, long-term thermal insulation performance might be more likely to be deteriorated, and when the content is excessively high, initial thermal insulation performance at 10 °C and 23 °C may tend to be deteriorated.

(Hydrofluoroolefin Having Carbon Number of 3 or 4)

The phenol resin foam in the present embodiment may contain a hydrofluoroolefin having a carbon number of 3 or 4 (note that the phrase "having a carbon number of 3 or 4" herein equals the phrase "having a carbon number of from 3 to 4"). The hydrofluoroolefin having a carbon number of 3 or 4, along with the aforementioned cyclopentane, serves as a foaming agent and is used to reduce thermal conductivity and improve thermal insulation performance of the phenol resin foam by reducing the cell diameter thereof, in production of the phenol resin foam having the aforementioned density. The phenol resin foam in the present embodiment may contain, as the hydrofluoroolefin having a carbon number of 3 or 4, only one of the hydrofluoroolefin having a carbon number of 3 and the hydrofluoroolefin having a carbon number of 4 or both of the hydrofluoroolefin having a carbon number of 3 and the hydrofluoroolefin having a carbon number of 4.

Herein, the hydrofluoroolefin having a carbon number of 3 or 4 contained in the phenol resin foam in the present embodiment refers to a compound that has a carbon number of 3 or 4 and that contains at least a fluorine atom, a hydrogen atom, and a carbon-carbon unsaturated bond (olefinic double bond). This compound has an ozone depletion potential (ODP) of substantially zero and a zero or very low global warming potential (GWP). Examples of the hydrofluoroolefin having a carbon number of 3 or 4 may include hydrofluoropropene, hydrochlorofluoropropene, hydrobromofluoropropene, hydrofluorobutene, hydrochlorofluorobutene, and hydrobromofluorobutene. Among these examples, tetrafluoropropene (hydrofluoropropene), chlorotrifluoropropene (hydrochlorofluoropropene), hexafluoro-2-butene (hydrofluorobutene), and chlorohexafluoro-2-butene (hydrochlorofluorobutene) are preferable in terms of stability.

When the phenol resin foam in the present embodiment contains the hydrofluoroolefin having a carbon number of 3 or 4, the content Z (in mol) of the hydrofluoroolefin having a carbon number of 3 or 4 per $22.4 \times 10^{-3}$ m$^3$ space volume in the phenol resin foam is preferably from 0.01 to 0.4, more preferably from 0.02 to 0.35, and even more preferably from 0.03 to 0.3. The hydrofluoroolefin having a carbon number of 3 or 4 contains a halogen atom such as a fluorine atom and a carbon-carbon unsaturated bond. Perhaps because of its low affinity for the cyclopentane and the high-boiling hydrocarbon due to the above structure, a predetermined amount or more of the hydrofluoroolefin having a carbon number of 3 or 4, when contained in the phenol resin foam, provides the effect of reducing the cell diameter and improving thermal conductivity. On the other hand, when the content of the hydrofluoroolefin having a carbon number of 3 or 4 is excessively high, long-term thermal insulation performance of the phenol resin foam tends to be deteriorated perhaps because of a tendency to be scattered from the foam and decrease the closed cell ratio due to a high affinity of this compound with respect to the phenol resin.

Additionally, the phenol resin foam in the present embodiment may also contain inorganic gasses such as carbon dioxide, nitrogen, oxygen, helium, and argon, ethers such as dimethyl ether, diethyl ether, methyl ethyl ether, and furan, ketones such as acetone and methyl ethyl ketone, and halogenated hydrocarbons (excluding the aforementioned hydrofluoroolefin having a carbon number of 3 or 4) such as methyl chloride, methylene chloride, ethyl chloride, and 2-chloropropane. However, when, in addition to the hydrocarbon having a carbon number of 6 or less and the hydrofluoroolefin having a carbon number of 3 or 4 that are described above, a large amount of substances having foamability and volatility are contained, initial thermal insulation performance and long-term thermal insulation performance might be deteriorated. Accordingly, according to a measurement method described later below, the ratio of the total amount of the cyclopentane, the hydrofluoroolefin having a carbon number of 3 or 4, and the hydrocarbon having a boiling point of from - 50 °C to 5 °C, in substances having a boiling point of from - 100 °C to 81 °C that are contained in the foam, is preferably from 70 mol% to 100 mol%, more preferably from 90 mol% to 100 mol%, and most preferably from 95 mol% to 100 mol%.

When the phenol resin foam in the present embodiment contains the hydrofluoroolefin having a carbon number of 3 or 4, the sum (in mol) of the content of the hydrocarbon having a carbon number of 6 or less per $22.4 \times 10^{-3}$ m$^3$ space volume in the phenol resin foam and the content Z of the hydrofluoroolefin having a carbon number of 3 or 4 per $22.4 \times 10^{-3}$ m$^3$ space volume in the phenol resin foam is preferably from 0.3 to 0.9, more preferably from 0.35 to 0.8, and even more preferably from 0.45 to 0.7. When the total content of the hydrocarbon having a carbon number of 6 or less and the hydrofluoroolefin having a carbon number of 3 or 4 is low, long-term thermal insulation performance might be more likely to be deteriorated, and when the total content is excessively high, initial thermal insulation performance at 10 °C and 23 °C may tend to be deteriorated.

(High-Boiling Hydrocarbon)

The high-boiling hydrocarbon having a boiling point of from 120 °C to 550 °C, when used in combination with the aforementioned cyclopentane and the hydrofluoroolefin having a carbon number of 3 or 4 that may be optionally included in the phenol resin foam, is mainly used to reduce thermal conductivity and improve thermal insulation performance of the foam.

Herein, the high-boiling hydrocarbon having a boiling point of from 120 °C to 550 °C in the phenol resin foam in the present embodiment refers to a compound composed solely of hydrogen and carbon atoms. Preferably, the compound does not contain a conjugated double bond such as a benzene ring and a naphthalene ring and has a straight, a branched chain, or a cyclic structure. The high-boiling hydrocarbon in the present embodiment may have one or less double bond per 5 carbons, preferably one or less double bond per 10 carbons, and more preferably one or less double bond per 20 carbons. The compound has especially preferably no double bond. The reason is that a double bond, such as a conjugated double bond, present within molecules of the high-boiling hydrocarbon decreases affinity for the cyclopentane and deteriorates stabilizing ability of the cyclopentane liquefied at a low temperature in cells.

Additionally, the high-boiling hydrocarbon having a boiling point of from 120 °C to 550 °C may be a single compound or a mixture of a plurality of compounds. Examples of the high-boiling hydrocarbon may include compounds such as nonane, decane, undecane, and dodecane. Examples of compositions including the high-boiling hydrocarbon that may be used in preparation of the phenol resin foam may include kerosene oil, diesel oil, hydrocarbon-based synthetic oil obtained through polymerization of $\alpha$-olefin followed by hydrogenation treatment, and paraffinic base oil and naphthenic base oil obtained through solvent washing, desulfurization, and hydrogenation treatment of components separated from crude oil by reduced-pressure distillation.

When the boiling point of the high-boiling hydrocarbon contained in the phenol resin foam in the present embodiment is excessively low or high, the effect of improving initial thermal insulation performance at 10 °C and 23 °C tends to be decreased. One reason is perhaps that an excessively low boiling point causes a rapid deterioration in stabilizing ability of the liquefied cyclopentane. Furthermore, the effect of improving thermal insulation performance tends not to be achieved even if the content of the high-boiling hydrocarbon is high. On the other hand, when the boiling point is excessively high, perhaps because of an increase in molecule size and a decrease in the amount of molecules appearing in cells during foaming, a large amount of the high-boiling hydrocarbon is needed to achieve the sufficient effect of improving initial thermal insulation performance. The increase in the content of the high-boiling hydrocarbon in turn tends to decrease the effect of improving long-term thermal insulation performance. Accordingly, the boiling point of the high-boiling hydrocarbon is preferably 140 °C or more and more preferably 160 °C or more, and is preferably 550 °C or less, more preferably 450 °C or less, and even more preferably 350 °C or less. Furthermore, when the phenol resin foam contains a plurality of types of the high-boiling hydrocarbon having different boiling points, most preferably, 80 % by mass or more of the high-boiling hydrocarbon is a hydrocarbon having a boiling point of from 160 °C to 350 °C.

Additionally, in cases where the phenol resin foam contains the hydrofluoroolefin having a carbon number of 3 or 4, thermal insulation performance tends to be maintained sufficiently even when the high-boiling hydrocarbon having a very high boiling point is used. The reason appears to be that the high-boiling hydrocarbon is more likely to appear in cells during foaming due to the influence of slight plasticization caused by the hydrofluoroolefin having a carbon number of 3 or 4.

A boiling point in the present embodiment refers to a boiling point at a normal pressure. A boiling point of a hydrocarbon having a very high boiling point (such as a boiling point of 250 °C or more) refers to a gas chromatography boiling point obtained by using a gas chromatograph with a non-polar column, which may also be used for analysis of crude oil or the like.

The phenol resin foam in the present embodiment is characterized in that the amount of the high-boiling hydrocarbon having a boiling point of from 120 °C to 550 °C included in the foam satisfies the following conditions in terms of the relation with the content of the cyclopentane in the foam.

That is to say, the phenol resin foam in the present embodiment is characterized in that an extracted amount Y (in gram) of the high-boiling hydrocarbon having a boiling point of from 120 °C to 550 °C that is extracted in chloroform per $22.4 \times 10^{-3}$ m$^3$ space volume in the phenol resin foam is within the range from a coefficient b, which is calculated by the equation (2) below, to a coefficient a, which is calculated by the equation (1) below:

$$a = -11.61\,X + 31.57 \ldots (1)$$

$$b = 2.67\,X - 0.46 \ldots (2)$$

Herein, the "chloroform extracted amount" refers to a volume extracted in chloroform when the phenol resin foam is ground and subject to extraction processing in chloroform so that a volume average particle diameter of primary particles becomes 30 $\mu$m or less. In the equations (1) and (2), X represents the content (in mol) of the cyclopentane per $22.4 \times 10^{-3}$ m$^3$ space volume in the phenol resin foam.

In the phenol resin foam in the present embodiment, when the extracted amount Y of the high-boiling hydrocarbon is less than the coefficient b, the amount of the high-boiling hydrocarbon relative to the content of the cyclopentane in the foam falls short, and initial thermal insulation performance at 10 °C and 23 °C tends to be deteriorated. When the extracted amount Y of the high-boiling hydrocarbon is more than the coefficient a, the amount of the high-boiling hydrocarbon is in excess, and the closed cell ratio tends to be decreased, and long-term thermal insulation performance tends to be deteriorated, and moreover, high flame retardance, which is one of excellent properties of the phenol resin foam, tends to be decreased.

When the phenol resin foam in the present embodiment contains the aforementioned hydrofluoroolefin having a carbon number of 3 or 4, the amount of the high-boiling hydrocarbon having a boiling point of from 120 °C to 550 °C included in the foam preferably satisfies the following condition in terms of the relation with the content of the hydrofluoroolefin having a carbon number of 3 or 4 contained in the foam.

That is to say, in the phenol resin foam in the present embodiment, the extracted volume Y (in gram) of the high-boiling hydrocarbon having a boiling point of from 120 °C to 550 °C that is extracted in chloroform per $22.4 \times 10^{-3}$ m$^3$ space volume in the phenol resin foam is within the range of a coefficient c or less, the coefficient c being calculated by the equation (3) below:

$$c = -33.6\,Z + 30.0 \ldots (3)$$

In the equation (3), Z represents the content (in mol) of the hydrofluoroolefin having a carbon number of 3 or 4 per $22.4 \times 10^{-3}$ m$^3$ space volume in the phenol resin foam.

In the phenol resin foam in the present embodiment, when the extracted amount Y of the high-boiling hydrocarbon is more than the coefficient c, the amount of the high-boiling hydrocarbon is in excess, and the closed cell ratio tends to be decreased, and long-term thermal insulation performance tends to be deteriorated.

Additionally, from the view points of preventing a decrease in long-term thermal insulation performance and preventing a decrease in flame retardance, the extracted amount Y of the high-boiling hydrocarbon is preferably a coefficient a' or less, the coefficient a' being calculated by the equation (6) below, and is more preferably a coefficient a" or less, the coefficient a" being calculated by the equation (7) below. Furthermore, from the viewpoint of enhancing initial thermal insulation performance at 10 °C and 23 °C, the extracted amount Y of the high-boiling hydrocarbon is preferably a coefficient b' or more, the coefficient b' being calculated by the equation (8) below, and is more preferably a coefficient b" or less, coefficient the coefficient b" being calculated by the equation (9) below. Moreover, from the view point of long-term thermal insulation performance, the extracted amount Y of the high-boiling hydrocarbon is preferably a coefficient c' or less, the coefficient c' being calculated by the equation (10) below, and is more preferably a coefficient c" or less, the coefficient c" being calculated by the equation (11) below.

$$a' = -9.29\,X + 26.23 \ldots (6)$$

$$a'' = -6.96\,X + 20.89 \ldots (7)$$

$$b' = 3.73\,X - 0.43 \ldots (8)$$

$$b'' = 4.79\,X - 0.41 \ldots (9)$$

$$c' = -30.8\,Z + 25.0 \ldots (10)$$

$$c'' = -28.0\,Z + 20.0 \ldots (11)$$

The high-boiling hydrocarbon having a boiling point of from 120 °C to 550 °C is preferably in the form of liquid at a pressure of 101.325 kPa (1 atm) and a temperature of 30 °C, more preferably in the form of liquid at a temperature of 20 °C, even more preferably in the form of liquid at a temperature of 10 °C, and especially preferably in the form of liquid at a temperature of 0 °C.

When the high-boiling hydrocarbon is in a solid form under temperature conditions under which the foam is used, the effect of improving initial thermal insulation performance at 10 °C and 23 °C tends not to be sufficient, and a large amount of the high-boiling hydrocarbon is needed to achieve the sufficient effect of improving initial thermal insulation performance at 10 °C and 23 °C. The increase in the content of the high-boiling hydrocarbon tends to decrease the effect of improving long-term thermal insulation performance. Although not clearly understood, the reason why the effect of improving initial thermal insulation performance tends not to be sufficient is perhaps that the cyclopentane and the high-boiling hydrocarbon are less likely to interact with each other when the high-boiling hydrocarbon is in a solid form.

(Properties or Like of Phenol Resin Foam)

The phenol resin foam in the present embodiment preferably has a thermal conductivity of 0.0200 W/m·K or less both under a 10 °C environment and under a 23 °C environment described below. The thermal conductivity both under the 10 °C environment and under the 23 °C environment is more preferably 0.0195 W/m·K or less, even more preferably 0.0190 W/m·K or less, and most preferably 0.0185 W/m·K or less. Although a phenol resin foam using the cyclopentane sometimes has a high thermal conductivity under a low temperature, the phenol resin foam in the present embodiment, which contains the cyclopentane and the high-boiling hydrocarbon and optionally contains the hydrofluoroolefin having a carbon number of 3 or 4 and the hydrocarbon having a boiling point of from - 50 °C to 5 °C, has a reduced thermal conductivity under the 10 °C environment. The thermal conductivity under the 10 °C environment is preferably 0.0185 W/m·K or less, more preferably 0.0180 W/m·K or less, even more preferably 0.0175 W/m·K or less, and especially preferably 0.0170 W/m·K or less. Furthermore, in the phenol resin foam in the present embodiment, the degree of exacerbation (rise) of a thermal conductivity measured after an acceleration test, which is described later, from an initial thermal conductivity measured before the acceleration test (i.e., thermal conductivity after acceleration test - initial thermal conductivity) is preferably 0.0020 W/m·K or less, more preferably 0.0010 W/m·K or less, even more preferably 0.0005 W/m·K or less, and especially preferably 0.0003 W/m·K or less. The phenol resin foam having a thermal conductivity as described above is preferable because it provides excellent thermal insulation performance both under a normal temperature and under a low temperature and also maintains excellent thermal insulation performance for a long period of time.

Furthermore, when the phenol resin foam in the present embodiment has a low closed cell ratio, deterioration in thermal insulation performance tends to occur. Accordingly, the closed cell ratio is preferably 90 % or more, more preferably 93 % or more, and especially preferably from 96 % to 100 %.

When the average cell diameter of the phenol resin foam in the present embodiment is excessively small, the strength tends to be reduced, and thermal insulation performance tends to be deteriorated over time. When the average cell diameter is excessively large, initial thermal insulation performance tends to be deteriorated. Accordingly, the average cell diameter is preferably from 40 μm to 300 μm, more preferably from 50 μm to 170 μm, and even more preferably from 60 μm to 130 μm.

As described above, the average cell diameter of the phenol resin foam in the present embodiment is preferably from 40 μm to 300 μm. However, large-diameter pores called voids are sometimes present in part of the foam. When a void area ratio of the foam is excessively large, initial thermal insulation performance tends to be deteriorated, and thermal insulation performance tends to be deteriorated over time. Accordingly, the void area ratio is preferably 0.2 % or less and more preferably 0.1 % or less. In the present embodiment, any large-diameter pores with an area of $2mm^2$ or more are defined as the voids. The ratio of an area occupied by the large-diameter pores (voids) with an area of 2 $mm^2$, to a cross sectional surface obtained by cutting the phenol resin foam along substantially the center thereof in the thickness direction in parallel with the front and the back surface, is defined as the void area ratio.

The phenol resin foam in the present embodiment preferably contains at least one of a hardly water-soluble metal hydroxide that discharges water at 150 °C or more and a hardly water-soluble phosphorus-based flame retardant that has a decomposition temperature of 150 °C or more. The sum of the contents of the hardly water-soluble metal hydroxide that discharges water at 150 °C or more and the hardly water-soluble phosphorus-based flame retardant that has a decomposition temperature of 150 °C or more, with respect to the phenol resin foam, is preferably from 0.1 % by mass to 40 % by mass, more preferably from 0.5 % by mass to 20 % by mass, and especially preferably from 1 % by mass to 10 % by mass. When the foam contains the hardly water-soluble metal hydroxide that discharges water at 150 °C or more and/or the hardly water-soluble phosphorus-based flame retardant that has a decomposition temperature of 150 °C or more, initial thermal insulation performance tends to be improved. Besides, with the high-boiling hydrocarbon having a boiling point of from 120 °C to 550 °C used in combination, a decrease in flame retardance of the phenol resin foam is prevented, and flame retardance of the phenol resin foam is even improved. However, when the contents of the metal hydroxide and the phosphorus-based flame retardant are excessively low, the effect of improving initial thermal insulation performance and the effect of improving flame retardance tend not to be sufficiently achieved. When the contents of the metal hydroxide and the phosphorus-based flame retardant are excessively high, initial thermal insulation performance tends to be deteriorated, and thermal insulation performance tends to be deteriorated over time.

Additionally, the phrase that a compound such as the metal hydroxide and the phosphorus-based flame retardant is "hardly water-soluble" in the present embodiment means that, when 100 g of the compound is mixed in 100 g of distilled water at a temperature of 23 °C, the amount of the compound dissolved in water is 15 g or less.

Herein, examples of the hardly water-soluble metal hydroxide that discharges water at 150 °C or more may include aluminium hydroxide, magnesium hydroxide, calcium hydroxide, and kaolin. Any type of the metal hydroxide that is reactive with an acid curing catalyst, which is described later below, is preferably subject to surface coating treatment to reduce or eliminate reactivity with the acid curing catalyst. Among the aforementioned examples, aluminum hydroxide is preferable because it is not reactive with the acid curing catalyst, which is described later below, and favorably provides the effect of improving initial thermal insulation performance and the effect of improving flame retardance.

Additionally, the hardly water-soluble metal hydroxide that discharges water at 150 °C or more has a volume average particle diameter of preferably from 0.5 μm to 500 μm, more preferably from 2 μm to 100 μm, and especially preferably from 5 μm to 50 μm. When the volume average particle diameter is excessively small, the effect of improving initial thermal insulation performance tends to be decreased, and when the volume average particle diameter is excessively large, the effect of improving flame retardance tends to be decreased.

Examples of the hardly water-soluble phosphorus-based flame retardant that has a decomposition temperature of 150 °C or more may include aromatic condensed ester, melamine phosphate, melamine polyphosphate, and ammonium polyphosphate. Among these examples, ammonium polyphosphate is preferable because it favorably provides the effect of improving initial thermal insulation performance and the effect of improving flame retardance.

Additionally, the hardly water-soluble phosphorus-based flame retardant that has a decomposition temperature of 150 °C or more has a volume average particle diameter of preferably from 0.5 μm to 500 μm, more preferably from 2 μm to 100 μm, and especially preferably from 5 μm to 50 μm. When the volume average particle diameter is excessively small, the effect of improving initial thermal insulation performance tends to be decreased, and when the volume average particle diameter is excessively large, the effect of improving flame retardance tends to be decreased.

Additionally, the type(s) and content(s) of the hardly water-soluble metal hydroxide that discharges water at 150 °C or more and/or the hardly water-soluble phosphorus-based flame retardant that has a decomposition temperature of 150 °C or more may be qualified and quantified by conducting general pre-treatment as needed and subsequently using analysis methods, such as the fluorescent X-ray spectroscopy, the X-ray electron spectroscopy, the atom absorption spectrometry, and the Auger electron spectroscopy.

Furthermore, the volume average particle diameter(s) of the metal hydroxide and/or the phosphorus-based flame retardant dispersed in the phenol resin foam may be obtained by cutting the foam, identifying positions in which particles of the metal hydroxide and/or the phosphorus-based flame retardant are present through enlargement using an optical microscope and through identification of substances finely dispersed from the composition using, for example, element analysis, such as the Auger electron spectroscopy, of fine local areas, and measuring the particle diameter of the dispersed particles and calculating the average value. From the occupancy area of the particles and the density of the composition obtained as above, the content percentage(s) of the metal hydroxide and/or the phosphorus-based flame retardant may also be obtained.

Furthermore, when the metal hydroxide and/or the phosphorus-based flame retardant are/is used in the present embodiment, the volume average particle diameter(s) may be obtained with use of a laser diffraction light-scattering particle diameter distribution measuring device.

The phenol resin foam in the present embodiment may also contain an inorganic fine powder other than the above and/or an organic fine powder other than the above. These fine powders are preferably not reactive with the acid curing catalyst, which is described later below.

Herein, when the phenol resin foam contains the inorganic fine powder, such as talc, silicon oxide, glass powder, and titanium oxide, that is not reactive with the acid curing catalyst, initial thermal insulation performance tends to be improved. However, when the content of the inorganic fine powder is excessively high, initial thermal insulation performance tends to be deteriorated, and thermal insulation performance tends to be deteriorated over time. Accordingly, the content of the inorganic fine powder that is not reactive with the acid curing catalyst, with respect to the phenol resin foam, is preferably from 0.1 % by mass to 35 % by mass, more preferably from 1 % by mass to 20 % by mass, and especially preferably from 2 % by mass to 15 % by mass.

Additionally, the inorganic fine powder that is not reactive with the acid curing catalyst has a volume average particle diameter of preferably from 0.5 $\mu$m to 500 $\mu$m, more preferably from 2 $\mu$m to 100 $\mu$m, and especially preferably from 5 $\mu$m to 50 $\mu$m.

On the other hand, when the phenol resin foam contains the inorganic fine powder, such as a metal hydroxide, a metal oxide, a metal carboxylate, and a metal powder, including calcium oxide, calcium carbonate, calcium hydrogencarbonate, and sodium carbonate, that is reactive with the acid curing catalyst, which is described later below, thermal insulation performance tends to be deteriorated over time. Accordingly, the phenol resin foam preferably does not contain the inorganic fine powder that is reactive with the acid curing catalyst.

Similarly, when the phenol resin foam contains the organic fine powder, such as fluororesin fine powder, polypropylene fine powder, and phenol resin foam powder, that is not reactive with the acid curing catalyst, initial thermal insulation performance tends to be improved. However, when the content of the organic fine powder is excessively high, thermal insulation performance tends to be deteriorated over time. Accordingly, the content of the organic fine powder that is not reactive with the acid curing catalyst, with respect to the phenol resin foam, is preferably from 0.1 % by mass to 35 % by mass, more preferably from 0.5 % by mass to 20 % by mass, and especially preferably from 1 % by mass to 10 % by mass.

Additionally, the organic fine powder that is not reactive with the acid curing catalyst has a volume average particle diameter of preferably from 0.5 $\mu$m to 2000 $\mu$m, more preferably from 5 $\mu$m to 500 $\mu$m, and especially preferably from 10 $\mu$m to 200 $\mu$m.

On the other hand, when the phenol resin foam contains the organic fine powder, such as basic ion exchange resin powder, that is reactive with the acid curing catalyst, thermal insulation performance tends to be deteriorated over time. Accordingly, the phenol resin foam preferably does not contain the organic fine powder that is reactive with the acid curing catalyst.

Herein, the composition(s), the average particle diameter(s) and the content(s) of the fine powder(s) dispersed in the phenol resin in the present embodiment may be obtained by a method of cutting the foam, checking positions in which fine powder(s) is/are present through enlargement using an optical microscope, identifying positions in which fine powder(s) is/are present through identification of substances finely dispersed from the composition using, for example, element analysis, such as the Auger electron spectroscopy, of fine local areas, and measuring the particle diameter(s) of the dispersed fine powder(s) and calculating the volume average value(s), or, by a method of calculating the content percentage from the occupancy area of the dispersed fine powder(s) and the density of the composition.

Furthermore, when the fine powder(s) is/are used in the present embodiment, the volume average particle diameter(s) may be obtained with use of a laser diffraction light-scattering particle diameter distribution measuring device.

The phenol resin in the present embodiment may also contain, in addition to the components described above, a plasticizer or the like within the range that does not affect foamability. However, a compound that is reactive with the acid curing catalyst or a compound that changes in quality by the acid curing catalyst is preferably not contained. When the phenol resin foam contains, for example, a partially hydrolyzed condensation product of an organic silicon compound having a hydrolysable group such as a partially hydrolyzed condensation product of organo-methoxysilane, thermal insulation performance tends to be deteriorated over time. Accordingly, the phenol resin foam preferably does not contain the organic silicon compound having a hydrolysable group.

In the phenol resin foam in the present embodiment, the total amount of the content of the compound that is reactive with the acid curing catalyst and the content of the compound that changes in quality by the acid curing catalyst, with respect to the phenol resin foam, is preferably from 0.5 % by mass or less, more preferably 0.1 % by mass or less, and especially preferably 0.01 % by mass or less.

The compound that is reactive with the acid curing catalyst and the compound that changes in quality by the acid curing catalyst do not include a phenol resin, a compound having a phenol skeleton, aldehydes, and a nitrogen-containing compound.

The phenol resin used for preparation of the phenol resin foam in the present embodiment may be synthesized by polymerization of phenols and aldehydes. The starting molar ratio of phenols and aldehydes (phenols : aldehydes) used in the polymerization is preferably within the range from 1 : 1 to 1 : 4.5 and more preferably within the range from 1 : 1.5 to 1 : 2.5.

To the phenol resin, urea, dicyandiamide, melamine, or the like may also be added as additives. When these additives are added in the present embodiment, the phenol resin refers to a phenol resin after the additives are added.

Examples of the phenols preferably used in the synthesis of the phenol resin in the present embodiment may include phenol, resorcinol, catechol, o-cresol, m-cresol, p-cresol, xylenols, ethyl phenols, and p-tert-butylphenol. Binuclear phenols may also be used.

Examples of the aldehydes preferably used in the present embodiment may include formaldehyde, glyoxal, acetaldehyde, chloral, furfural, benzaldehyde, and paraformaldehyde.

The phenol resin has a viscosity at 40 °C of preferably from 200 mPa·s to 100,000 mPa·s and more preferably from 500 mPa·s to 50,000 mPa·s. Furthermore, the content of water in the phenol resin is preferably from 2 % by mass to 20 % by mass.

A method for mixing the inorganic and/or the organic fine powder with the phenol resin when the powder(s) is/are added is not particularly limited, and these may be mixed with use of a mixing machine having a pin mixer or with use of a twin screw extruder or a kneader. The powder(s) may be mixed with the phenol resin at any stage. The powder(s) may be added in raw materials at the time of the synthesis of the phenol resin or may be added before or after the additives are added after the synthesis of the phenol resin. The powder(s) may also be added after adjustment of the viscosity of the phenol resin or may be added together with a surfactant and/or the foaming agent. However, since adding the powder(s) to the phenol resin increases the viscosity of the entire mixture, when the powder(s) is/are added to the phenol resin before the viscosity is adjusted, the viscosity of the phenol resin is preferably adjusted while estimating the viscosity from the content of water and the like. The powder(s) may also be added to the foamable phenol resin composition containing a phenol resin, a surfactant, a foaming agent containing a hydrocarbon, and an acid curing catalyst. It is also possible to mix a required amount of the powder(s) with the phenol resin or to prepare a phenol resin containing the powder(s) in a high concentration as a masterbatch and add a required amount of the masterbatch to the phenol resin.

In consideration of load applied to the device due to an increase in pressure of the foamable phenol resin composition in a liquid passage pipe, the viscosity at 40 °C of the phenol resin containing the powder(s) is preferably from 200 mPa·s to 300,000 mPa·s, more preferably 100,000 mPa·s or less, and even more preferably 50,000 mPa·s or less. Furthermore, the content of water in the phenol resin containing the powder(s) is preferably from 2 % by mass to 20 % by mass.

The phenol resin foam in the present embodiment may be obtained from the foamable phenol resin composition containing the phenol resin, the surfactant, the high-boiling hydrocarbon having a boiling point of from 120 °C to 550 °C, the foaming agent including the cyclopentane and optionally including the hydrofluoroolefin having a carbon number of 3 or 4, and the acid curing catalyst. The surfactant, the high-boiling hydrocarbon having a boiling point of from 120 °C to 550 °C, and the foaming agent may be added to the phenol resin in advance or may be added to the phenol resin simultaneously with the acid curing catalyst.

The surfactant used in the present embodiment may be any surfactant generally used for producing the phenol resin foam. Among all, a nonionic surfactant is effective. Preferable examples of the nonionic surfactant may include alkylene oxide, which is a copolymer of ethylene oxide and propylene oxide, a condensation product of alkylene oxide and castor oil, a condensation product of alkylene oxide and alkylphenol such as nonylphenol and dodecylphenol, polyoxyethylene alkyl ethers, fatty acid esters such as polyoxyethylene fatty acid esters, a silicone-based compound such as ethylene oxide-grafted polydimethylsiloxane, and polyalcohols. One type of the surfactant may be used alone, or two or more types of the surfactant may be used in combination. The amount of the surfactant used is not particularly limited and is preferably within the range from 0.3 parts by mass to 10 parts by mass per 100 parts by mass of the phenol resin.

The acid curing catalyst used in the present embodiment is not particularly limited. However, when an acid curing catalyst containing a lot of water is used, cell walls of the foam might fracture. Accordingly, an anhydrous phosphoric acid and an anhydrous aryl sulfonic acid are preferably used as the acid curing catalyst. Examples of the anhydrous aryl sulfonic acid may include toluenesulfonic acid, xylenesultonic acid, phenolsultonic acid, a substituted phenolsulfonic acid, xylenolsulfonic acid, a substituted xylenolsulfonic acid, dodecylbenzenesultonic acid, benzenesultonic acid, and naphthalenesulfonic acid. These examples of the anhydrous aryl sulfonic acid may be used alone or in combination of two or more of types. Additionally, as an auxiliary curing agent, resorcinol, cresol, saligenin (o-methylol phenol), p-methylol phenol, or the like may be added. The acid curing catalyst may also be diluted with a solvent, such as ethylene glycol and diethylene glycol.

After the acid curing catalyst is added to the phenol resin, the curing catalyst is uniformly dispersed as quickly as possible with use of the pin mixer or the like.

The amount of the aforementioned foaming agent used varies depending on the viscosity, the content of water, and the foaming and the curing temperature of the phenol resin. The foaming agent may be used at a ratio of preferably from 1 part by mass to 25 parts by mass, and more preferably from 3 parts by mass to 15 parts by mass with respect to 100 parts by mass of the phenol resin.

Furthermore, the amount of the aforementioned high-boiling hydrocarbon having a boiling point of from 120 °C to 550 °C varies depending on the amount of the cyclopentane used and the amount of the hydrofluoroolefin having a carbon number of 3 or 4 optionally used. The high-boiling hydrocarbon having a boiling point of from 120 °C to 550 °C may be used at a ratio of preferably from 0.01 parts by mass to 10 parts by mass and more preferably from 0.1 parts by mass to 5 parts by mass, with respect to 100 parts by mass of the phenol resin.

The amount of the acid curing catalyst used also varies depending on the type. In cases where the anhydrous phosphoric acid is used, the ratio of the anhydrous phosphoric acid is preferably from 5 parts by mass to 30 parts by mass and more preferably from 8 parts by mass to 25 parts by mass, with respect to 100 parts by mass of the phenol resin. Or, in cases where a mixture of 60 % by mass of para-toluene sulfonic acid monohydrate and 40 % by mass of diethylene glycol is used, the ratio of the mixture is preferably from 3 parts by mass to 30 parts by mass and more preferably from 5 parts by mass to 20 parts by mass, with respect to 100 parts by mass of the phenol resin.

(Method for Producing Phenol Resin Foam)

The phenol resin foam in the present embodiment may be molded by mixing the aforementioned foamable phenol resin composition with use of the mixing machine, discharging the foamable phenol resin composition from a distribution part, and subsequently foaming and curing the foamable phenol resin composition.

Herein, when the pressure at the distribution part of the mixing machine at the time of discharging the foamable phenol resin composition is excessively low, the voids might be increased, and thermal insulation performance and long-term thermal insulation performance may tend to be deteriorated. On the other hand, when the pressure is excessively high, facility cost is increased due to the need for high-pressure facilities, and the uniformity of the foam may tend to be deteriorated. Accordingly, the pressure at the distribution part of the mixing machine is preferably from 0.3 MPa to 10 MPa and more preferably from 0.5 MPa to 3 MPa. The pressure at the distribution part of the mixing machine may be adjusted by, for example, a method of controlling the temperature of the mixing machine and/or the distribution part, the diameter of the end of the distribution part, and the diameter and the length of a pipe disposed in a distal part from the distribution part.

In the present embodiment, the foamable phenol resin composition charged into the mixing machine preferably contains water. Since water also contributes to foaming, when the content of water is excessively low, an expansion ratio fails to rise, and initial thermal insulation performance might be deteriorated. On the other hand, when the content of water is excessively high, the closed cell ratio is more likely to be decreased, and long-term thermal insulation performance might be deteriorated. Accordingly, it is preferable to control water in the phenol resin charged into the mixing machine. The content of water in the phenol resin charged into the mixing machine is preferably adjusted to range from 2 % by mass to 20 % by mass, more preferably adjusted to range from 2.5 % by mass to 13 % by mass, and especially preferably adjusted to range from 3 % by mass to 10 % by mass.

In the present embodiment, the foamable phenol resin composition discharged from the distribution part of the mixing machine may be pressurized from the upper and the lower direction (an upper and a lower surface direction) to be molded into a plate shape by, for example, a method of using a double conveyor, a method of using metal rolls or steel plates, and a method of combining these methods. Among these methods, the method of using the double conveyor is preferable because the resulting plate-shaped foam has excellent smoothness. When, for example, the double conveyor is used, the plate-shaped phenol resin foam may be obtained by a method of discharging the foamable phenol resin composition from the distribution part of the mixing machine onto a continuously moving lower surface material, thereafter guiding the foamable phenol resin composition to the double conveyor while covering the foamable phenol resin composition with a similarly continuously moving upper surface material, and thereafter pressurizing the foamable phenol resin composition from the upper and the lower direction with heating to foam and to cure the foamable phenol resin composition while adjusting the foamable phenol resin composition to a predetermined thickness, and thus, a plate-shaped phenol resin foam may be obtained. When the temperature in the double conveyor during the foaming and the curing of the foamable phenol resin composition is excessively low, the expansion ratio fails to rise, and initial thermal insulation performance might be deteriorated, whereas when the temperature is excessively high, the closed cell ratio is more likely to be decreased, and long-term thermal insulation performance might be deteriorated. Accordingly, the temperature in the double conveyor is preferably from 60 °C to 100 °C, more preferably from 65 °C to 98 °C, and even more preferably from 70 °C to 95 °C.

In the present embodiment, when a coefficient R calculated from the content P of water (in % by mass) in the foamable phenol resin composition charged into the mixing machine described above and the temperature Q (in °C) in the double conveyor during the foaming and the curing described above by the equation (4) below is excessively large, the content of the hydrocarbon having a carbon number of 6 or less (or, in cases where the hydrofluoroolefin having a carbon number of 3 or 4 is contained, the sum of the content of the hydrocarbon having a carbon number of 6 or less and the content Z of the hydrofluoroolefin having a carbon number of 3 or 4) per $22.4 \times 10^{-3}$ m$^3$ space volume (22.4 L) in the phenol resin foam is decreased, and long-term thermal insulation performance might be deteriorated. On the other hand, when the coefficient R is excessively small, the content of the hydrocarbon having a carbon number of 6 or less (or, in cases where the hydrofluoroolefin having a carbon number of 3 or 4 is contained, the sum of the content of the hydrocarbon having a carbon number of 6 or less and the content Z of the hydrofluoroolefin having a carbon number of 3 or 4) per $22.4 \times 10^{-3}$ m$^3$ space volume (22.4 L) in the phenol resin foam is increased, and initial thermal insulation performance might be deteriorated. Accordingly, the coefficient R is preferably within the range from 20 to 36, more preferably from 21.5 to 33, and especially preferably from 23 to 29.

$$R = P + 0.2286\,Q \ldots (4)$$

The plate-shaped phenol resin foam in the present embodiment may be post-cured, and the post-curing temperature is preferably from 40 °C to 130 °C and more preferably from 60 °C to 110 °C. The post-curing may be conducted in one step or may be conducted in several steps by changing the curing temperature in accordance with the degree of curing.

EXAMPLES

In the following, the present disclosure will be described in more detail with reference to Examples and Comparative Examples. However, the present disclosure is not limited to these Examples and Comparative Examples.
The compositions, the structures, and the properties of phenol resins and phenol resin foams in Examples and Comparative Examples were measured and evaluated as follows.

(1) Foam Density

A phenol resin foam having a size of 20 cm square was used as a sample, and the foam density was obtained by measuring the weight and the apparent volume of the sample from which a surface material and a siding material were removed. The value was measured in accordance with JIS-K-7222.

(2) Average Cell Diameter

The average cell diameter was measured by the following method with reference to the method described in JIS-K-6402.
A cutting surface obtained by cutting substantially the center of a phenol resin foam in the thickness direction in parallel with the upper and the lower surface was photographed at a magnification of 50. On the obtained photograph, four straight lines having a length of 9 cm (which corresponds to 1,800 $\mu$m on the actual cross section of the foam) were drawn, and an average value of the number of cells that each straight line crossed was determined. The average cell diameter is a value obtained by dividing 1,800 $\mu$m by the average value of the number of cells that each straight line crossed.

(3) Closed Cell Ratio

The closed cell ratio was measured by the following method with reference to Method A in ASTM-D-2856-94 (1998).
A cubic test specimen having a size of approximately 25 mm square was cut out from the center part in the thickness direction of the foam. When a test specimen having a uniform thickness of 25 mm cannot be obtained due to thinness of the foam, a test specimen having a uniform thickness is formed by cutting out a cubic test specimen having a width of approximately 25 mm, a length of approximately 25 mm, and a thickness equal to the thickness of the foam and by slicing the upper and the lower surface of the cubic test specimen that include the surface material by approximately 1 mm. The length of each side of the test specimen was measured by a caliper, and an apparent volume (V1: cm$^3$) was measured, and moreover, the weight (W: grams with four significant digits) of the test specimen was measured. Subsequently, a closed space volume (V2: cm$^3$) was measured with use of an air pycnometer (Tokyo Science Co., Ltd., trade name "MODEL1000") in accordance with the method described in Method A in ASTM-D-2856-94. A cell diameter (t: cm) was measured in accordance with the measurement method in "(2) Average Cell Diameter" described on the above, and a surface area (A: cm$^2$) of the test specimen was determined from the length of each side that was measured previously. From t and A, an opening cell volume (VA: cm$^3$) of cut cells in the test specimen surface was calculated by the equation VA = (A × t) / 1.14. The density of the solid phenol resin was determined as 1.3g / mL, and a solid part volume (VS: cm$^3$) constituting the cell walls contained in the test specimen was calculated by the equation VS = Test specimen weight (W) / 1.3.

The closed cell ratio was calculated by the equation (12) below.

$$\text{Closed cell ratio (\%)} = [(V2 - VS) / (V1 - VA - VS)] \times 100 \ldots (12)$$

The measurement was conducted six times for the foam samples made under the same producing conditions, and the average value was defined as a representative value of the samples according to the producing conditions.

As for the phenol resin foam containing a solid matter, such as an inorganic matter, that has a density different from that of the phenol resin, the density of the solid-containing phenol resin was employed as the density of the solid phenol resin. The density of the solid-containing phenol resin was obtained by grinding the phenol resin foam into the state in which a closed space was not included, measuring the weight, and measuring the volume with use of the air pycnometer (Tokyo Science Co., Ltd., trade name "MODEL1000").

(4) Void Area Ratio

A 100 mm × 150 mm range of a cut sectional surface, obtained by cutting substantially the center in the thickness direction of the phenol resin foam sample in parallel with the upper and the lower surface, was magnified to 200 %, and the photograph or the color copy was taken. In the photograph or the copy drawing taken, each of the vertical and the horizontal length is two times the actual length, and the area is four times the actual area. A transparent graph paper was overlapped on the photograph or the drawing. A large cell was selected, and the cross sectional area of the selected cell was measured with use of grids in the graph paper. A pore containing eight or more continuous squares, each having a size of 1 mm × 1 mm, was defined as a void. Observed void areas were integrated to calculate the area ratio. That is to say, since the magnified copy was taken, these eight squares correspond to a 2mm$^2$ area on the actual cross section of the foam. The measurement was conducted 12 times for the foam samples made under the same producing conditions, and the average value was defined as a representative value of the samples according to the producing conditions.

(5) Thermal Conductivity Under 10 °C Environment and Thermal Conductivity Under 23 °C Environment

Thermal conductivity at 10 °C and 23 °C were measured by the following method in accordance with JIS-A-1412-2:1999.

The phenol resin foam sample was cut into approximately 600 mm square. The test specimen was placed in an atmosphere at 23 ± 1 °C and with a humidity of 50 ± 2 %, and a change in weight over time was measured every 24 hours. The conditions were controlled until the change in weight over time reached 0.2 % by mass or less. The test specimen was introduced into a thermal conductivity measuring device placed under the same environment. When the thermal conductivity measuring device was not located in the room, where the test specimen was placed, controlled at 23 ± 1 °C and with a humidity of 50 ± 2 %, the test specimen was quickly put into a polyethylene bag, and the bag was closed. The test specimen was taken out of the bag within one hour and then, quickly subjected to measurement of the thermal conductivity.

For the measurement of the thermal conductivity, the surface material was peeled in a manner such that the foaming part was not damaged. The thermal conductivity under the 10 °C environment was measured with a lower temperature plate of 0 °C and a higher temperature plate of 20 °C, and the thermal conductivity under the 23 °C environment was measured with a lower temperature plate of 13 °C and a higher temperature plate of 33 °C. The measurement was conducted with use of a measuring device (Eko Instruments, trade name "HC-074/600") with a single test specimen and a symmetric structure.

(6) Thermal Conductivity after Acceleration Test

With reference to EN 13166, the thermal conductivity after the following acceleration test was measured, assuming that the test specimen was aged for 25 years.

The phenol resin foam sample was cut into approximately 600 mm square. In cases of a foam having a surface material that permeates gas, the foam with the face material was used as the test specimen to be subjected to the acceleration test, whereas in cases of a foam having a surface material that did not permeate gas, the surface material was peeled in a manner such that the foaming part was not damaged before the form was subjected to the acceleration test as the test specimen in order to evaluate the properties of the foam itself.

The test specimen of 600 mm square was left in an oven with internal air circulation and at a temperature controlled to 110 ± 2 °C for 14 ± 0.05 days to conduct the acceleration test.

Subsequently, the thermal conductivity was measured under the 10 °C environment and under the 23 °C environment in accordance with the measurement method described in "(5) Thermal Conductivity Under 10 °C Environment and Thermal Conductivity Under 23 °C Environment".

(7) Content of Water in Phenol Resin and Phenol Resin Foam

(A) Content of Water in Phenol Resin

To anhydrous methanol (produced by Kanto Chemical Co., Ltd.) whose content of water was measured, the phenol resin was dissolved in the range from 3 % by mass to 7 % by mass. The content of water in the phenol resin was obtained by subtracting the moisture content in anhydrous methanol from the content of water of the solution. For the measurement, a Karl Fischer moisture meter (produced by Kyoto Electronics Manufacturing Co., Ltd., MKC-510) was used.

(B) Content of Water in Phenol Resin Foam

The content of water in the phenol resin foam was measured with use of a Karl Fischer moisture meter having a boat-type moisture vaporization device. With use of the moisture vaporization device, the phenol resin foam was heated to 110 °C, and thus vaporized moisture was measured.

As for the phenol resin foam containing a solid matter, such as hydrates, that is decomposed by high-temperature heating and that generates water, the content of water was measured by conducting low-temperature heating at a decomposition temperature or less and vaporizing the contained water.

(8) Composition Ratio of Material Having Boiling Point of from - 110 °C to 81 °C Contained in Foam

Into a 10 L container (with the product name Tedlar Bag), 10 g of the phenol resin foam sample from which the surface material was peeled and a metal file were placed. Then, the container was sealed and filled with 5 L of nitrogen. The sample was scraped and finely ground with use of the file through the Tedlar Bag. Subsequently, the Tedlar Bag was placed in an oven in which the temperature was regulated to 81 °C, for 10 minutes. Gas generated in the Tedlar Bag was collected in a volume of 100 μL, and the collected gas was measured by GC/MS to analyze the types and the composition ratio of the generated gas components.

Separately, the detection sensitivities of the generated gas components were measured, and the composition ratio was calculated from the detected region area and the detection sensitivity of each gas component obtained from the aforementioned GC/MS. Then, the proportions, in the hydrocarbon having a carbon number of 6 or less, of the cyclopentane and the hydrocarbon having a boiling point of from - 50 °C to 5 °C were obtained.

(9) Content of Hydrocarbon Having Carbon Number of 6 or Less and Content of Hydrofluoroolefin Having Carbon Number of 3 or 4 in Foam

The phenol resin foam sample was cut into approximately 100 mm square to prepare six test specimens, and six bags with zipper (hereinafter, abbreviated as the "zipper bags"), which were sealable and had thermal resistance, were prepared. The weight of each bag was measured with use of a precision balance. The test specimens were placed in an oven with internal air circulation in which the temperature was regulated to 70°C, for 24 ± 0.5 hours to evaporate moisture contained therein. Subsequently, the test specimens were quickly put into corresponding zipper bags. The zipper bags were sealed, and the test specimens were cooled to a room temperature. After cooled to the room temperature, each test specimen was taken out of the corresponding bag, and the surface material of the test specimen was quickly peeled. The weight (W1) of each test specimen was measured with use of the precision balance, and the lengths of sides thereof were measured with use of a capiler to calculate the volume (V) of the test specimen. Subsequently, each test specimen was placed back into the corresponding zipper bag, and the zipper bag was sealed again with an opening part being left open. The sealed zipper bag was inserted between plates of a hydraulic press of the room temperature and gradually compressed to a pressure of approximately 200 N/cm$^2$ to break cells of the test specimen. For three test specimens, a part of each specimen was collected, and the content (WS1) of water contained therein was measured by the measurement method of the content of water in the phenol resin foam described above. Subsequently, the zipper bags with the opening parts that contained the corresponding test specimens were placed in an oven with internal air circulation in which the temperature was regulated to 81 °C, for 30±5 minutes. Immediately after that, gas in each bag was discharged without letting the powder escape from the bag, the bag was sealed, and the test specimen was cooled to the room temperature. After the cooling to the room temperature, for each of the zipper bags containing the corresponding test specimens that were not subjected to the aforementioned measurement of the content (WS1) of water, the weight was measured with use of the precision balance. The weight of the zipper bag was subtracted from the measured weight to determine the weight (W2), from which the volatile components were removed. At the same time, from each of the bags containing the three test specimens whose contents (WS1) of water were measured as described above, a part of the corresponding test specimen was collected, and the content (WS2) of water after the bag was placed in the oven with internal air circulation in which the temperature was regulated to 81 °C, for 30 ± 5 minutes was measured similarly.

A difference (WS1 - WS2) of the content of water was subtracted from a difference (W1 - W2) between W1 and W2, and an air buoyancy weight (WF), which was calculated from a volume (i.e., space volume in the foam) obtained by subtracting from the test specimen volume (V) a resin volume calculated from W2 under the assumption that the solid phenol resin density was 1.3 g/cm$^3$ and from the air density (0.00119 g/mL), was added. Thus, a volatile component weight (W3) was obtained. That is to say, W3 was calculated by the equation (13) below.

$$W3 = (W1 - W2) - (WS1 - WS2) + WF \ldots (13)$$

Then, by multiplying W3 by the proportion in the gas components of the hydrocarbon having a carbon number of 6 or less and the proportion in the gas components of the hydrofluoroolefin having a carbon number of 3 or 4, that is to say, by the proportions measured by the aforementioned measurement method (8), the respective contained weights (W4, W4') were calculated. As for the phenol resin foam containing a solid matter, such as an inorganic matter, that has a density different from that of the phenol resin, the density of the solid-containing phenol resin was employed as the density of the solid phenol resin. The density of the solid-containing phenol resin was obtained by grinding the phenol resin foam into the state in which a closed space was not included, measuring the weight, and measuring the volume with use of the air pycnometer (Tokyo Science Co., Ltd., trade name "MODEL1000").

The content of the hydrocarbon having a carbon number of 6 or less and the content (mol / 22.4 $\times$ 10$^{-3}$m$^3$) of the hydrofluoroolefin having a carbon number of 3 or 4 in the foam were calculated from the aforementioned W4, W4', the amounts measured by the aforementioned measurement method (8) per 22.4 $\times$ 10$^{-3}$ m$^3$ space volume in the foam, and the molecular weights of the substances. Similarly, the content (mol / 22.4 $\times$ 10$^{-3}$m$^3$) of the cyclopentane in the foam was calculated.

(10) Content of High-Boiling Hydrocarbon Having Boiling Point of from 120 °C to 550 °C

(i) Extraction Processing of Ground Product in Chloroform

The phenol resin foam sample was cut and divided into approximately 5 mm square pieces excluding the surface material, and 0.5 g of this phenol resin foam sample and 30 g of chloroform (produced by Wako Junyaku Kogyo, K.K. and used for high performance liquid chromatography) were mixed. While the foam was ground by the following procedure, the processing of extracting, to the chloroform, the high-boiling hydrocarbon in the foam was performed.

A part of the phenol resin foam sample was collected from the center part in the thickness direction of the foam at around a thickness of 10 mm. The extraction processing started within 10 minutes after cutting the form.

In the processing herein, the following operation was performed to make the cut and divided phenol resin foam blended in to the chloroform and to conduct preliminary grinding. That is to say, into a cylindrical-shaped glass container that had an inner volume of approximately 100 ml and that was sealable by a screw cap, 25 glass balls among dedicated accessories BMT-50-G (i.e., a set of a ball mill tube for grinding and glass balls, having a diameter of approximately 6 mm) for ULTRA-TURRAX® (ULTRA-TURRAX is a registered trademark in Japan, other countries, or both) Tube Drive control produced by IKA, 0.5 g of the phenol resin foam sample cut and divided into approximately 5 mm square, and 30 g of chloroform (produced by Wako Junyaku Kogyo, K.K. and used for high performance liquid chromatography) were placed. The cap was closed to seal the cylindrical-shaped glass container. Subsequently, the container was held by the hand so that the cylinder was laid horizontally, and the container was shaken in the longitudinal direction of the container cylinder for 5 ± 0.5 minutes with a shaking width of 20 ± 5 cm and at a shaking speed of 80 ± 20 times / minute. Additionally, back and forth operation of shaking and grinding is counted as one stroke.

Subsequently, the entire contents (i.e., the preliminarily ground foam, the chloroform, and the glass balls) within the aforementioned cylindrical-shaped glass container were transferred to the BMT-50-G sealable ball mill tube for grinding, and the tube for grinding was sealed. The tube for grinding was mounted to the ULTRA-TURRAX® Tube Drive control, and a cycle, including grinding processing at 5700 rpm for 30 seconds and posing the grinding processing for $30 \pm 5$ seconds, was repeated five times. Additionally, immediately after the contents were ejected to empty the cylindrical-shaped glass container, the cap was sealed, and the container was left to stand under an approximately 23 °C atmosphere.

After the grinding was completed, the entire contents (i.e., the ground foam, the chloroform, and the glass balls) within the tube for grinding were transferred to the cylindrical-shaped glass container, which was sealed after use, and left to stand for $5 \pm 0.2$ minutes under an approximately 23 °C atmosphere. The cylindrical-shaped glass container containing the contents was shaken by the hand ten times at a shaking speed of $80 \pm 20$ times / minute. Subsequently, the entire contents within the cylindrical-shaped glass container were filtered with use of a hydrophobic PTFE membrane filter (T050A047A produced by ADVANTEC) having a pore diameter of 0.5 $\mu$m to remove the phenol resin foam and the glass balls. Thus, a filtrate (chloroform extract) was obtained.

The above operation was proceeded quickly so that a total time of contact between the foam and the chloroform in the aforementioned extraction processing was within the range of $16 \pm 1.5$ minutes. As a guide of the ground condition of the foam in the present processing, the grounding may be performed to the extent where a volume average particle diameter of primary particles becomes 30 $\mu$m or less.

A part of the filtrate was dried on a ZnSe crystal plate (produced by Pier Optics Co., Ltd.) for the infrared spectroscopic analysis, and whether impurities other than hydrocarbon components were contained in the chloroform was analyzed by the infrared spectroscopic analysis. Examples of an infrared spectroscopic device and integration times may include an infrared spectroscopic device called Spectrum One (produced by Perkin Elmer) and four integration times.

The filtrate, when confirmed not to contain impurities other than hydrocarbon components that were to adversely affect quantification of the high-boiling hydrocarbon by the infrared spectroscopic analysis, was subjected to the gas chromatograph analysis described later below, without any particular post-treatment. Thus, detection peak areas in different temperature ranges were integrated, with all the peaks detected by a gas chromatograph being identified as the high-boiling hydrocarbon.

Meanwhile, in the extraction processing, the filtrate sometimes includes an oligomer component contained in the phenol resin, and the oligomer component may be detected by the infrared spectroscopic analysis. Still, since retention time of the oligomer greatly differs from that of the high-boiling hydrocarbon, the oligomer is not to affect quantification of the high-boiling hydrocarbon by the gas chromatograph analysis. However, if the infrared spectroscopic analysis reveals a possibility of presence of impurities that are to affect quantification of the high-boiling hydrocarbon by the gas chromatograph in the filtrate, the following pre-processing is performed prior to the aforementioned extraction processing.

(ii) Example of Pre-Processing

The phenol resin foam sample was cut and divided into approximately 5 mm square pieces excluding the surface material, and 0.5 g of this phenol resin foam sample, 10 ml of distilled water (produced by Kanto Chemical Co., Ltd. and used for high-performance liquid chromatography), and 10 ml of methanol (produced by Kanto Chemical Co., Ltd. and used for high-performance liquid chromatography) were mixed. While the foam was ground by the following procedure, hydrophilic components contained in the phenol resin foam were removed. Equipment and the method for collecting the phenol resin foam sample used in the present pre-processing are the same as those used in the extraction processing described in (i) on the above.

Into the ball mill tube for grinding, 25 pieces of BMT-50-G glass balls, 0.5 g of the phenol resin foam sample cut and divided into approximately 5 mm square pieces, 10 ml of distilled water (produced by Kanto Chemical Co., Ltd. and used for high-performance liquid chromatography), and 10 ml of methanol (produced by Kanto Chemical Co., Ltd. and used for high-performance liquid chromatography) were placed, and the tube for grinding was sealed. The tube for grinding was mounted to the ULTRA-TURRAX® Tube Drive control produced by IKA, and grinding processing was performed at 5800 rpm for 10 minutes. Subsequently, the entire contents (i.e., the ground foam, the glass balls, and a mixed solution of distilled water and methanol) were left to stand in the sealed container for $24 \pm 0.5$ hours under an approximately 23 °C atmosphere.

Subsequently, the glass balls were removed from the contents, and centrifugation was performed at 15000 rpm for 30 minutes with use of a centrifugal machine. Then, the solid matter was filtrated with use of a hydrophilic-treated PTFE membrane filter (H050A047A produced by ADVANTEC) having a pore diameter of 0.5 $\mu$m to remove the solid matter. Any residual solid matter in a centrifugation tube in the present processing was washed several times with 20 ml of methanol (produced by Kanto Chemical Co., Ltd. and used for high-performance liquid chromatography) and subjected to filtration.

After the filtration, the entire amount of the solid matter was subjected to the extraction processing described in (i) on the above.

(iii) Separation by Purification

In cases where impurities that are to affect quantification of the high-boiling hydrocarbon having a boiling point of from 120 °C to 550 °C in the gas chromatograph analysis are still present even after the pre-processing described in (ii) on the above, purification is performed according to a purification method, such as the liquid chromatography, by which impurities are removed, before the gas chromatograph analysis. Furthermore, in cases where the amount of the high-boiling hydrocarbon having a boiling point of from 120 °C to 550 °C decreases due to a purification loss or the like, a reference substance (high-boiling hydrocarbon), which has a boiling point that is close to an average boiling point of the high-boiling hydrocarbon having a boiling point of from 120 °C to 550 °C contained in the chloroform (extract), is dissolved in chloroform (produced by Wako Junyaku Kogyo, K.K. and used for high performance liquid chromatography). Then, the similar purification processing is performed, and the purification loss is calculated for correction.

(iv) Method for Peak Qualification of High-Boiling Hydrocarbon and Method for Quantification of High-Boiling Hydrocarbon Having Boiling Point of from 120 °C to 550 °C by Gas Chromatograph Analysis

In the gas chromatograph analysis, as the boiling point of the high-boiling hydrocarbon becomes higher, the retention time becomes longer. Accordingly, the gas chromatograph analysis was performed under measurement conditions that allowed analysis of the high-boiling hydrocarbon having a boiling point of from 120 °C to 550 °C.

The gas chromatograph included, as a column, a thermal-resistant capillary column having a nonpolar liquid phase and, as a detector, a flame ionization detector (FID). As the measurement conditions, an inlet temperature was increased, and a column temperature was increased from low to high for the analysis. Detailed examples of the conditions of the gas chromatograph analysis are as follows.

As the gas chromatograph, 7890A GC produced by Agilent Technologies was used, and as the detector, the flame ionization detector (FID) was used. As the column, the capillary column DB-5HT (fused silica capillary column with a polyimide-coated outer surface), which was produced by Agilent Technologies and had an inner diameter of 0.25 mm, (5% phenyl) methylpolysiloxane as the liquid phase, a film thickness of 0.1 $\mu$m, and a length of 15 m, was used. As a carrier gas, helium was used at a flow rate of 1 ml / minute. The inlet temperature was 400 °C, and as an injection method, the split method (1 : 10) was used, and the injected amount of the filtrate obtained by the extraction processing described in (i) was 1 $\mu$l. The column temperature was regulated to 50 °C, and at the same time as injection, the column temperature was increased to 400 °C at a temperature rising rate of 10 °C / minute. The temperature of the detector (FID) was 400 °C.

The boiling point of a substance detected by the gas chromatograph analysis was obtained from a correlation between boiling points and retention time and from retention time taken for the high-boiling hydrocarbon in the filtrate to be detected. The above correlation between boiling points and retention time was obtained from retention time taken for detection of various types of the high-boiling hydrocarbon having known boiling points by the gas chromatograph, by subjecting the various types of the high-boiling hydrocarbon to the gas chromatograph analysis under the same measurement conditions. As solutions of various types of the high-boiling hydrocarbon having known boiling points in the present method, 1000 ppm chloroform (produced by Wako Junyaku Kogyo, K.K. and used for high performance liquid chromatography) solutions of cycloheptane (having a boiling point of 118.1 °C, Kanto Chemical Co., Ltd., special grade), normal octane (having a boiling point of 125.7 °C, Kanto Chemical Co., Ltd., first grade), normal nonane (having a boiling point of 150.8 °C, Kanto Chemical Co., Ltd., special grade), normal decane (having a boiling point of 174.1 °C, Kanto Chemical Co., Ltd., special grade), normal dodecane (having a boiling point of 216.3 °C, Kanto Chemical Co., Ltd., special grade), normal hexadecane (having a boiling point of 287 °C, Kanto Chemical Co., Ltd., special grade), eicosane (having a boiling point of 344 °C, Tokyo Kasei Kogyo Co., Ltd., a reference material used for GC), pentacosane (having a boiling point of 404 °C, Tokyo Kasei Kogyo Co., Ltd., a reference material used for GC), and triacontane (having a boiling point of 450 °C, Tokyo Kasei Kogyo Co., Ltd., GR grade), and 1000 ppm decahydronaphthalene (cis-, trans-mixture) (Wako Junyaku Kogyo, K.K., first grade) solutions of tetracontane (having a boiling point of 522 °C, Tokyo Kasei Kogyo Co., Ltd., EP grade) and pentacontane (having a boiling point of 575 °C, Tokyo Kasei Kogyo Co., Ltd., GR grade) were used. Retention time for each type of the high-boiling hydrocarbon to be detected by the gas chromatograph was obtained through measurement.

The amounts (% by weight) of the high-boiling hydrocarbon in the filtrate in different temperature ranges was calculated by a calibration curve obtained by analyzing chloroform (produced by Wako Junyaku Kogyo, K.K. and used for high performance liquid chromatography) solutions having different contents of normal hexadecane (having a boiling point of 287 °C, Kanto Chemical Co., Ltd., special grade) by the gas chromatograph under the same conditions as in the analysis of the chloroform (extract) and by plotting the contents of normal hexadecane in the chloroform (solutions) and the corresponding detection peak areas.

Additionally, in cases where the extracted weight of the high-boiling hydrocarbon was small and where the detection peak area was very low, the weight of the high-boiling hydrocarbon extracted from the foam was measured by, for example, increasing the proportion of the foam with respect to chloroform or condensing the chloroform (extract) before analysis, as appropriate.

From the extracted weight of the high-boiling hydrocarbon per weight of the foam and from the density of the foam, the extracted weight (g) of the high-boiling hydrocarbon per $22.4 \times 10^{-3}$ m$^3$ space volume in the foam was calculated.

In the calculation of the extracted weight, the density of the solid phenol resin is normally defined to be 1.3 g/cm$^3$. However, as for the phenol resin foam containing a solid matter, such as an inorganic matter, that had a density different from that of the phenol resin, the density of the solid-containing phenol resin was employed as the density of the solid phenol resin. The density of the solid-containing phenol resin was obtained by grinding the phenol resin foam into the state in which a closed space was not included, measuring the weight, and measuring the volume with use of the air pycnometer (Tokyo Science Co., Ltd., trade name "MODEL1000").

(11) Viscosity of Phenol Resin

The viscosity of the phenol resin was determined as a value measured with use of a rotation viscometer (produced by Toki Sangyo Co., Ltd., R-100 type , rotor part 3° XR-14) after stabilizing the phenol resin for three minutes at 40 °C. To evaluate the viscosity while receiving minimum influence from an increase in viscosity due to curing of the resin, the viscosity of the foamable phenol resin composition at the time of molding the composition into a plate shape was determined as a value measured with use of the viscometer after a lapse of two minutes at 40 °C.

(12) Volume Average Particle Diameter of Powder

The volume average particle diameter of powder was measured with use of the laser diffraction light-scattering particle diameter distribution measuring device (produced by Nikkiso Co., Ltd., Microtrac HRA; 9320-X100) after ultrasonic treatment was applied for one minute to uniformly disperse the powder in water.

In the following, experiments were conducted for systems (Experiment 1) not using the hydrofluoroolefin having a carbon number of 3 or 4 and for systems (Experiment 2) using the hydrofluoroolefin having a carbon number of 3 or 4.

<Experiment 1>

(Example 1-1)

Into a reactor, 3500 kg of a 52 % by mass formaldehyde aqueous solution and 2510 kg of 99 % by mass phenol were charged and stirred with use of a propeller rotating stirrer. The temperature of the liquid within the reactor was regulated to 40 °C with use of a temperature controller. Subsequently, the temperature was raised while a 50 % by mass sodium hydroxide aqueous solution was added to proceed reaction. At the state where an Oswald viscosity reached 60 centistokes (a value measured at 25 °C), the reaction liquid was cooled, and 570 kg of urea (which corresponds to 15 mol % of the amount of formaldehyde charged) was added. Subsequently, the reaction liquid was cooled to 30 °C, and pH of the reaction liquid was neutralized to 6.4 with a 50 % by mass aqueous solution of para-toluenesulfonic acid monohydrate.

The obtained reaction liquid was dehydrated at 60 °C. The amount of water in the dehydrated reaction liquid was measured as 3.5 % by mass.

A block copolymer (produced by BASF, Pluronic F-127) of ethylene oxide-propylene oxide as a surfactant was mixed at a ratio of 2.5 parts by mass with respect to 100 parts by mass of the dehydrated reaction liquid. Thus, Phenol Resin A was obtained.

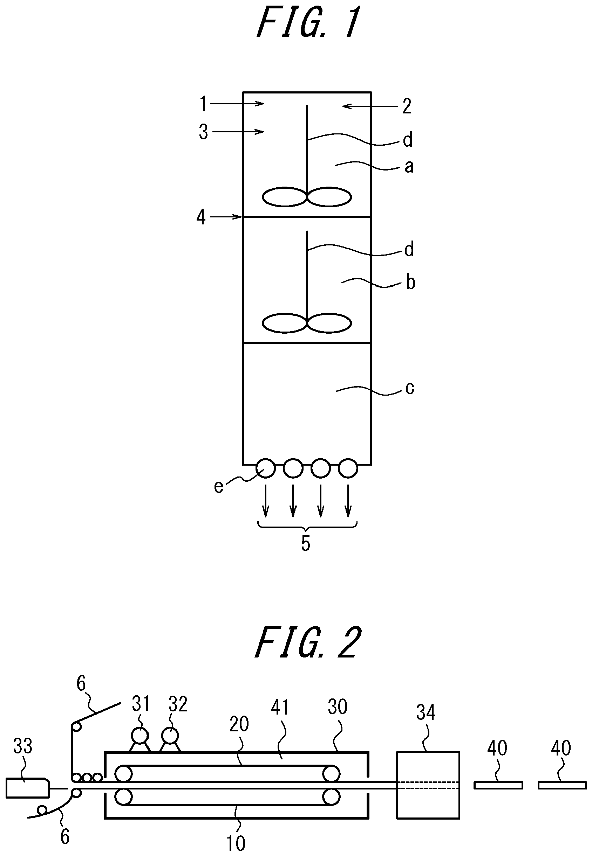

With respect to 100 parts by mass of Phenol Resin A, a foamable phenol resin composition, obtained by mixing 6.0 parts by mass of JIS class 1 diesel oil (hereinafter, abbreviated as the "class 1 diesel oil"), 7.5 parts by mass of cyclopentane as a foaming agent, and 11 parts by mass of a mixture containing 80 % by mass of xylenesultonic acid and 20 % by mass of diethylene glycol as an acid curing catalyst, was fed to a mixing head in which the temperature was regulated to 25 °C and fed to a moving lower surface material through a multiport distribution pipe. FIG. 1 illustrates a mixing machine (mixer) used. The present mixing machine differs from a mixing machine described in JP H10-225993 (A) in that the size is enlarged and that the number of nozzles is increased. That is to say, the present machine includes, in an upper part of a side surface thereof, inlets for a phenol resin 1, in which the surfactant is added to the phenol resin, a high-boiling hydrocarbon 2, and a foaming agent 3. The mixing machine further includes, on a side surface located close to the center of a stirring part where a rotator d stirs, an inlet for a curing catalyst 4. The remaining part located downstream of the stirring part is connected to nozzles e, which are used to discharge the foamable phenol resin composition 5. That is to say, the mixing machine is configured by a mixing part a, which extends to the inlet for the catalyst, a mixing part b, which extends from the inlet for the catalyst to a part at which stirring ends, and a distribution part c, which extends from the part at which stirring ends to the discharge nozzle. The distribution part c includes, at the end thereof, the plurality of nozzles e and is configured to distribute the mixed foamable phenol resin composition uniformly. Furthermore, the distribution part c is provided with a distribution part temperature sensor and a distribution part pressure sensor (which are not illustrated) to measure the temperature and the pressure in the system. Moreover, the mixing parts and the distribution part each include a temperature control jacket that allows temperature regulation. The temperature measured by the distribution part temperature sensor was 43.2 °C, and the pressure measured by the distribution part pressure sensor was 0.65 MPa.

As the surface material, a polyester non-woven cloth (produced by Asahi Kasei Fibers Corporation, "Spunbond E05030" with a basis weight of 30 $g/m^2$ and a thickness of 0.15 mm) was used.

The foamable phenol resin composition fed onto the lower surface material was covered with an upper surface material. Simultaneously, the foamable phenol resin composition was sent to a slat-type double conveyor in a manner such that the foamable phenol resin composition was sandwiched between the upper and the lower surface material and then, cured for a residence time of twenty minutes. FIG. 2 illustrates the slat-type double conveyor used. The conveyor is the same as the slat-type double conveyor described in JP 2000-218635 (A). To measure the temperature of the double conveyor during foaming and curing processes, a conveyor temperature sensor (not illustrated) is mounted at the center of an upper and a lower plate of an upper slat conveyor in a position where the foamable phenol resin composition passes three minutes after being discharged. The temperature measured by the conveyor temperature sensor was 78 °C. In FIG. 2, reference numeral 6 denotes the surface material, reference numeral 10 denotes a lower slat conveyor, reference numeral 20 denotes the upper slat conveyor, reference numeral 30 denotes a heat retaining material, reference numeral 31 denotes an air supply fan, reference numeral 32 denotes an air exhaust fan, reference numeral 33 denotes the mixing machine, reference numeral 34 denotes a cutting device, reference numeral 40 denotes a panel-shaped phenol resin foam, and reference numeral 41 denotes a molding device. The slat-type double conveyor used at this time was configured to discharge moisture generated during the curing to the outside. The foamable phenol resin composition covered with the upper and the lower surface material was molded into a plate shape by applying appropriate pressure from an upper and a lower direction by the slat-type double conveyor via the surface material.

Subsequently, thus obtained foam, which was not cured yet, was heated in an oven at 110 °C for two hours, and thus, a phenol resin foam having a thickness of 47.3 mm was obtained.

(Example 1-2)

A phenol resin foam having a thickness of 47.7 mm was obtained in the same manner as in Example 1-1 except that the amount of the class 1 diesel oil was 3.5 parts by mass and the amount of cyclopentane as the foaming agent was 7.3 parts by mass with respect to 100 parts by mass of the phenol resin and that the temperature of the double conveyor measured by the conveyor temperature sensor was changed to 81 °C. The temperature measured by the distribution part temperature sensor was 42.6 °C, and the pressure measured by the distribution part pressure sensor was 0.65 MPa.

(Example 1-3)

A phenol resin foam having a thickness of 51.2 mm was obtained in the same manner as in Example 1-1 except that the amount of the class 1 diesel oil was 4.0 parts by mass and the amount of cyclopentane as the foaming agent was 7.1 parts by mass with respect to 100 parts by mass of the phenol resin, which was prepared similarly to Example 1-1 except that dehydration conditions of the reaction liquid alone were different and the content of water was 5.7 % by mass, and that the temperature of the double conveyor measured by the conveyor temperature sensor was changed to 83 °C. The temperature measured by the distribution part temperature sensor was 42.7 °C, and the pressure measured by the distribution part pressure sensor was 0.70 MPa.

(Example 1-4)

A phenol resin foam having a thickness of 50.3 mm was obtained in the same manner as in Example 1-3 except that the amount of the class 1 diesel oil was 3.0 parts by mass and the amount of cyclopentane as the foaming agent was 6.0 parts by mass with respect to 100 parts by mass of the phenol resin and that the temperature of the double conveyor measured by the conveyor temperature sensor was changed to 85 °C. The temperature measured by the distribution part temperature sensor was 42.2 °C, and the pressure measured by the distribution part pressure sensor was 0.73 MPa.

(Example 1-5)

A phenol resin foam having a thickness of 49.4 mm was obtained in the same manner as in Example 1-4 except that the amount of the class 1 diesel oil was 3.2 parts by mass and 5.7 parts by mass of a mixture, containing 93 mol% of cyclopentane and 7 mol% of isobutane, was used as the foaming agent with respect to 100 parts by mass of the phenol resin. The temperature measured by the distribution part temperature sensor was 42.0 °C, and the pressure measured by the distribution part pressure sensor was 0.75 MPa.

(Example 1-6)

A phenol resin foam having a thickness of 51.2 mm was obtained in the same manner as in Example 1-4 except that 5.6 parts by mass of a mixture, containing 87 mol% of cyclopentane and 13 mol% of isobutane, was used as the foaming agent with respect to 100 parts by mass of the phenol resin. The temperature measured by the distribution part temperature sensor was 41.5 °C, and the pressure measured by the distribution part pressure sensor was 0.80 MPa.

(Example 1-7)

A phenol resin foam having a thickness of 52.4 mm was obtained in the same manner as in Example 1-1 except that the amount of the class 1 diesel oil was 2.5 parts by mass and 4.1 parts by mass of a mixture, containing 85 mol% of cyclopentane and 15 mol% of isobutane, was used as the foaming agent with respect to 100 parts by mass of the phenol resin, which was prepared similarly to Example 1-1 except that dehydration conditions of the reaction liquid alone were different and the content of water was 11.0 % by mass, and that the temperature of the double conveyor measured by the conveyor temperature sensor was changed to 99 °C. The temperature measured by the distribution part temperature sensor was 40.5 °C, and the pressure measured by the distribution part pressure sensor was 0.75 MPa.

(Example 1-8)

A phenol resin foam having a thickness of 51.1 mm was obtained in the same manner as in Example 1-1 except that the amount of the class 1 diesel oil was 2.5 parts by mass and 4.6 parts by mass of a mixture, containing 85 mol% of cyclopentane and 15 mol% of isobutane, was used as the foaming agent with respect to 100 parts by mass of the phenol resin, which was prepared similarly to Example 1-1 except that dehydration conditions of the reaction liquid alone were different and the content of water was 8.5 % by mass, and that the temperature of the double conveyor measured by the conveyor temperature sensor was changed to 96 °C. The temperature measured by the distribution part temperature sensor was 41.0 °C, and the pressure measured by the distribution part pressure sensor was 0.80 MPa.

(Example 1-9)

A phenol resin foam having a thickness of 49.3 mm was obtained in the same manner as in Example 1-4 except that the amount of the class 1 diesel oil was 2.5 parts by mass and 4.7 parts by mass of a mixture, containing 85 mol% of cyclopentane and 15 mol% of isobutane, was used as the foaming agent with respect to 100 parts by mass of the phenol resin and that the temperature of the double conveyor measured by the conveyor temperature sensor was changed to 90 °C. The temperature measured by the distribution part temperature sensor was 41.5 °C, and the pressure measured by the distribution part pressure sensor was 0.90 MPa.

(Example 1-10)

A phenol resin foam having a thickness of 48.5 mm was obtained in the same manner as in Example 1-1 except that the amount of the class 1 diesel oil was 2.5 parts by mass and 6.4 parts by mass of a mixture, containing 85 mol% of cyclopentane and 15 mol% of isobutane, was used as the foaming agent with respect to 100 parts by mass of the phenol resin and that the temperature of the double conveyor measured by the conveyor temperature sensor was changed to 80 °C. The temperature measured by the distribution part temperature sensor was 40.5 °C, and the pressure measured by the distribution part pressure sensor was 0.85 MPa.

(Example 1-11)

A phenol resin foam having a thickness of 50.3 mm was obtained in the same manner as in Example 1-10 except that 6.9 parts by mass of a mixture, containing 85 mol% of cyclopentane and 15 mol% of isobutane, was used as the foaming agent with respect to 100 parts by mass of the phenol resin, that the temperature of the double conveyor measured by the conveyor temperature sensor was changed to 76 °C, and that the residence time in the slat-type double conveyor was changed to 25 minutes. The temperature measured by the distribution part temperature sensor was 39.5 °C, and the pressure measured by the distribution part pressure sensor was 0.80 MPa.

(Example 1-12)

A phenol resin foam having a thickness of 47.3 mm was obtained in the same manner as in Example 1-11 except that 7.2 parts by mass of a mixture, containing 85 mol% of cyclopentane and 15 mol% of isobutane, was used as the foaming agent with respect to 100 parts by mass of the phenol resin and that the temperature of the double conveyor measured by the conveyor temperature sensor was changed to 73 °C. The temperature measured by the distribution part temperature sensor was 39.5 °C, and the pressure measured by the distribution part pressure sensor was 0.80 MPa.

(Example 1-13)

A phenol resin foam having a thickness of 48.7 mm was obtained in the same manner as in Example 1-4 except that the amount of the class 1 diesel oil was 7.0 parts by mass and 5.6 parts by mass of a mixture, containing 80 mol% of cyclopentane and 20 mol% of isobutane, was used as the foaming agent with respect to 100 parts by mass of the phenol resin. The temperature measured by the distribution part temperature sensor was 42.1 °C, and the pressure measured by the distribution part pressure sensor was 0.80 MPa.

(Example 1-14)

A phenol resin foam having a thickness of 49.3 mm was obtained in the same manner as in Example 1-13 except that the amount of the class 1 diesel oil was changed to 6.0 parts by mass with respect to 100 parts by mass of the phenol resin. The temperature measured by the distribution part temperature sensor was 42.0 °C, and the pressure measured by the distribution part pressure sensor was 0.80 MPa.

(Example 1-15)

A phenol resin foam having a thickness of 50.3 mm was obtained in the same manner as in Example 1-13 except that the amount of the class 1 diesel oil was changed to 4.0 parts by mass with respect to 100 parts by mass of the phenol resin. The temperature measured by the distribution part temperature sensor was 41.6 °C, and the pressure measured by the distribution part pressure sensor was 0.85 MPa.

(Example 1-16)

A phenol resin foam having a thickness of 51.2 mm was obtained in the same manner as in Example 1-13 except that the amount of the class 1 diesel oil was changed to 1.3 parts by mass with respect to 100 parts by mass of the phenol resin. The temperature measured by the distribution part temperature sensor was 41.0 °C, and the pressure measured by the distribution part pressure sensor was 0.85 MPa.

(Example 1-17)

A phenol resin foam having a thickness of 51.3 mm was obtained in the same manner as in Example 1-13 except that the amount of the class 1 diesel oil was changed to 0.7 parts by mass with respect to 100 parts by mass of the phenol resin. The temperature measured by the distribution part temperature sensor was 40.8 °C, and the pressure measured by the distribution part pressure sensor was 0.85 MPa.

(Example 1-18)

A phenol resin foam having a thickness of 51.0 mm was obtained in the same manner as in Example 1-13 except that the amount of the class 1 diesel oil was changed to 0.5 parts by mass with respect to 100 parts by mass of the phenol resin. The temperature measured by the distribution part temperature sensor was 40.5 °C, and the pressure measured by the distribution part pressure sensor was 0.85 MPa.

(Example 1-19)

A phenol resin foam having a thickness of 51.2 mm was obtained in the same manner as in Example 1-13 except that 2.0 parts by mass of normal octane (having a boiling point of 126 °C and a melting point of - 60 °C), instead of the class 1 diesel oil, was used with respect to 100 parts by mass of the phenol resin. The temperature measured by the distribution part temperature sensor was 40.7 °C, and the pressure measured by the distribution part pressure sensor was 0.85 MPa.

(Example 1-20)

A phenol resin foam having a thickness of 51.0 mm was obtained in the same manner as in Example 1-13 except that 2.0 parts by mass of normal nonane (having a boiling point of 151 °C and a melting point of - 51 °C), instead of the class 1 diesel oil, was used with respect to 100 parts by mass of the phenol resin. The temperature measured by the distribution part temperature sensor was 40.6 °C, and the pressure measured by the distribution part pressure sensor was 0.85 MPa.

(Examples 1-21)

A phenol resin foam having a thickness of 49.3 mm was obtained in the same manner as in Example 1-13 except that 2.0 parts by mass of normal decane (having a boiling point of 172 °C and a melting point of - 30 °C), instead of the class 1 diesel oil, was used with respect to 100 parts by mass of the phenol resin. The temperature measured by the distribution part temperature sensor was 40.5 °C, and the pressure measured by the distribution part pressure sensor was 0.85 MPa.

(Example 1-22)

A phenol resin foam having a thickness of 51.2 mm was obtained in the same manner as in Example 1-13 except that 2.0 parts by mass of normal dodecane (having a boiling point of 216 °C and a melting point of - 10 °C), instead of the class 1 diesel oil, was used with respect to 100 parts by mass of the phenol resin. The temperature measured by the distribution part temperature sensor was 40.4 °C, and the pressure measured by the distribution part pressure sensor was 0.85 MPa.

(Example 1-23)

A phenol resin foam having a thickness of 51.0 mm was obtained in the same manner as in Example 1-13 except that 2.0 parts by mass of JIS class 1 kerosene oil, instead of the class 1 diesel oil, was used with respect to 100 parts by mass of the phenol resin. The temperature measured by the distribution part temperature sensor was 40.8 °C, and the pressure measured by the distribution part pressure sensor was 0.85 MPa.

(Example 1-24)

A phenol resin foam having a thickness of 50.3 mm was obtained in the same manner as in Example 1-13 except that the amount of the class 1 diesel oil was changed to 2.0 parts by mass with respect to 100 parts by mass of the phenol resin. The temperature measured by the distribution part temperature sensor was 41.0 °C, and the pressure measured by the distribution part pressure sensor was 0.85 MPa.

(Example 1-25)

A phenol resin foam having a thickness of 48.7 mm was obtained in the same manner as in Example 1-13 except that the amount of the class 1 diesel oil was changed to 2.0 parts by mass with respect to 105 parts by mass of aluminum hydroxide-containing phenol resin, in which 5 parts by mass of aluminum hydroxide (produced by Almorix Ltd., B325 with a volume average particle diameter of 27 $\mu$m) was mixed to 100 parts by mass of the phenol resin with use of an extruder. The temperature measured by the distribution part temperature sensor was 40.6 °C, and the pressure measured by the distribution part pressure sensor was 0.85 MPa.

(Example 1-26)

A phenol resin foam having a thickness of 51.2 mm was obtained in the same manner as in Example 1-25 except that aluminum hydroxide was replaced by ammonium polyphosphate (produced by Budenheim, FR CROS484 with a volume average particle diameter of 18 $\mu$m). The temperature measured by the distribution part temperature sensor was 40.5 °C, and the pressure measured by the distribution part pressure sensor was 0.85 MPa.

(Example 1-27)

A phenol resin foam having a thickness of 48.7 mm was obtained in the same manner as in Example 1-13 except that 2.0 parts by mass of liquid paraffinic oil (produced by Cosmo Oil Lubricants Co., Ltd., Cosmo Neutral 150) having an initial boiling temperature of 310 °C and a 95 % distillation temperature of 513 °C, instead of the class 1 diesel oil, was used with respect to 100 parts by mass of the phenol resin. The temperature measured by the distribution part temperature sensor was 40.9 °C, and the pressure measured by the distribution part pressure sensor was 0.85 MPa.

(Example 1-28)

A phenol resin foam having a thickness of 49.3 mm was obtained in the same manner as in Example 1-13 except that 2.0 parts by mass of liquid paraffinic oil (produced by Cosmo Oil Lubricants Co., Ltd., Cosmo Neutral 700) having an initial boiling temperature of 335 °C and a 95 % distillation temperature of 579 °C, instead of the class 1 diesel oil, was used with respect to 100 parts by mass of the phenol resin. The temperature measured by the distribution part temperature sensor was 40.5 °C, and the pressure measured by the distribution part pressure sensor was 0.85 MPa.

(Example 1-29)

A phenol resin foam having a thickness of 47.5 mm was obtained in the same manner as in Example 1-13 except that 3.0 parts by mass of normal tetradecane (produced by JX Nippon Oil & Energy Corporation, TS Paraffin TS 4 with a melting point of 5.3 °C and a boiling point of from 245 °C to 248 °C), instead of the class 1 diesel oil, was used with respect to 100 parts by mass of the phenol resin. The temperature measured by the distribution part temperature sensor was 41.3 °C, and the pressure measured by the distribution part pressure sensor was 0.85 MPa.

(Example 1-30)

A phenol resin foam having a thickness of 48.7 mm was obtained in the same manner as in Example 1-13 except that 3.0 parts by mass of normal hexadecane (produced by JX Nippon Oil & Energy Corporation, TS Paraffin TS 6 with a melting point of 17 °C and a boiling point of from 276 °C to 308 °C), instead of the class 1 diesel oil, was used with respect to 100 parts by mass of the phenol resin. The temperature measured by the distribution part temperature sensor was 41.3 °C, and the pressure measured by the distribution part pressure sensor was 0.83 MPa.

(Example 1-31)

A phenol resin foam having a thickness of 49.3 mm was obtained in the same manner as in Example 1-13 except that 3.0 parts by mass of normal octadecane (produced by JX Nippon Oil & Energy Corporation, TS Paraffin TS 8 with a melting point of 26 °C and a boiling point of from 300 °C to 332 °C), instead of the class 1 diesel oil, was used with respect to 100 parts by mass of the phenol resin. The temperature measured by the distribution part temperature sensor was 41.3 °C, and the pressure measured by the distribution part pressure sensor was 0.85 MPa.

(Example 1-32)

A phenol resin foam having a thickness of 50.6 mm was obtained in the same manner as in Example 1-4 except that the amount of the class 1 diesel oil was 3.0 parts by mass and 5.6 parts by mass of a mixture, containing 78 mol% of cyclopentane and 22 mol% of isobutane, was used as the foaming agent with respect to 100 parts by mass of the phenol resin. The temperature measured by the distribution part temperature sensor was 41.0 °C, and the pressure measured by the distribution part pressure sensor was 0.85 MPa.

(Example 1-33)

A phenol resin foam having a thickness of 51.2 mm was obtained in the same manner as in Example 1-32 except that 5.4 parts by mass of a mixture, containing 72 mol% of cyclopentane and 28 mol% of isobutane, was used as the foaming agent with respect to 100 parts by mass of the phenol resin. The temperature measured by the distribution part temperature sensor was 41.0 °C, and the pressure measured by the distribution part pressure sensor was 0.90 MPa.

(Example 1-34)

A phenol resin foam having a thickness of 49.8 mm was obtained in the same manner as in Example 1-32 except that 5.4 parts by mass of a mixture, containing 62 mol% of cyclopentane and 38 mol% of isobutane, was used as the foaming agent with respect to 100 parts by mass of the phenol resin. The temperature measured by the distribution part temperature sensor was 40.5 °C, and the pressure measured by the distribution part pressure sensor was 1.0 MPa.

(Example 1-35)

A phenol resin foam having a thickness of 47.6 mm was obtained in the same manner as in Example 1-1 except that the amount of the class 1 diesel oil was 4.0 parts by mass and the amount of cyclopentane as the foaming agent was 7.5 parts by mass with respect to 100 parts by mass of the phenol resin and that the temperature of the double conveyor measured by the conveyor temperature sensor was changed to 78 °C. The temperature measured by the distribution part temperature sensor was 42.9 °C, and the pressure measured by the distribution part pressure sensor was 0.65 MPa.

(Example 1-36)

A phenol resin foam having a thickness of 49.8 mm was obtained in the same manner as in Example 1-1 except that the amount of the class 1 diesel oil was 1.3 parts by mass and the amount of cyclopentane as the foaming agent was 7.5 parts by mass with respect to 100 parts by mass of the phenol resin and that the temperature of the double conveyor measured by the conveyor temperature sensor was changed to 78 °C. The temperature measured by the distribution part temperature sensor was 43.2 °C, and the pressure measured by the distribution part pressure sensor was 0.67 MPa.

(Example 1-37)

A phenol resin foam having a thickness of 50.9 mm was obtained in the same manner as in Example 1-1 except that the amount of the class 1 diesel oil was 5.7 parts by mass and 4.1 parts by mass of a mixture, containing 72 mol% of cyclopentane and 28 mol% of propane, was used as the foaming agent with respect to 100 parts by mass of the phenol resin, which was prepared similarly to Example 1-1 except that dehydration conditions of the reaction liquid alone were different and the content of water was 5.7 % by mass, and that the temperature of the double conveyor measured by the conveyor temperature sensor was changed to 90 °C. The temperature measured by the distribution part temperature sensor was 41.3 °C, and the pressure measured by the distribution part pressure sensor was 0.93 MPa.

(Example 1-38)

A phenol resin foam having a thickness of 51.4 mm was obtained in the same manner as in Example 1-1 except that the amount of the class 1 diesel oil was 0.5 parts by mass and 4.1 parts by mass of a mixture, containing 72 mol% of cyclopentane and 28 mol% of propane, was used as the foaming agent with respect to 100 parts by mass of the phenol resin, which was prepared similarly to Example 1-1 except that dehydration conditions of the reaction liquid alone were different and the content of water was 5.7 % by mass, and that the temperature of the double conveyor measured by the conveyor temperature sensor was changed to 90 °C. The temperature measured by the distribution part temperature sensor was 40.9 °C, and the pressure measured by the distribution part pressure sensor was 0.98 MPa.

(Comparative Example 1-1)

A phenol resin foam having a thickness of 51.3 mm was obtained in the same manner as in Example 1-4 except that the amount of the class 1 diesel oil was changed to 0 parts by mass (i.e., that the class 1 diesel oil was not added). The temperature measured by the distribution part temperature sensor was 41.5 °C, and the pressure measured by the distribution part pressure sensor was 0.8 MPa.

(Comparative Example 1-2)

A phenol resin foam having a thickness of 50.8 mm was obtained in the same manner as in Example 1-4 except that 6.0 parts by mass of normal pentane was used (i.e., that cyclopentane was not used) as the foaming agent with respect to 100 parts by mass of the phenol resin. The temperature measured by the distribution part temperature sensor was 41.5 °C, and the pressure measured by the distribution part pressure sensor was 0.83 MPa.

(Comparative Example 1-3)

A phenol resin foam having a thickness of 50.8 mm was obtained in the same manner as in Example 1-4 except that 3.0 parts by mass of liquid paraffinic oil (produced by Cosmo Oil Lubricants Co., Ltd., Cosmo Neutral 700) having an initial boiling temperature of 335 °C and a 95 % distillation temperature of 579 °C, instead of the class 1 diesel oil, was used and 6.0 parts by mass of isopentane was used as the foaming agent (i.e., that cyclopentane was not used) with respect to 100 parts by mass of the phenol resin. The temperature measured by the distribution part temperature sensor was 41.0 °C, and the pressure measured by the distribution part pressure sensor was 0.86 MPa.

(Comparative Example 1-4)

A phenol resin foam having a thickness of 49.3 mm was obtained in the same manner as in Example 1-4 except that the amount of the class 1 diesel oil was 0.5 parts by mass and 6.0 parts by mass of a mixture, containing 85 mol% of cyclopentane and 15 mol% of isobutane, was used as the foaming agent with respect to 100 parts by mass of the phenol resin. The temperature measured by the distribution part temperature sensor was 42.0 °C, and the pressure measured by the distribution part pressure sensor was 0.91 MPa.

(Comparative Example 1-5)

A phenol resin foam having a thickness of 49.8 mm was obtained in the same manner as in Example 1-4 except that the amount of the class 1 diesel oil was 10 parts by mass and 6.0 parts by mass of a mixture, containing 85 mol% of cyclopentane and 15 mol% of isobutane, was used as the foaming agent with respect to 100 parts by mass of the phenol resin. The temperature measured by the distribution part temperature sensor was 40.5 °C, and the pressure measured by the distribution part pressure sensor was 0.74 MPa.

(Comparative Example 1-6)

A phenol resin foam having a thickness of 51.5 mm was obtained in the same manner as in Example 1-1 except that the amount of the class 1 diesel oil was 2.0 parts by mass and 3.1 parts by mass of a mixture, containing 85 mol% of cyclopentane and 15 mol% of isobutane, was used as the foaming agent with respect to 100 parts by mass of the phenol resin, which was prepared similarly to Example 1-1 except that dehydration conditions of the reaction liquid alone were different and the content of water was 15.0 % by mass, and that the temperature of the double conveyor measured by the conveyor temperature sensor was changed to 101 °C. The temperature measured by the distribution part temperature sensor was 39.5 °C, and the pressure measured by the distribution part pressure sensor was 0.75 MPa.

(Comparative Example 1-7)

A phenol resin foam having a thickness of 47.8 mm was obtained in the same manner as in Example 1-1 except that the amount of the class 1 diesel oil was 2.0 parts by mass and 10.5 parts by mass of a mixture, containing 85 mol% of cyclopentane and 15 mol% of isobutane, was used as the foaming agent with respect to 100 parts by mass of the phenol resin, that the temperature of the double conveyor measured by the conveyor temperature sensor was changed to 68 °C, and that the residence time in the slat-type double conveyor was changed to 35 minutes. The temperature measured by the distribution part temperature sensor was 41.0 °C, and the pressure measured by the distribution part pressure sensor was 0.95 MPa.

(Comparative Example 1-8)

A phenol resin foam having a thickness of 50.7 mm was obtained in the same manner as in Example 1-4 except that 5.4 parts by mass of a mixture, containing 40 mol% of cyclopentane and 60 mol% of isobutane, was used as the foaming agent with respect to 100 parts by mass of the phenol resin. The temperature measured by the distribution part temperature sensor was 40.5 °C, and the pressure measured by the distribution part pressure sensor was 0.90 MPa.

(Comparative Example 1-9)

A phenol resin foam having a thickness of 47.3mm was obtained in the same manner as in Example 1-1 except that the amount of the class 1 diesel oil was 7.0 parts by mass and the amount of cyclopentane as the foaming agent was 7.5 parts by mass with respect to 100 parts by mass of the phenol resin and that the temperature of the double conveyor measured by the conveyor temperature sensor was changed to 78 °C. The temperature measured by the distribution part temperature sensor was 43.2 °C, and the pressure measured by the distribution part pressure sensor was 0.64 MPa.

(Comparative Example 1-10)

A phenol resin foam having a thickness of 47.8 mm was obtained in the same manner as in Example 1-1 except that the amount of the class 1 diesel oil was 0.5 parts by mass and the amount of cyclopentane as the foaming agent was 7.5 parts by mass with respect to 100 parts by mass of the phenol resin and that the temperature of the double conveyor measured by the conveyor temperature sensor was changed to 78 °C. The temperature measured by the distribution part temperature sensor was 43.4 °C, and the pressure measured by the distribution part pressure sensor was 0.68 MPa.

(Comparative Example 1-11)

A phenol resin foam having a thickness of 51.1 mm was obtained in the same manner as in Example 1-1 except that the amount of the class 1 diesel oil was 9.0 parts by mass and 4.1 parts by mass of a mixture, containing 72 mol% of cyclopentane and 28 mol% of propane, was used as the foaming agent with respect to 100 parts by mass of the phenol resin, which was prepared similarly to Example 1-1 except that dehydration conditions of the reaction liquid alone were different and the content of water was 5.7 % by mass, and that the temperature of the double conveyor measured by the conveyor temperature sensor was changed to 90 °C. The temperature measured by the distribution part temperature sensor was 41.4 °C, and the pressure measured by the distribution part pressure sensor was 0.95 MPa.

(Comparative Example 1-12)

A phenol resin foam having a thickness of 51.8 mm was obtained in the same manner as in Example 1-1 except that the amount of the class 1 diesel oil was 0.2 parts by mass and 4.1 parts by mass of a mixture, containing 72 mol% of cyclopentane and 28 mol% of propane, was used as the foaming agent with respect to 100 parts by mass of the phenol resin, which was prepared similarly to Example 1-1 except that dehydration conditions of the reaction liquid alone were different and the content of water was 5.7 % by mass, and that the temperature of the double conveyor measured by the conveyor temperature sensor was changed to 90 °C. The temperature measured by the distribution part temperature sensor was 40.7 °C, and the pressure measured by the distribution part pressure sensor was 1.01 MPa.

Tables 1 and 2 show, for each of Examples and Comparative Examples, the content of water in the phenol resin charged into the mixing machine, the content of the cyclopentane and the content of the hydrocarbon having a carbon number of 6 or less per $22.4 \times 10^{-3}$ m$^3$ space volume in the obtained phenol resin foam, the proportions of the cyclopentane and the hydrocarbon having a boiling point of from - 50 °C to 5 °C in the hydrocarbon having a carbon number or 6 or less, and the average boiling point of the hydrocarbon having a carbon number or 6 or less. Furthermore, for each of Examples and Comparative Examples, Tables 3 and 4 show the amount of the high-boiling hydrocarbon extracted in chloroform per $22.4 \times 10^{-3}$ m$^3$ space volume in the obtained phenol resin foam, and Tables 5 and 6 show results of evaluation of the properties and the thermal conductivity of the obtained phenol resin foam.

[Table 1]

| | Foaming agent | Content (% by mass) of water in phenol resin | Temperature (°C) of double conveyor | Coefficient R | Pressure (MPa) at distribution part | Content (mol / 22.4 × 10⁻³ m³) of cyclopentane | Content (mol / 22.4 × 10⁻³ m³) of hydrocarbon having carbon number of 6 or less | Proportion (mol %) of cyclopentane | Proportion (mol %) of hydrocarbon having boiling point of from - 50 °C to 5 °C | Average boiling point (°C) of hydrocarbon having carbon number of 6 or less |
|---|---|---|---|---|---|---|---|---|---|---|
| Example 1-1 | Cyclopentane | 3.5 | 78 | 21.3 | 0.65 | 0.835 | 0.835 | 100 | 0 | 49.3 |
| Example 1-2 | Cyclopentane | 3.5 | 81 | 22.0 | 0.65 | 0.740 | 0.740 | 100 | 0 | 49.3 |
| Example 1-3 | Cyclopentane | 5.7 | 83 | 24.7 | 0.70 | 0.685 | 0.685 | 100 | 0 | 49.3 |
| Example 1-4 | Cyclopentane | 5.7 | 85 | 25.1 | 0.73 | 0.612 | 0.612 | 100 | 0 | 49.3 |
| Example 1-5 | Cyclopentane / isobutane | 5.7 | 85 | 25.1 | 0.75 | 0.562 | 0.603 | 93.2 | 6.8 | 45.2 |
| Example 1-6 | Cyclopentane / isobutane | 5.7 | 85 | 25.1 | 0.80 | 0.529 | 0.607 | 87.1 | 12.9 | 41.4 |
| Example 1-7 | Cyclopentane / isobutane | 11.0 | 99 | 33.6 | 0.75 | 0.270 | 0.317 | 85.2 | 14.8 | 40.3 |
| Example 1-8 | Cyclopentane / isobutane | 8.5 | 96 | 30.4 | 0.80 | 0.325 | 0.379 | 85.8 | 14.2 | 40.6 |
| Example 1-9 | Cyclopentane / isobutane | 5.7 | 90 | 26.3 | 0.90 | 0.365 | 0.427 | 85.5 | 14.5 | 40.4 |
| Example 1-10 | Cyclopentane / isobutane | 3.5 | 80 | 21.8 | 0.85 | 0.685 | 0.806 | 85.0 | 15.0 | 40.1 |
| Example 1-11 | Cyclopentane / isobutane | 3.5 | 76 | 20.9 | 0.80 | 0.732 | 0.860 | 85.1 | 14.9 | 40.2 |
| Example 1-12 | Cyclopentane / isobutane | 3.5 | 73 | 20.2 | 0.80 | 0.840 | 0.987 | 85.1 | 14.9 | 40.2 |

EP 3 159 375 A1

(continued)

| | Foaming agent | Content (% by mass) of water in phenol resin | Temperature (°C) of double conveyor | Coefficient R | Pressure (MPa) at distribution part | Content (mol / 22.4 × 10⁻³ m³) of cyclopentane | Content (mol / 22.4 × 10⁻³ m³) of hydrocarbon having carbon number of 6 or less | Proportion (mol %) of cyclopentane | Proportion (mol %) of hydrocarbon having boiling point of from -50 °C to 5 °C | Average boiling point (°C) of hydrocarbon having carbon number of 6 or less |
|---|---|---|---|---|---|---|---|---|---|---|
| Example 1-13 | Cyclopentane / isobutane | 5.7 | 85 | 25.1 | 0.80 | 0.496 | 0.618 | 80.3 | 19.7 | 37.3 |
| Example 1-14 | Cyclopentane / isobutane | 5.7 | 85 | 25.1 | 0.80 | 0.493 | 0.615 | 80.2 | 19.8 | 37.2 |
| Example 1-15 | Cyclopentane / isobutane | 5.7 | 85 | 25.1 | 0.85 | 0.493 | 0.616 | 80.0 | 20.0 | 37.1 |
| Example 1-16 | Cyclopentane / isobutane | 5.7 | 85 | 25.1 | 0.85 | 0.486 | 0.607 | 80.1 | 19.9 | 37.1 |
| Example 1-17 | Cyclopentane / isobutane | 5.7 | 85 | 25.1 | 0.85 | 0.487 | 0.608 | 80.1 | 19.9 | 37.2 |
| Example 1-18 | Cyclopentane / isobutane | 5.7 | 85 | 25.1 | 0.85 | 0.485 | 0.605 | 80.2 | 19.8 | 37.2 |
| Example 1-19 | Cyclopentane / isobutane | 5.7 | 85 | 25.1 | 0.85 | 0.487 | 0.608 | 80.1 | 19.9 | 37.2 |
| Example 1-20 | Cyclopentane / isobutane | 5.7 | 85 | 25.1 | 0.85 | 0.486 | 0.607 | 80.1 | 19.9 | 37.1 |
| Example 1-21 | Cyclopentane / isobutane | 5.7 | 85 | 25.1 | 0.85 | 0.497 | 0.620 | 80.2 | 19.8 | 37.2 |
| Example 1-22 | Cyclopentane / isobutane | 5.7 | 85 | 25.1 | 0.85 | 0.494 | 0.617 | 80.1 | 19.9 | 37.1 |
| Example 1-23 | Cyclopentane / isobutane | 5.7 | 85 | 25.1 | 0.85 | 0.505 | 0.630 | 80.2 | 19.8 | 37.2 |
| Example 1-24 | Cyclopentane / isobutane | 5.7 | 85 | 25.1 | 0.85 | 0.497 | 0.619 | 80.3 | 19.7 | 37.3 |

(continued)

| | Foaming agent | Content (% by mass) of water in phenol resin | Temperature (°C) of double conveyor | Coefficient R | Pressure (MPa) at distribution part | Content (mol / 22.4 × 10⁻³ m³) of cyclopentane | Content (mol / 22.4 × 10⁻³ m³) of hydrocarbon having carbon number of 6 or less | Proportion (mol %) of cyclopentane | Proportion (mol %) of hydrocarbon having boiling point of from - 50 °C to 5 °C | Average boiling point (°C) of hydrocarbon having carbon number of 6 or less |
|---|---|---|---|---|---|---|---|---|---|---|
| Example 1-25 | Cyclopentane / isobutane | 5.7 | 85 | 25.1 | 0.85 | 0.509 | 0.635 | 80.2 | 19.8 | 37.2 |

[Table 2]

| | Foaming agent | Content(% by mass) of water in phenol resin | Temperature (°C) of double conveyor | Coefficient R | Pressure (MPa) at distribution part | Content (mol / 22.4 × 10⁻³ m³) of cyclopentane | Content (mol / 22.4 × 10⁻³ m³) of hydrocarbon having carbon number of 6 or less | Proportion (mol %) of cyclopentane | Proportion (mol %) of hydrocarbon having boiling point of from -50 °C to 5 °C | Average boiling point (°C) of hydrocarbon having carbon number of 6 or less |
|---|---|---|---|---|---|---|---|---|---|---|
| Example 1-26 | Cyclopentane / isobutane | 5.7 | 85 | 25.1 | 0.85 | 0.507 | 0.633 | 80.1 | 19.9 | 37.2 |
| Example 1-27 | Cyclopentane / isobutane | 5.7 | 85 | 25.1 | 0.85 | 0.511 | 0.638 | 80.1 | 19.9 | 37.2 |
| Example 1-28 | Cyclopentane / isobutane | 5.7 | 85 | 25.1 | 0.85 | 0.518 | 0.645 | 80.3 | 19.7 | 37.3 |
| Example 1-29 | Cyclopentane / isobutane | 5.7 | 85 | 25.1 | 0.85 | 0.487 | 0.608 | 80.1 | 19.9 | 37.2 |
| Example 1-30 | Cyclopentane / isobutane | 5.7 | 85 | 25.1 | 0.83 | 0.481 | 0.601 | 80.0 | 20.0 | 37.1 |
| Example 1-31 | Cyclopentane / isobutane | 5.7 | 85 | 25.1 | 0.85 | 0.476 | 0.594 | 80.1 | 19.9 | 37.2 |
| Example 1-32 | Cyclopentane / isobutane | 5.7 | 85 | 25.1 | 0.85 | 0.469 | 0.600 | 78.2 | 21.8 | 36.0 |
| Example 1-33 | Cyclopentane / isobutane | 5.7 | 85 | 25.1 | 0.90 | 0.443 | 0.617 | 71.8 | 28.2 | 32.1 |
| Example 1-34 | Cyclopentane / isobutane | 5.7 | 85 | 25.1 | 1.00 | 0.381 | 0.608 | 62.7 | 37.3 | 26.5 |
| Example 1-35 | Cyclopentane | 3.5 | 78 | 21.3 | 0.65 | 0.833 | 0.833 | 100.0 | 0 | 49.3 |
| Example 1-36 | Cyclopentane | 3.5 | 78 | 21.3 | 0.67 | 0.813 | 0.813 | 100.0 | 0 | 49.3 |
| Example 1-37 | Cyclopentane / propane | 5.7 | 90 | 26.3 | 0.93 | 0.334 | 0.458 | 72.9 | 27.1 | 24.3 |
| Example 1-38 | Cyclopentane / propane | 5.7 | 90 | 26.3 | 0.98 | 0.312 | 0.429 | 72.7 | 27.3 | 24.2 |

| | Foaming agent | Content(% by mass) of water in phenol resin | Temperature (°C) of double conveyor | Coefficient R | Pressure (MPa) at distribution part | Content (mol / 22.4 × 10$^{-3}$ m$^3$) of cyclopentane | Content (mol / 22.4 × 10$^{-3}$ m$^3$) of hydrocarbon having carbon number of 6 or less | Proportion (mol %) of cyclopentane | Proportion (mol %) of hydrocarbon having boiling point of from -50 °C to 5 °C | Average boiling point (°C) of hydrocarbon having carbon number of 6 or less |
|---|---|---|---|---|---|---|---|---|---|---|
| Comparative Example 1-1 | Cyclopentane | 5.7 | 85 | 25.1 | 0.80 | 0.598 | 0.598 | 100 | 0 | 49.3 |
| Comparative Example 1-2 | Normal pentane | 5.7 | 85 | 25.1 | 0.83 | 0 | 0.581 | 0 | 0 | 36.1 |
| Comparative Example 1-3 | Isopentane | 5.7 | 85 | 25.1 | 0.86 | 0 | 0.583 | 0 | 0 | 27.7 |
| Comparative Example 1-4 | Cyclopentane / isobutane | 5.7 | 85 | 25.1 | 0.91 | 0.532 | 0.624 | 85.3 | 14.7 | 40.3 |
| Comparative Example 1-5 | Cyclopentane / isobutane | 5.7 | 85 | 25.1 | 0.74 | 0.542 | 0.633 | 85.7 | 14.3 | 40.6 |
| Comparative Example 1-6 | Cyclopentane / isobutane | 15.0 | 101 | 38.1 | 0.75 | 0.203 | 0.236 | 86.0 | 14.0 | 40.8 |
| Comparative Example 1-7 | Cyclopentane / isobutane | 3.5 | 68 | 19.0 | 0.95 | 1.090 | 1.281 | 85.1 | 14.9 | 40.2 |
| Comparative Example 1-8 | Cyclopentane / isobutane | 5.7 | 85 | 25.1 | 0.90 | 0.248 | 0.617 | 40.2 | 59.8 | 12.8 |
| Comparative Example 1-9 | Cyclopentane | 3.5 | 78 | 21.3 | 0.64 | 0.823 | 0.823 | 100.0 | 0 | 49.3 |
| Comparative Example 1-10 | Cyclopentane | 3.5 | 78 | 21.3 | 0.68 | 0.812 | 0.812 | 100.0 | 0 | 49.3 |
| Comparative Example 1-11 | Cyclopentane / propane | 5.7 | 90 | 26.3 | 0.95 | 0.325 | 0.446 | 72.9 | 27.1 | 24.3 |
| Comparative Example 1-12 | Cyclopentane / propane | 5.7 | 90 | 26.3 | 1.01 | 0.310 | 0.426 | 72.8 | 27.2 | 24.2 |

EP 3 159 375 A1

[Table 3]

| | High-boiling hydrocarbon used | Amount (g / 22.4 × 10⁻³ m³) of high-boiling hydrocarbon extracted from foam to chloroform | | | | | | Coefficient a | Coefficient a' | Coefficient a" | Coefficient b | Coefficient b' | Coefficient b" |
|---|---|---|---|---|---|---|---|---|---|---|---|---|---|
| | | High-boiling hydrocarbon having boiling point of from 120 to 140 °C | High-boiling hydrocarbon having boiling point of from 140 to 160 °C | High-boiling hydrocarbon having boiling point of from 160 to 350 °C | High-boiling hydrocarbon having boiling point of from 350 to 450 °C | High-boiling hydrocarbon having boiling point of from 450 to 550 °C | High-boiling hydrocarbon having boiling point of from 120 to 550 °C | | | | | | |
| Example 1-1 | JIS class 1 diesel oil | 0.0 | 0.1 | 18.9 | 1.9 | 0.0 | 20.9 | 21.88 | 18.47 | 15.08 | 1.77 | 2.68 | 3.59 |
| Example 1-2 | JIS class 1 diesel oil | 0.0 | 0.0 | 10.8 | 1.1 | 0.0 | 11.9 | 22.98 | 19.36 | 15.74 | 1.52 | 2.33 | 3.13 |
| Example 1-3 | JIS class 1 diesel oil | 0.0 | 0.0 | 11.7 | 1.2 | 0.0 | 12.9 | 23.62 | 19.87 | 16.12 | 1.37 | 2.13 | 2.87 |
| Example 1-4 | JIS class 1 diesel oil | 0.0 | 0.0 | 8.8 | 0.9 | 0.0 | 9.7 | 24.46 | 20.54 | 16.63 | 1.17 | 1.85 | 2.52 |
| Example 1-5 | JIS class 1 diesel oil | 0.0 | 0.0 | 9.4 | 1.0 | 0.0 | 10.4 | 25.05 | 21.01 | 16.98 | 1.04 | 1.67 | 2.28 |
| Example 1-6 | JIS class 1 diesel oil | 0.0 | 0.0 | 8.4 | 0.9 | 0.0 | 9.3 | 25.43 | 21.32 | 17.21 | 0.95 | 1.54 | 2.12 |
| Example 1-7 | JIS class 1 diesel oil | 0.0 | 0.0 | 6.1 | 0.6 | 0.0 | 6.7 | 28.44 | 23.72 | 19.01 | 0.26 | 0.58 | 0.88 |
| Example 1-8 | JIS class 1 diesel oil | 0.0 | 0.0 | 6.2 | 0.6 | 0.0 | 6.8 | 27.80 | 23.21 | 18.63 | 0.41 | 0.78 | 1.15 |
| Example 1-9 | JIS class 1 diesel oil | 0.0 | 0.0 | 6.6 | 0.7 | 0.0 | 7.3 | 27.33 | 22.84 | 18.35 | 0.51 | 0.93 | 1.34 |
| Example 1-10 | JIS class 1 diesel oil | 0.0 | 0.0 | 8.7 | 0.9 | 0.0 | 9.6 | 23.62 | 19.87 | 16.12 | 1.37 | 2.13 | 2.87 |
| Example 1-11 | JIS class 1 diesel oil | 0.0 | 0.0 | 7.6 | 0.8 | 0.0 | 8.4 | 23.07 | 19.43 | 15.80 | 1.49 | 2.30 | 3.10 |
| Example 1-12 | JIS class 1 diesel oil | 0.0 | 0.0 | 9.2 | 0.9 | 0.0 | 10.1 | 21.82 | 18.43 | 15.04 | 1.78 | 2.70 | 3.61 |

| | High-boiling hydrocarbon used | Amount (g / 22.4 × 10⁻³ m³) of high-boiling hydrocarbon extracted from foam to chloroform | | | | | | Coefficient a | Coefficient a' | Coefficient a" | Coefficient b | Coefficient b' | Coefficient b" |
|---|---|---|---|---|---|---|---|---|---|---|---|---|---|
| | | High-boiling hydrocarbon having boiling point of from 120 to 140 °C | High-boiling hydrocarbon having boiling point of from 140 to 160 °C | High-boiling hydrocarbon having boiling point of from 160 to 350 °C | High-boiling hydrocarbon having boiling point of from 350 to 450 °C | High-boiling hydrocarbon having boiling point of from 450 to 550 °C | High-boiling hydrocarbon having boiling point of from 120 to 550 °C | | | | | | |
| Example 1-13 | JIS class 1 diesel oil | 0.0 | 0.1 | 22.0 | 2.2 | 0.0 | 24.3 | 25.81 | 21.62 | 17.44 | 0.86 | 1.42 | 1.97 |
| Example 1-14 | JIS class 1 diesel oil | 0.0 | 0.1 | 17.0 | 1.8 | 0.0 | 18.9 | 25.85 | 21.65 | 17.46 | 0.86 | 1.41 | 1.95 |
| Example 1-15 | JIS class 1 diesel oil | 0.0 | 0.0 | 11.3 | 1.2 | 0.0 | 12.5 | 25.85 | 21.65 | 17.46 | 0.86 | 1.41 | 1.95 |
| Example 1-16 | JIS class 1 diesel oil | 0.0 | 0.0 | 2.8 | 0.3 | 0.0 | 3.1 | 25.93 | 21.72 | 17.51 | 0.84 | 1.38 | 1.92 |
| Example 1-17 | JIS class 1 diesel oil | 0.0 | 0.0 | 1.3 | 0.2 | 0.0 | 1.5 | 25.92 | 21.71 | 17.50 | 0.84 | 1.39 | 1.92 |
| Example 1-18 | JIS class 1 diesel oil | 0.0 | 0.0 | 0.8 | 0.1 | 0.0 | 0.9 | 25.94 | 21.72 | 17.51 | 0.83 | 1.38 | 1.91 |
| Example 1-19 | Normal octane | 6.4 | 0.0 | 0.0 | 0.0 | 0.0 | 6.4 | 25.91 | 21.70 | 17.50 | 0.84 | 1.39 | 1.92 |
| Example 1-20 | Normal nonane | 0.0 | 6.3 | 0.0 | 0.0 | 0.0 | 6.3 | 25.93 | 21.72 | 17.51 | 0.84 | 1.38 | 1.92 |
| Example 1-21 | Normal decane | 0.0 | 0.0 | 6.7 | 0.0 | 0.0 | 6.7 | 25.80 | 21.61 | 17.43 | 0.87 | 1.42 | 1.97 |
| Example 1-22 | Normal dodecane | 0.0 | 0.0 | 6.8 | 0.0 | 0.0 | 6.8 | 25.83 | 21.64 | 17.45 | 0.86 | 1.41 | 1.96 |
| Example 1-23 | JIS class 1 kerosene oil | 0.0 | 0.6 | 6.3 | 0.0 | 0.0 | 6.9 | 25.71 | 21.54 | 17.38 | 0.89 | 1.45 | 2.01 |
| Example 1-24 | JIS class 1 diesel oil | 0.0 | 0.0 | 6.1 | 0.6 | 0.0 | 6.7 | 25.80 | 21.61 | 17.43 | 0.87 | 1.42 | 1.97 |

| | High-boiling hydrocarbon used | Amount (g / 22.4 × $10^{-3}$ m³) of high-boiling hydrocarbon extracted from foam to chloroform | | | | | | Coefficient a | Coefficient a' | Coefficient a" | Coefficient b | Coefficient b' | Coefficient b" |
|---|---|---|---|---|---|---|---|---|---|---|---|---|---|
| | | High-boiling hydrocarbon having boiling point of from 120 to 140 °C | High-boiling hydrocarbon having boiling point of from 140 to 160 °C | High-boiling hydrocarbon having boiling point of from 160 to 350 °C | High-boiling hydrocarbon having boiling point of from 350 to 450 °C | High-boiling hydrocarbon having boiling point of from 450 to 550 °C | High-boiling hydrocarbon having boiling point of from 120 to 550 °C | | | | | | |
| Example 1-25 | JIS class 1 diesel oil | 0.0 | 0.0 | 6.3 | 0.6 | 0.0 | 6.9 | 25.66 | 21.50 | 17.35 | 0.90 | 1.47 | 2.03 |

[Table 4]

| | High-boiling hydrocarbon used | Amount (g / 22.4 × 10⁻³ m³) of high-boiling hydrocarbon extracted from foam to chloroform | | | | | | Coeffi-cient a | Coeffi-cient a' | Coeffi-cient a" | Coeffi-cient b | Coeffi-cient b' | Coeffi-cient b" |
| | | High-boiling hydrocar-bon having boiling point of from 120 to 140 °C | High-boiling hydrocarbon having boiling point of from 140 to 160 °C | High-boiling hydrocarbon having boiling point of from 160 to 350 °C | High-boiling hydrocarbon having boiling point of from 350 to 450 °C | High-boiling hydrocarbon having boiling point of from 450 to 550 °C | High-boiling hydrocarbon having boiling point of from 120 to 550 °C | | | | | | |
|---|---|---|---|---|---|---|---|---|---|---|---|---|---|
| Example 1-26 | JIS class 1 diesel oil | 0.0 | 0.0 | 6.4 | 0.7 | 0.0 | 7.1 | 25.68 | 21.52 | 17.36 | 0.89 | 1.46 | 2.02 |
| Example 1-27 | Paraffinic oil | 0.0 | 0.0 | 0.5 | 4.9 | 1.7 | 7.1 | 25.64 | 21.48 | 17.33 | 0.90 | 1.48 | 2.04 |
| Example 1-28 | Paraffinic oil | 0.0 | 0.0 | 0.1 | 1.3 | 5.9 | 7.3 | 25.56 | 21.42 | 17.28 | 0.92 | 1.50 | 2.07 |
| Example 1-29 | Normal tetradecane with melting point of 5.3 °C | 0.0 | 0.0 | 9.7 | 0.0 | 0.0 | 9.7 | 25.92 | 21.71 | 17.50 | 0.84 | 1.39 | 1.92 |
| Example 1-30 | Normal hexadecane with melting point of 17 °C | 0.0 | 0.0 | 9.8 | 0.0 | 0.0 | 9.8 | 25.99 | 21.76 | 17.54 | 0.82 | 1.36 | 1.89 |
| Example 1-31 | Normal octadecane with melting point of 26 °C | 0.0 | 0.0 | 9.8 | 0.0 | 0.0 | 9.8 | 26.04 | 21.81 | 17.58 | 0.81 | 1.35 | 1.87 |
| Example 1-32 | JIS class 1 diesel oil | 0.0 | 0.0 | 8.4 | 0.9 | 0.0 | 9.3 | 26.12 | 21.87 | 17.63 | 0.79 | 1.32 | 1.84 |
| Example 1-33 | JIS class 1 diesel oil | 0.0 | 0.0 | 9.2 | 0.9 | 0.0 | 10.1 | 26.43 | 22.11 | 17.81 | 0.72 | 1.22 | 1.71 |

| | High-boiling hydrocarbon used | Amount (g / 22.4 × 10⁻³ m³) of high-boiling hydrocarbon extracted from foam to chloroform | | | | | | Coefficient a | Coefficient a' | Coefficient a" | Coefficient b | Coefficient b' | Coefficient b" |
|---|---|---|---|---|---|---|---|---|---|---|---|---|---|
| | | High-boiling hydrocarbon having boiling point of from 120 to 140 °C | High-boiling hydrocarbon having boiling point of from 140 to 160 °C | High-boiling hydrocarbon having boiling point of from 160 to 350 °C | High-boiling hydrocarbon having boiling point of from 350 to 450 °C | High-boiling hydrocarbon having boiling point of from 450 to 550 °C | High-boiling hydrocarbon having boiling point of from 120 to 550 °C | | | | | | |
| Example 1-34 | JIS class 1 diesel oil | 0.0 | 0.0 | 8.4 | 0.8 | 0.0 | 9.2 | 27.15 | 22.69 | 18.24 | 0.56 | 0.99 | 1.41 |
| Example 1-35 | JIS class 1 diesel oil | 0.0 | 0.0 | 13.0 | 1.3 | 0.0 | 14.3 | 21.90 | 18.49 | 15.09 | 1.76 | 2.68 | 3.58 |
| Example 1-36 | JIS class 1 diesel oil | 0.0 | 0.0 | 3.4 | 0.3 | 0.0 | 3.7 | 22.13 | 18.68 | 15.23 | 1.71 | 2.60 | 3.48 |
| Example 1-37 | JIS class 1 diesel oil | 0.0 | 0.1 | 16.0 | 1.6 | 0.0 | 17.7 | 27.69 | 23.13 | 18.57 | 0.43 | 0.82 | 1.19 |
| Example 1-38 | JIS class 1 diesel oil | 0.0 | 0.0 | 1.1 | 0.1 | 0.0 | 1.2 | 27.95 | 23.33 | 18.72 | 0.37 | 0.73 | 1.08 |
| Comparative Example 1-1 | - | 0.0 | 0.0 | 0.0 | 0.0 | 0.0 | 0.0 | 24.63 | 20.67 | 16.73 | 1.14 | 1.80 | 2.45 |
| Comparative Example 1-2 | JIS class 1 diesel oil | 0.0 | 0.0 | 8.3 | 0.8 | 0.0 | 9.1 | 24.82 | 20.83 | 16.85 | 1.09 | 1.74 | 2.37 |
| Comparative Example 1-3 | Paraffinic oil | 0.0 | 0.0 | 0.3 | 1.6 | 7.4 | 9.3 | 24.80 | 20.81 | 16.83 | 1.10 | 1.74 | 2.38 |
| Comparative Example 1-4 | JIS class 1 diesel oil | 0.0 | 0.0 | 0.4 | 0.1 | 0.0 | 0.5 | 25.39 | 21.29 | 17.19 | 0.96 | 1.55 | 2.14 |

EP 3 159 375 A1

38

| | High-boiling hydrocarbon used | Amount (g / 22.4 × 10⁻³ m³) of high-boiling hydrocarbon extracted from foam to chloroform | | | | | | Coefficient a | Coefficient a' | Coefficient a" | Coefficient b | Coefficient b' | Coefficient b" |
|---|---|---|---|---|---|---|---|---|---|---|---|---|---|
| | | High-boiling hydrocarbon having boiling point of from 120 to 140 °C | High-boiling hydrocarbon having boiling point of from 140 to 160 °C | High-boiling hydrocarbon having boiling point of from 160 to 350 °C | High-boiling hydrocarbon having boiling point of from 350 to 450 °C | High-boiling hydrocarbon having boiling point of from 450 to 550 °C | High-boiling hydrocarbon having boiling point of from 120 to 550 °C | | | | | | |
| Comparative Example 1-5 | JIS class 1 diesel oil | 0.0 | 0.2 | 33.5 | 3.3 | 0.0 | 37.0 | 25.28 | 21.19 | 17.12 | 0.99 | 1.59 | 2.19 |
| Comparative Example 1-6 | JIS class 1 diesel oil | 0.0 | 0.0 | 4.8 | 0.5 | 0.0 | 5.3 | 29.21 | 24.34 | 19.48 | 0.08 | 0.33 | 0.56 |
| Comparative Example 1-7 | JIS class 1 diesel oil | 0.0 | 0.0 | 5.9 | 0.6 | 0.0 | 6.5 | 18.92 | 16.10 | 13.30 | 2.45 | 3.64 | 4.81 |
| Comparative Example 1-8 | JIS class 1 diesel oil | 0.0 | 0.0 | 8.7 | 0.9 | 0.0 | 9.6 | 28.69 | 23.93 | 19.16 | 0.20 | 0.50 | 0.78 |
| Comparative Example 1-9 | JIS class 1 diesel oil | 0.0 | 0.1 | 21.3 | 2.1 | 0.0 | 23.5 | 22.01 | 18.58 | 15.16 | 1.74 | 2.64 | 3.53 |
| Comparative Example 1-10 | JIS class 1 diesel oil | 0.0 | 0.0 | 1.4 | 0.1 | 0.0 | 1.5 | 22.14 | 18.69 | 15.24 | 1.71 | 2.60 | 3.48 |
| Comparative Example 1-11 | JIS class 1 diesel oil | 0.0 | 0.1 | 26.4 | 2.6 | 0.0 | 29.1 | 27.80 | 23.21 | 18.63 | 0.41 | 0.78 | 1.15 |
| Comparative Example 1-12 | JIS class 1 diesel oil | 0.0 | 0.0 | 0.3 | 0.0 | 0.0 | 0.3 | 27.97 | 23.35 | 18.73 | 0.37 | 0.73 | 1.07 |

[Table 5]

| | Foam density (kg/m³) | Closed cell ratio (%) | Average cell diameter (μm) | Void area ratio (%) | Initial thermal conductivity (W/m·K) | | Thermal conductivity (W/m·K) after acceleration test | | Difference in thermal conductivity (W/m·K) before and after acceleration test | |
|---|---|---|---|---|---|---|---|---|---|---|
| | | | | | 10 °C | 23 °C | 10 °C | 23 °C | 10 °C | 23 °C |
| Example 1-1 | 32.2 | 91.7 | 190 | 0.13 | 0.0174 | 0.0186 | 0.0191 | 0.0203 | 0.0017 | 0.0017 |
| Example 1-2 | 30.0 | 94.3 | 170 | 0.09 | 0.0178 | 0.0189 | 0.0185 | 0.0196 | 0.0007 | 0.0007 |
| Example 1-3 | 27.9 | 92.8 | 170 | 0.08 | 0.0173 | 0.0184 | 0.0184 | 0.0195 | 0.0011 | 0.0011 |
| Example 1-4 | 30.1 | 96.3 | 160 | 0.07 | 0.0168 | 0.0183 | 0.0174 | 0.0189 | 0.0006 | 0.0006 |
| Example 1-5 | 31.0 | 97.2 | 145 | 0.06 | 0.0168 | 0.0183 | 0.0173 | 0.0188 | 0.0005 | 0.0005 |
| Example 1-6 | 31.5 | 98.4 | 125 | 0.04 | 0.0168 | 0.0182 | 0.0170 | 0.0185 | 0.0002 | 0.0003 |
| Example 1-7 | 24.1 | 92.3 | 145 | 0.16 | 0.0171 | 0.0186 | 0.0183 | 0.0198 | 0.0012 | 0.0012 |
| Example 1-8 | 25.1 | 93.8 | 137 | 0.12 | 0.0169 | 0.0184 | 0.0177 | 0.0192 | 0.0008 | 0.0008 |
| Example 1-9 | 26.9 | 96.3 | 131 | 0.08 | 0.0169 | 0.0183 | 0.0173 | 0.0187 | 0.0004 | 0.0004 |
| Example 1-10 | 36.0 | 98.4 | 123 | 0.05 | 0.0173 | 0.0185 | 0.0176 | 0.0188 | 0.0003 | 0.0003 |
| Example 1-11 | 34.9 | 98.2 | 125 | 0.05 | 0.0184 | 0.0193 | 0.0187 | 0.0195 | 0.0003 | 0.0002 |
| Example 1-12 | 38.1 | 99.3 | 123 | 0.06 | 0.0192 | 0.0195 | 0.0195 | 0.0198 | 0.0003 | 0.0003 |
| Example 1-13 | 31.5 | 92.7 | 135 | 0.13 | 0.0173 | 0.0188 | 0.0188 | 0.0203 | 0.0015 | 0.0015 |

| | Foam density (kg/m³) | Closed cell ratio (%) | Average cell diameter (μm) | Void area ratio (%) | Initial thermal conductivity (W/m·K) | | Thermal conductivity (W/m·K) after acceleration test | | Difference in thermal conductivity (W/m·K) before and after acceleration test | |
|---|---|---|---|---|---|---|---|---|---|---|
| | | | | | 10 °C | 23 °C | 10 °C | 23 °C | 10 °C | 23 °C |
| Example 1-14 | 31.2 | 94.7 | 128 | 0.09 | 0.0168 | 0.0183 | 0.0181 | 0.0196 | 0.0013 | 0.0013 |
| Example 1-15 | 31.0 | 98.3 | 123 | 0.04 | 0.0168 | 0.0183 | 0.0171 | 0.0185 | 0.0003 | 0.0002 |
| Example 1-16 | 30.5 | 98.0 | 126 | 0.05 | 0.0168 | 0.0182 | 0.0171 | 0.0184 | 0.0003 | 0.0002 |
| Example 1-17 | 30.5 | 99.2 | 121 | 0.05 | 0.0180 | 0.0191 | 0.0183 | 0.0194 | 0.0003 | 0.0003 |
| Example 1-18 | 30.6 | 98.4 | 118 | 0.04 | 0.0186 | 0.0196 | 0.0189 | 0.0199 | 0.0003 | 0.0003 |
| Example 1-19 | 30.4 | 96.2 | 121 | 0.04 | 0.0191 | 0.0195 | 0.0195 | 0.0199 | 0.0004 | 0.0004 |
| Example 1-20 | 30.5 | 96.4 | 123 | 0.06 | 0.0187 | 0.0191 | 0.0191 | 0.0195 | 0.0004 | 0.0004 |
| Example 1-21 | 31.2 | 98.3 | 125 | 0.05 | 0.0168 | 0.0182 | 0.0171 | 0.0185 | 0.0003 | 0.0003 |
| Example 1-22 | 31.0 | 98.5 | 127 | 0.04 | 0.0168 | 0.0181 | 0.0171 | 0.0184 | 0.0003 | 0.0003 |
| Example 1-23 | 31.3 | 98.4 | 126 | 0.04 | 0.0168 | 0.0183 | 0.0171 | 0.0185 | 0.0003 | 0.0002 |
| Example 1-24 | 31.0 | 98.0 | 128 | 0.05 | 0.0168 | 0.0182 | 0.0171 | 0.0184 | 0.0003 | 0.0002 |
| Example 1-25 | 33.2 | 99.2 | 98 | 0.04 | 0.0164 | 0.0179 | 0.0167 | 0.0181 | 0.0003 | 0.0002 |

[Table 6]

| | Foam density (kg/m³) | Closed cell ratio (%) | Average cell diameter (μm) | Void area ratio (%) | Initial thermal conductivity (W/m·K) | | Thermal conductivity (W/m·K) after acceleration test | | Difference in thermal conductivity (W/m·K) before and after acceleration test | |
|---|---|---|---|---|---|---|---|---|---|---|
| | | | | | 10 °C | 23 °C | 10 °C | 23 °C | 10 °C | 23 °C |
| Example 1-26 | 33.3 | 99.1 | 105 | 0.04 | 0.0164 | 0.0179 | 0.0167 | 0.0182 | 0.0003 | 0.0003 |
| Example 1-27 | 31.8 | 96.3 | 131 | 0.06 | 0.0183 | 0.0191 | 0.0187 | 0.0195 | 0.0004 | 0.0004 |
| Example 1-28 | 32.1 | 96.0 | 133 | 0.08 | 0.0189 | 0.0195 | 0.0193 | 0.0198 | 0.0004 | 0.0003 |
| Example 1-29 | 31.0 | 98.2 | 127 | 0.06 | 0.0172 | 0.0183 | 0.0175 | 0.0186 | 0.0003 | 0.0003 |
| Example 1-30 | 32.9 | 96.3 | 125 | 0.06 | 0.0178 | 0.0186 | 0.0183 | 0.0190 | 0.0005 | 0.0004 |
| Example 1-31 | 31.1 | 94.1 | 126 | 0.07 | 0.0182 | 0.0187 | 0.0190 | 0.0195 | 0.0008 | 0.0008 |
| Example 1-32 | 30.9 | 99.3 | 125 | 0.04 | 0.0169 | 0.0183 | 0.0172 | 0.0185 | 0.0003 | 0.0002 |
| Example 1-33 | 32.1 | 98.2 | 125 | 0.04 | 0.0173 | 0.0187 | 0.0175 | 0.0190 | 0.0002 | 0.0003 |
| Example 1-34 | 28.9 | 98.1 | 122 | 0.04 | 0.0178 | 0.0193 | 0.0184 | 0.0199 | 0.0006 | 0.0006 |
| Example 1-35 | 32.2 | 95.7 | 185 | 0.09 | 0.0175 | 0.0185 | 0.0182 | 0.0193 | 0.0007 | 0.0008 |
| Example 1-36 | 31.3 | 98.3 | 173 | 0.06 | 0.0181 | 0.0188 | 0.0184 | 0.0191 | 0.0003 | 0.0003 |
| Example 1-37 | 29.8 | 97.3 | 136 | 0.08 | 0.0173 | 0.0188 | 0.0181 | 0.0196 | 0.0008 | 0.0008 |
| Example 1-38 | 29.4 | 98.7 | 127 | 0.06 | 0.0177 | 0.0189 | 0.0183 | 0.0196 | 0.0006 | 0.0007 |
| Comparative Example 1-1 | 29.5 | 99.1 | 145 | 0.08 | 0.0235 | 0.0216 | 0.0238 | 0.0219 | 0.0003 | 0.0003 |
| Comparative Example 1-2 | 29.3 | 96.3 | 135 | 0.07 | 0.0198 | 0.0213 | 0.0206 | 0.0221 | 0.0008 | 0.0008 |
| Comparative Example 1-3 | 29.4 | 95.9 | 123 | 0.08 | 0.0194 | 0.0207 | 0.0200 | 0.0213 | 0.0006 | 0.0006 |
| Comparative Example 1-4 | 30.3 | 99.2 | 126 | 0.04 | 0.0199 | 0.0205 | 0.0202 | 0.0208 | 0.0003 | 0.0003 |
| Comparative Example 1-5 | 32.5 | 86.9 | 135 | 0.23 | 0.0175 | 0.0191 | 0.0223 | 0.0239 | 0.0048 | 0.0048 |
| Comparative Example 1-6 | 25.3 | 85.8 | 137 | 0.28 | 0.0176 | 0.0191 | 0.0231 | 0.0246 | 0.0055 | 0.0055 |

(continued)

| | Foam density (kg/m³) | Closed cell ratio (%) | Average cell diameter (μm) | Void area ratio (%) | Initial thermal conductivity (W/m·K) | | Thermal conductivity after acceleration test (W/m·K) | | Difference in thermal conductivity (W/m·K) before and after acceleration test | |
|---|---|---|---|---|---|---|---|---|---|---|
| | | | | | 10 °C | 23 °C | 10 °C | 23 °C | 10 °C | 23 °C |
| Comparative Example 1-7 | 35.0 | 99.2 | 127 | 0.04 | 0.0198 | 0.0205 | 0.0201 | 0.0208 | 0.0003 | 0.0003 |
| Comparative Example 1-8 | 30.3 | 97.0 | 118 | 0.03 | 0.0187 | 0.0206 | 0.0191 | 0.0210 | 0.0004 | 0.0004 |
| Comparative Example 1-9 | 32.7 | 87.3 | 203 | 0.17 | 0.0169 | 0.0183 | 0.0192 | 0.0206 | 0.0023 | 0.0023 |
| Comparative Example 1-10 | 31.3 | 97.3 | 153 | 0.10 | 0.0199 | 0.0201 | 0.0202 | 0.0204 | 0.0003 | 0.0003 |
| Comparative Example 1-11 | 30.0 | 89.3 | 141 | 0.09 | 0.0171 | 0.0185 | 0.0192 | 0.0206 | 0.0021 | 0.0021 |
| Comparative Example 1-12 | 29.3 | 98.7 | 127 | 0.05 | 0.0191 | 0.0198 | 0.0197 | 0.0204 | 0.0006 | 0.0006 |

<Experiment 2>

(Example 2-1)

Into a reactor, 3500 kg of a 52 % by mass formaldehyde aqueous solution and 2510 kg of 99 % by mass phenol were charged and stirred with use of a propeller rotating stirrer. The temperature of the liquid within the reactor was regulated to 40 °C with use of a temperature controller. Subsequently, the temperature was raised while a 50 % by mass sodium hydroxide aqueous solution was added to proceed reaction. At the state where an Oswald viscosity reached 60 centistokes (a value measured at 25 °C), the reaction liquid was cooled, and 570 kg of urea (which corresponded to 15 mol % of the amount of formaldehyde charged) was added. Subsequently, the reaction liquid was cooled to 30 °C, and pH of the reaction liquid was neutralized to 6.4 with a 50 % by mass aqueous solution of para-toluenesulfonic acid monohydrate.

The obtained reaction liquid was dehydrated at 60 °C. The content of water in the dehydrated reaction liquid was measured as 5.7 % by mass.

A block copolymer (produced by BASF, "Pluronic® [Pluronic is a registered trademark in Japan, other countries, or both] F-127") of ethylene oxide-propylene oxide as a surfactant was mixed at a ratio of 2.5 parts by mass with respect to 100 parts by mass of the dehydrated reaction liquid. Thus, Phenol Resin B was obtained.

With respect to 100 parts by mass of Phenol Resin B, a foamable phenol resin composition, containing 3.0 parts by mass of JIS class 1 diesel oil (hereinafter, abbreviated as the "class 1 diesel oil"), 6.2 parts by mass of a mixture of 95 mol% of cyclopentane and 5mol% of hydrofluoroolefin HFO 1234yf as a foaming agent, and 11 parts by mass of a mixture of 80 % by mass of xylenesultonic acid and 20 % by mass of diethylene glycol as an acid curing catalyst, was fed to a mixing head in which the temperature was regulated to 25 °C and fed to a moving lower surface material through a multiport distribution pipe. The same mixing machine as in Example 1-1, as illustrated in FIG. 1, was used.

The temperature measured by the distribution part temperature sensor was 41.3 °C, and the pressure measured by the distribution part pressure sensor was 0.76 MPa.

As the surface material, a polyester non-woven cloth (produced by Asahi Kasei Fibers Corporation, "Spunbond E05030" with a basis weight of 30 g/m$^2$ and a thickness of 0.15mm) was used.

The foamable phenol resin composition fed onto the lower surface material was covered with an upper surface material. Simultaneously, the foamable phenol resin composition was sent to a slat-type double conveyor in a manner such that the foamable phenol resin composition was sandwiched between the upper and the lower surface material and then, cured for a residence time of twenty minutes. The same slat-type double conveyor as in Example 1-1, as illustrated in FIG. 2, was used.

The temperature measured by the conveyor temperature sensor was 85 °C.

The slat-type double conveyor used at this time was configured to discharge moisture generated during the curing to the outside. The foamable phenol resin composition covered with the upper and the lower surface material was molded into a plate shape by applying appropriate pressure from the upper and the lower direction by the slat-type double conveyor via the surface materials.

Subsequently, thus obtained foam, which was not cured yet, was heated in an oven at 110 °C for two hours, and thus, a phenol resin foam having a thickness of 50.3 mm was obtained.

(Example 2-2)

A phenol resin foam having a thickness of 51.2 mm was obtained in the same manner as in Example 2-1 except that 6.6 parts by mass of a mixture, containing 85 mol% of cyclopentane and 15 mol% of hydrofluoroolefin HFO 1233zd (hereinafter, abbreviated as "HFO 1233zd"), was used as the foaming agent with respect to 100 parts by mass of the phenol resin. The temperature measured by the distribution part temperature sensor was 40.3 °C, and the pressure measured by the distribution part pressure sensor was 0.73 MPa.

(Example 2-3)

A phenol resin foam having a thickness of 50.8 mm was obtained in the same manner as in Example 2-1 except that 7.4 parts by mass of a mixture, containing 70 mol% of cyclopentane and 30 mol% of HFO 1233zd, was used as the foaming agent with respect to 100 parts by mass of the phenol resin. The temperature measured by the distribution part temperature sensor was 39.2 °C, and the pressure measured by the distribution part pressure sensor was 0.72 MPa.

(Example 2-4)

A phenol resin foam having a thickness of 49.7 mm was obtained in the same manner as in Example 2-1 except that the amount of the class 1 diesel oil was 4.0 parts by mass and 9.6 parts by mass of a mixture, containing 60 mol% of cyclopentane and 40 mol% of HFO 1233zd, was used as the foaming agent with respect to 100 parts by mass of the phenol resin, which was prepared similarly to Example 2-1 except that dehydration conditions of the reaction liquid alone were different and the content of water was 3.5 % by mass, and that the temperature of the double conveyor measured by the conveyor temperature sensor was changed to 78 °C. The temperature measured by the distribution part temperature sensor was 37.5 °C, and the pressure measured by the distribution part pressure sensor was 0.71 MPa.

(Example 2-5)

A phenol resin foam having a thickness of 50.4 mm was obtained in the same manner as in Example 2-1 except that 6.45 parts by mass of a mixture, containing 83 mol% of cyclopentane, 10 mol% of HFO 1233zd, and 7 mol% of isobutane, was used as the foaming agent with respect to 100 parts by mass of the phenol resin and that the temperature of the double conveyor measured by the conveyor temperature sensor was changed to 80 °C. The temperature measured by the distribution part temperature sensor was 40.2 °C, and the pressure measured by the distribution part pressure sensor was 0.77 MPa.

(Example 2-6)

A phenol resin foam having a thickness of 51.7 mm was obtained in the same manner as in Example 2-1 except that 3.0 parts by mass of highly refined paraffinic oil "Cosmo White P 120" (hereinafter, abbreviated as "P120") produced by Cosmo Oil Lubricants Co., Ltd., instead of the class 1 diesel oil, was used and 6.3 parts by mass of a mixture, containing 78 mol% of cyclopentane, 10 mol% of hydrofluoroolefin HFO 1236mzz, and 12 mol% of isobutane, was used as the foaming agent with respect to 100 parts by mass of the phenol resin. The temperature measured by the distribution part temperature sensor was 41.0 °C, and the pressure measured by the distribution part pressure sensor was 0.81 MPa.

(Example 2-7)

A phenol resin foam having a thickness of 50.3 mm was obtained in the same manner as in Example 2-1 except that the amount of the class 1 diesel oil was 2.5 parts by mass and 4.3 parts by mass of a mixture, containing 76 mol% of cyclopentane, 10 mol% of hydrofluoroolefin HFO 1234ze (hereinafter, abbreviated as "HFO 1234ze"), and 14 mol% of isobutane, was used as the foaming agent with respect to 100 parts by mass of the phenol resin and that the temperature of the double conveyor measured by the conveyor temperature sensor was changed to 93 °C. The temperature measured by the distribution part temperature sensor was 40.8 °C, and the pressure measured by the distribution part pressure sensor was 0.86 MPa.

(Example 2-8)

A phenol resin foam having a thickness of 47.8 mm was obtained in the same manner as in Example 2-1 except that the amount of the class 1 diesel oil was 2.5 parts by mass and 8.1 parts by mass of a mixture, containing 76 mol% of cyclopentane, 10 mol% of HFO 1234ze, and 14 mol% of isobutane, was used as the foaming agent with respect to 100 parts by mass of the phenol resin, which was prepared similarly to Example 2-1 except that dehydration conditions of the reaction liquid alone were different and the content of water was 3.5 % by mass, and that the temperature of the double conveyor measured by the conveyor temperature sensor was changed to 75 °C. The temperature measured by the distribution part temperature sensor was 40.7 °C, and the pressure measured by the distribution part pressure sensor was 0.83 MPa.

(Example 2-9)

A phenol resin foam having a thickness of 48.6 mm was obtained in the same manner as in Example 2-1 except that 6.5 parts by mass of JIS class 1 kerosene oil, instead of the class 1 diesel oil, was used and 6.5 parts by mass of a mixture, containing 69 mol% of cyclopentane, 13 mol% of HFO 1233zd, and 18 mol% of isobutane, was used as the foaming agent with respect to 100 parts by mass of the phenol resin. The temperature measured by the distribution part temperature sensor was 41.3 °C, and the pressure measured by the distribution part pressure sensor was 0.81 MPa.

(Example 2-10)

A phenol resin foam having a thickness of 50.4 mm was obtained in the same manner as in Example 2-1 except that 4.0 parts by mass of normal decane (having a boiling point of 172 °C), instead of the class 1 diesel oil, was used and 6.3 parts by mass of a mixture, containing 69 mol% of cyclopentane, 13 mol% of HFO 1233zd, and 18 mol% of isobutane, was used as the foaming agent with respect to 100 parts by mass of the phenol resin. The temperature measured by the distribution part temperature sensor was 41.9 °C, and the pressure measured by the distribution part pressure sensor was 0.87 MPa.

(Example 2-11)

A phenol resin foam having a thickness of 50.6 mm was obtained in the same manner as in Example 2-10 except that 2.0 parts by mass of normal nonane (having a boiling point of 151 °C), instead of normal decane, was used with respect to 100 parts by mass of the phenol resin. The temperature measured by the distribution part temperature sensor was 41.3 °C, and the pressure measured by the distribution part pressure sensor was 0.88 MPa.

(Example 2-12)

A phenol resin foam having a thickness of 51.3 mm was obtained in the same manner as in Example 2-10 except that 0.5 parts by mass of the class 1 diesel oil, instead of normal decane, was used with respect to 100 parts by mass of the phenol resin. The temperature measured by the distribution part temperature sensor was 40.9 °C, and the pressure measured by the distribution part pressure sensor was 0.87 MPa.

(Example 2-13)

A phenol resin foam having a thickness of 50.9 mm was obtained in the same manner as in Example 2-1 except that 2.0 parts by mass of highly refined paraffinic oil "Cosmo White P 260" produced by Cosmo Oil Lubricants Co., Ltd., instead of the class 1 diesel oil, was used and 6.1 parts by mass of a mixture, containing 64 mol% of cyclopentane, 10 mol% of HFO 1234ze, and 26 mol% of isobutane, was used as the foaming agent with respect to 100 parts by mass of the phenol resin. The temperature measured by the distribution part temperature sensor was 40.3 °C, and the pressure measured by the distribution part pressure sensor was 0.91 MPa.

(Example 2-14)

A phenol resin foam having a thickness of 50.6 mm was obtained in the same manner as in Example 2-1 except that 3.0 parts by mass of P120, instead of the class 1 diesel oil, was used and 6.0 parts by mass of a mixture, containing 56 mol% of cyclopentane, 10 mol% of HFO 1234ze, and 34 mol% of isobutane, was used as the foaming agent with respect to 100 parts by mass of the phenol resin. The temperature measured by the distribution part temperature sensor was 39.7 °C, and the pressure measured by the distribution part pressure sensor was 1.06 MPa.

(Example 2-15)

A phenol resin foam having a thickness of 48.1 mm was obtained in the same manner as in Example 2-1 except that the amount of the class 1 diesel oil was 4.0 parts by mass and 8.4 parts by mass of a mixture, containing 93 mol% of cyclopentane and 7 mol% of HFO 1233zd, was used as the foaming agent with respect to 100 parts by mass of the phenol resin, which was prepared similarly to Example 2-1 except that dehydration conditions of the reaction liquid alone were different and the content of water was 3.5 % by mass, and that the temperature of the double conveyor measured by the conveyor temperature sensor was changed to 75 °C. The temperature measured by the distribution part temperature sensor was 41.4 °C, and the pressure measured by the distribution part pressure sensor was 0.71 MPa.

(Example 2-16)

A phenol resin foam having a thickness of 50.1 mm was obtained in the same manner as in Example 2-1 except that the amount of the class 1 diesel oil was 1.3 parts by mass and 8.4 parts by mass of a mixture, containing 93 mol% of cyclopentane and 7 mol% of HFO 1233zd, was used as the foaming agent with respect to 100 parts by mass of the phenol resin, which was prepared similarly to Example 2-1 except that dehydration conditions of the reaction liquid alone were different and the content of water was 3.5 % by mass, and that the temperature of the double conveyor measured by the conveyor temperature sensor was changed to 75 °C. The temperature measured by the distribution part temperature sensor was 41.2 °C, and the pressure measured by the distribution part pressure sensor was 0.72 MPa.

(Example 2-17)

A phenol resin foam having a thickness of 51.2 mm was obtained in the same manner as in Example 2-1 except that the amount of the class 1 diesel oil was 5.7 parts by mass and 4.7 parts by mass of a mixture, containing 65 mol% of cyclopentane, 8 mol% of HFO 1233zd, and 27 mol% of propane, was used as the foaming agent with respect to 100 parts by mass of the phenol resin and that the temperature of the double conveyor measured by the conveyor temperature sensor was changed to 89 °C. The temperature measured by the distribution part temperature sensor was 40.3 °C, and the pressure measured by the distribution part pressure sensor was 0.91 MPa.

(Example 2-18)

A phenol resin foam having a thickness of 51.5 mm was obtained in the same manner as in Example 2-1 except that the amount of the class 1 diesel oil was 0.5 parts by mass and 4.7 parts by mass of a mixture, containing 65 mol% of cyclopentane, 8 mol% of HFO 1233zd, and 27 mol% of propane, was used as the foaming agent with respect to 100 parts by mass of the phenol resin and that the temperature of the double conveyor measured by the conveyor temperature sensor was changed to 89 °C. The temperature measured by the distribution part temperature sensor was 40.1 °C, and the pressure measured by the distribution part pressure sensor was 0.99 MPa.

(Example 2-19)

A phenol resin foam having a thickness of 50.3 mm was obtained in the same manner as in Example 2-1 except that the amount of the class 1 diesel oil was 2.5 parts by mass and 9.8 parts by mass of a mixture, containing 51 mol% of cyclopentane, 45 mol% of HFO 1233zd, and 4 mol% of isobutane, was used as the foaming agent with respect to 100 parts by mass of the phenol resin, which was prepared similarly to Example 2-1 except that dehydration conditions of the reaction liquid alone were different and the content of water was 3.5 % by mass, and that the temperature of the double conveyor measured by the conveyor temperature sensor was changed to 78 °C. The temperature measured by the distribution part temperature sensor was 36.8 °C, and the pressure measured by the distribution part pressure sensor was 0.67 MPa.

(Example 2-20)

A phenol resin foam having a thickness of 50.1 mm was obtained in the same manner as in Example 2-1 except that the amount of the class 1 diesel oil was 4.7 parts by mass and 9.8 parts by mass of a mixture, containing 51 mol% of cyclopentane, 45 mol% of HFO 1233zd, and 4 mol% of isobutane, was used as the foaming agent with respect to 100 parts by mass of the phenol resin, which was prepared similarly to Example 2-1 except that dehydration conditions of the reaction liquid alone were different and the content of water was 3.5 % by mass, and that the temperature of the double conveyor measured by the conveyor temperature sensor was changed to 78 °C. The temperature measured by the distribution part temperature sensor was 36.5 °C, and the pressure measured by the distribution part pressure sensor was 0.66 MPa.

(Example 2-21)

A phenol resin foam having a thickness of 51.3 mm was obtained in the same manner as in Example 2-1 except that the amount of the class 1 diesel oil was 4.8 parts by mass and 6.3 parts by mass of a mixture, containing 57 mol% of cyclopentane, 20 mol% of HFO 1233zd, and 23 mol% of isobutane, was used as the foaming agent with respect to 100 parts by mass of the phenol resin. The temperature measured by the distribution part temperature sensor was 40.7 °C, and the pressure measured by the distribution part pressure sensor was 0.86 MPa.

(Example 2-22)

A phenol resin foam having a thickness of 50.9 mm was obtained in the same manner as in Example 2-1 except that the amount of the class 1 diesel oil was 7.5 parts by mass and 6.3 parts by mass of a mixture, containing 57 mol% of cyclopentane, 20 mol% of HFO 1233zd, and 23 mol% of isobutane, was used as the foaming agent with respect to 100 parts by mass of the phenol resin. The temperature measured by the distribution part temperature sensor was 40.3 °C, and the pressure measured by the distribution part pressure sensor was 0.84 MPa.

(Comparative Example 2-1)

A phenol resin foam having a thickness of 51.3 mm was obtained in the same manner as in Example 2-1 except that the amount of the class 1 diesel oil was changed to 0 parts by mass (i.e., the class 1 diesel oil was not added) and 6.0 parts by mass of cyclopentane was used (i.e., hydrofluoroolefin having a carbon number of 3 or 4 was not used) as the foaming agent with respect to 100 parts by mass of the phenol resin. The temperature measured by the distribution part temperature sensor was 41.5 °C, and the pressure measured by the distribution part pressure sensor was 0.8 MPa.

(Comparative Example 2-2)

A phenol resin foam having a thickness of 50.7 mm was obtained in the same manner as in Example 2-1 except that the amount of the class 1 diesel oil was changed to 4 parts by mass and 6.0 parts by mass of normal pentane was used (i.e., cyclopentane and hydrofluoroolefin having a carbon number of 3 or 4 were not used) as the foaming agent with respect to 100 parts by mass of the phenol resin. The temperature measured by the distribution part temperature sensor was 41.5 °C, and the pressure measured by the distribution part pressure sensor was 0.83 MPa.

(Comparative Example 2-3)

A phenol resin foam having a thickness of 50.3 mm was obtained in the same manner as in Example 2-1 except that the amount of the class 1 diesel oil was changed to 4 parts by mass and 6.0 parts by mass of isopentane was used (i.e., cyclopentane and hydrofluoroolefin having a carbon number of 3 or 4 were not used) as the foaming agent with respect to 100 parts by mass of the phenol resin. The temperature measured by the distribution part temperature sensor was 41.4 °C, and the pressure measured by the distribution part pressure sensor was 0.86 MPa.

(Comparative Example 2-4)

A phenol resin foam having a thickness of 49.8 mm was obtained in the same manner as in Example 2-1 except that the amount of the class 1 diesel oil was 4.5 parts by mass and 9.7 parts by mass of a mixture, containing 20 mol% of cyclopentane and 80 mol% of HFO 1233zd, was used as the foaming agent with respect to 100 parts by mass of the phenol resin, which was prepared similarly to Example 2-1 except that dehydration conditions of the reaction liquid alone were different and the content of water was 3.5 % by mass, and that the temperature of the double conveyor measured by the conveyor temperature sensor was changed to 80 °C. The temperature measured by the distribution part temperature sensor was 37.2 °C, and the pressure measured by the distribution part pressure sensor was 0.68 MPa.

(Comparative Example 2-5)

A phenol resin foam having a thickness of 50.1 mm was obtained in the same manner as in Example 2-1 except that 9.0 parts by mass of P120, instead of the class 1 diesel oil, was used and 6.0 parts by mass of a mixture, containing 66 mol% of cyclopentane, 10 mol% of HFO 1233zd, and 14 mol% of isobutane, was used as the foaming agent with respect to 100 parts by mass of the phenol resin. The temperature measured by the distribution part temperature sensor was 40.6 °C, and the pressure measured by the distribution part pressure sensor was 0.76 MPa.

(Comparative Example 2-6)

A phenol resin foam having a thickness of 51.8 mm was obtained in the same manner as in Example 2-1 except that the amount of the class 1 diesel oil was 2.0 parts by mass and 3.1 parts by mass of a mixture, containing 76 mol% of cyclopentane, 10 mol% of HFO 1233zd, and 14 mol% of isobutane, was used as the foaming agent with respect to 100 parts by mass of the phenol resin, which was prepared similarly to Example 2-1 except that dehydration conditions of the reaction liquid alone were different and the content of water was 15 % by mass, and that the temperature of the double conveyor measured by the conveyor temperature sensor was changed to 101 °C. The temperature measured by the distribution part temperature sensor was 39.8 °C, and the pressure measured by the distribution part pressure sensor was 0.78 MPa.

(Comparative Example 2-7)

A phenol resin foam having a thickness of 47.5 mm was obtained in the same manner as in Example 2-1 except that the amount of the class 1 diesel oil was 2.0 parts by mass and 10.5 parts by mass of a mixture, containing 76 mol% of cyclopentane, 10 mol% of HFO 1233zd, and 14 mol% of isobutane, was used as the foaming agent with respect to 100 parts by mass of the phenol resin, which was prepared similarly to Example 2-1 except that dehydration conditions of the reaction liquid alone were different and the content of water was 3.5 % by mass, that the temperature of the double conveyor measured by the conveyor temperature sensor was changed to 68 °C, and that the residence time in the slat-type double conveyor was changed to thirty minutes. The temperature measured by the distribution part temperature sensor was 41.5 °C, and the pressure measured by the distribution part pressure sensor was 0.98 MPa.

(Comparative Example 2-8)

A phenol resin foam having a thickness of 48.7 mm was obtained in the same manner as in Example 2-1 except that 3 parts by mass of normal heptane (having a boiling point of 98 °C), instead of the class 1 diesel oil, was used and 6.3 parts by mass of a mixture, containing 76 mol% of cyclopentane, 10 mol% of HFO 1233zd, and 14 mol% of isobutane, was used as the foaming agent with respect to 100 parts by mass of the phenol resin. The temperature measured by the distribution part temperature sensor was 41.2 °C, and the pressure measured by the distribution part pressure sensor was 0.86 MPa.

(Comparative Example 2-9)

A phenol resin foam having a thickness of 50.5 mm was obtained in the same manner as in Example 2-1 except that 3 parts by mass of P120, instead of the class 1 diesel oil, was used and 5.4 parts by mass of a mixture, containing 40 mol% of cyclopentane and 60 mol% of isobutane, was used as the foaming agent with respect to 100 parts by mass of the phenol resin. The temperature measured by the distribution part temperature sensor was 40.7 °C, and the pressure measured by the distribution part pressure sensor was 0.91 MPa.

(Comparative Example 2-10)

A phenol resin foam having a thickness of 47.6 mm was obtained in the same manner as in Example 2-1 except that the amount of the class 1 diesel oil was 7.0 parts by mass and 8.4 parts by mass of a mixture, containing 93 mol% of cyclopentane and 7 mol% of HFO 1233zd, was used as the foaming agent with respect to 100 parts by mass of the phenol resin, which was prepared similarly to Example 2-1 except that dehydration conditions of the reaction liquid alone were different and the content of water was 3.5 % by mass, and that the temperature of the double conveyor measured by the conveyor temperature sensor was changed to 75 °C. The temperature measured by the distribution part temperature sensor was 41.5 °C, and the pressure measured by the distribution part pressure sensor was 0.70 MPa.

(Comparative Example 2-11)

A phenol resin foam having a thickness of 49.1 mm was obtained in the same manner as in Example 2-1 except that the amount of the class 1 diesel oil was 0.5 parts by mass and 8.4 parts by mass of a mixture, containing 93 mol% of cyclopentane and 7 mol% of HFO 1233zd, was used as the foaming agent with respect to 100 parts by mass of the phenol resin, which was prepared similarly to Example 2-1 except that dehydration conditions of the reaction liquid alone were different and the content of water was 3.5 % by mass, and that the temperature of the double conveyor measured by the conveyor temperature sensor was changed to 75 °C. The temperature measured by the distribution part temperature sensor was 41.1 °C, and the pressure measured by the distribution part pressure sensor was 0.73 MPa.

(Comparative Example 2-12)

A phenol resin foam having a thickness of 51.0 mm was obtained in the same manner as in Example 2-1 except that the amount of the class 1 diesel oil was 9.0 parts by mass and 4.7 parts by mass of a mixture, containing 65 mol% of cyclopentane, 8 mol% of HFO 1233zd, and 27 mol% of propane, was used as the foaming agent with respect to 100 parts by mass of the phenol resin and that the temperature of the double conveyor measured by the conveyor temperature sensor was changed to 89 °C. The temperature measured by the distribution part temperature sensor was 40.4 °C, and the pressure measured by the distribution part pressure sensor was 0.96 MPa.

(Comparative Example 2-13)

A phenol resin foam having a thickness of 51.9 mm was obtained in the same manner as in Example 2-1 except that the amount of the class 1 diesel oil was 0.2 parts by mass and 4.7 parts by mass of a mixture, containing 65 mol% of cyclopentane, 8 mol% of HFO 1233zd, and 27 mol% of propane, was used as the foaming agent with respect to 100 parts by mass of the phenol resin and that the temperature of the double conveyor measured by the conveyor temperature sensor was changed to 89 °C. The temperature measured by the distribution part temperature sensor was 40.1 °C, and the pressure measured by the distribution part pressure sensor was 0.99 MPa.

Tables 7 and 8 show, for each of Examples and Comparative Examples, the content of water in the phenol resin charged into the mixing machine, the content of the cyclopentane, the content of the hydrofluoroolefin (HFO) having a carbon number of 3 or 4, the total content of the hydrocarbon having a carbon number of 6 or less and the hydrofluoroolefin having a carbon number of 3 or 4, and the content of the hydrocarbon having a carbon number of 6 or less per 22.4 $\times$ 10$^{-3}$ m$^3$ space volume in the obtained phenol resin foam, the proportions of the cyclopentane and the hydrocarbon having a boiling point of from - 50 °C to 5 °C in the hydrocarbon having a carbon number or 6 or less, and the average boiling point of the hydrocarbon having a carbon number or 6 or less. Furthermore, for each of Examples and Comparative Examples, Tables 9 and 10 show the amount of the high-boiling hydrocarbon extracted in chloroform per 22.4 $\times$ 10$^{-3}$ m$^3$ space volume in the obtained phenol resin foam, and Tables 11 and 12 show results of evaluation of the properties and the thermal conductivity of the obtained phenol resin foam.

[Table 7]

| | Foaming agent | Content (% by mass) of water in phenol resin | Temperature (°C) of double conveyor | Coefficient R | Pressure (MPa) at distribution part | Content (mol / 22.4 × 10$^{-3}$ m$^3$) of cyclopentane | Content (mol / 22.4 × 10$^{-3}$ m$^3$) of HFO | Content of HFO + content of hydrocarbon having carbon number of 6 or less (mol / 22.4 × 10$^3$ m$^3$) | Content(mol/ 22.4 × 10$^{-3}$ m$^3$) of hydrocarbon having carbon number of 6 or less | Proportion (mol %) of cyclopentane | Proportion (mol %) of hydrocarbon having boiling point of from -50°C to 5°C | Average boiling point (°C) of hydrocarbon having carbon number or 6 or less |
|---|---|---|---|---|---|---|---|---|---|---|---|---|
| Example 2-1 | Cyclopentane / HFO 1234yf | 5.7 | 85 | 25.1 | 0.76 | 0.593 | 0.024 | 0.617 | 0.593 | 100.0 | 0.0 | 49.3 |
| Example 2-2 | Cyclopentane / HFO 1233zd | 5.7 | 85 | 25.1 | 0.73 | 0.502 | 0.095 | 0.597 | 0.502 | 100.0 | 0.0 | 49.3 |
| Example 2-3 | Cyclopentane / HFO 1233zd | 5.7 | 85 | 25.1 | 0.72 | 0.424 | 0.181 | 0.605 | 0.424 | 100.0 | 0.0 | 49.3 |
| Example 2-4 | Cyclopentane / HFO 1233zd | 3.5 | 78 | 21.3 | 0.71 | 0.497 | 0.320 | 0.817 | 0.497 | 100.0 | 0.0 | 49.3 |
| Example 2-5 | Cyclopentane / HFO 1233zd / isobutane | 5.7 | 80 | 24.0 | 0.77 | 0.532 | 0.062 | 0.638 | 0.576 | 92.4 | 7.6 | 44.6 |
| Example 2-6 | Cyclopentane / HFO 1236mzz / isobutane | 5.7 | 85 | 25.1 | 0.81 | 0.473 | 0.061 | 0.606 | 0.545 | 86.8 | 13.2 | 41.2 |
| Example 2-7 | Cyclopentane / HFO 1234ze / isobutane | 5.7 | 93 | 27.0 | 0.86 | 0.295 | 0.038 | 0.382 | 0.344 | 85.8 | 14.2 | 40.6 |
| Example 2-8 | Cyclopentane / HFO 1234ze / isobutane | 3.5 | 75 | 20.6 | 0.83 | 0.678 | 0.079 | 0.881 | 0.802 | 84.5 | 15.5 | 39.9 |
| Example 2-9 | Cyclopentane / HFO 1233zd / isobutane | 5.7 | 85 | 25.1 | 0.81 | 0.453 | 0.085 | 0.655 | 0.570 | 79.5 | 20.5 | 36.8 |

EP 3 159 375 A1

51

(continued)

| | Foaming agent | Content (% by mass) of water in phenol resin | Temperature (°C) of double conveyor | Coefficient R | Pressure (MPa) at distribution part | Content (mol / $22.4 \times 10^{-3}$ m³) of cyclopentane | Content (mol / $22.4 \times 10^{-3}$ m³) of HFO | Content of HFO + content of hydrocarbon having carbon number of 6 or less (mol / $22.4 \times 10^3$ m³) | Content (mol / $22.4 \times 10^{-3}$ m³) of hydrocarbon having carbon number of 6 or less | Proportion (mol %) of cyclopentane | Proportion (mol %) of hydrocarbon having boiling point of from -50°C to 5°C | Average boiling point (°C) of hydrocarbon having carbon number of 6 or less |
|---|---|---|---|---|---|---|---|---|---|---|---|---|
| Example 2-10 | Cyclopentane / HFO 1233zd / isobutane | 5.7 | 85 | 25.1 | 0.87 | 0.427 | 0.080 | 0.616 | 0.536 | 79.7 | 20.3 | 36.9 |
| Example 2-11 | Cyclopentane / HFO 1233zd / isobutane | 5.7 | 85 | 25.1 | 0.88 | 0.425 | 0.080 | 0.614 | 0.534 | 79.6 | 20.4 | 36.8 |
| Example 2-12 | Cyclopentane / HFO 1233zd / isobutane | 5.7 | 85 | 25.1 | 0.87 | 0.415 | 0.078 | 0.600 | 0.522 | 79.5 | 20.5 | 36.8 |
| Example 2-13 | Cyclopentane / HFO 1234ze / isobutane | 5.7 | 85 | 25.1 | 0.91 | 0.391 | 0.061 | 0.609 | 0.548 | 71.4 | 28.6 | 31.8 |
| Example 2-14 | Cyclopentane / HFO 1234ze / isobutane | 5.7 | 85 | 25.1 | 1.06 | 0.332 | 0.059 | 0.589 | 0.530 | 62.6 | 37.4 | 26.5 |
| Example 2-15 | Cyclopentane / HFO 1233zd | 3.5 | 75 | 20.6 | 0.71 | 0.811 | 0.059 | 0.870 | 0.811 | 100.0 | 0.0 | 49.3 |
| Example 2-16 | Cyclopentane / HFO 1233zd | 3.5 | 75 | 20.6 | 0.72 | 0.802 | 0.059 | 0.861 | 0.802 | 100.0 | 0.0 | 49.3 |
| Example 2-17 | Cyclopentane / HFO 1233zd / propane | 5.7 | 89 | 26.0 | 0.91 | 0.315 | 0.038 | 0.482 | 0.444 | 70.9 | 29.1 | 22.7 |

| | Foaming agent | Content (% by mass) of water in phenol resin | Temperature (°C) of double conveyor | Coefficient R | Pressure (MPa) at distribution part | Content (mol / 22.4 × 10$^{-3}$ m$^3$) of cyclopentane | Content (mol / 22.4 × 10$^{-3}$ m$^3$) of HFO | Content of HFO + content of hydrocarbon having carbon number of 6 or less (mol / 22.4 × 10$^3$ m$^3$) | Content(mol/ 22.4 × 10$^{-3}$ m$^3$) of hydrocarbon having carbon number of 6 or less | Proportion (mol %) of cyclopentane | Proportion (mol %) of hydrocarbon having boiling point of from-50°C to 5°C | Average boiling point (°C) of hydrocarbon having carbon number or 6 or less |
|---|---|---|---|---|---|---|---|---|---|---|---|---|
| Example 2-18 | Cyclopentane / HFO 1233zd / propane | 5.7 | 89 | 26.0 | 0.99 | 0.311 | 0.038 | 0.478 | 0.440 | 70.7 | 29.3 | 22.5 |

[Table 8]

| | Foaming agent | Content (% by mass) of water in phenol resin | Temperature (°C) of double conveyor | Coefficient R | Pressure (MPa) at distribution part | Content (mol / 22.4×10⁻³m³) of cyclopentane | (Content / 22.4×10⁻³ m³) of HFO | Content of HFO + content of hydrocarbon having carbon number of 6 or less (mol / 22.4×10⁻³ m³) | Content (mol / 22.4×10⁻³ m³) of hydrocarbon having carbon number of 6 or less | Proportion (mol %) of cyclopentane | Proportion (mol %) of hydrocarbon having boiling point of from -50°C to 5°C | Average boiling point (°C) of hydrocarbon having carbon number or 6 or less |
|---|---|---|---|---|---|---|---|---|---|---|---|---|
| Example 2-19 | Cyclopentane / HFO 1233zd / isobutane | 3.5 | 78 | 21.3 | 0.67 | 0.416 | 0.362 | 0.810 | 0.448 | 92.9 | 7.1 | 44.9 |
| Example 2-20 | Cyclopentane / HFO 1233zd / isobutane | 3.5 | 78 | 21.3 | 0.66 | 0.423 | 0.371 | 0.827 | 0.456 | 92.8 | 7.2 | 44.9 |
| Example 2-21 | Cyclopentane / HFO 1233zd / isobutane | 5.7 | 85 | 25.1 | 0.86 | 0.341 | 0.119 | 0.596 | 0.477 | 71.5 | 28.5 | 31.9 |
| Example 2-22 | Cyclopentane / HFO 1233zd / isobutane | 5.7 | 85 | 25.1 | 0.84 | 0.345 | 0.121 | 0.603 | 0.482 | 71.6 | 28.4 | 32.0 |
| Comparative Example 2-1 | Cyclopentane | 5.7 | 85 | 25.1 | 0.80 | 0.598 | 0.000 | 0.598 | 0.598 | 100.0 | 0.0 | 49.3 |
| Comparative Example 2-2 | Normal pentane | 5.7 | 85 | 25.1 | 0.83 | 0.000 | 0.000 | 0.591 | 0.591 | 0.0 | 0.0 | 36.1 |
| Comparative Example 2-3 | Isopentane | 5.7 | 85 | 25.1 | 0.86 | 0.000 | 0.000 | 0.589 | 0.589 | 0.0 | 0.0 | 27.7 |
| Comparative Example 2-4 | Cyclopentane / HFO 1233zd | 3.5 | 80 | 21.8 | 0.68 | 0.135 | 0.535 | 0.670 | 0.135 | 100.0 | 0.0 | 49.3 |
| Comparative Example 2-5 | Cyclopentane / HFO 1233zd / isobutane | 5.7 | 85 | 25.1 | 0.76 | 0.453 | 0.060 | 0.595 | 0.535 | 84.7 | 15.3 | 40.0 |

| | Foaming agent | Content (% by mass) of water in phenol resin | Temperature (°C) of double conveyor | Coefficient R | Pressure (MPa) at distribution part | Content (mol/ 22.4×10⁻³m) of cyclopentane | (Content 22.4 × 10⁻³ m³) of HFO | Content of HFO + content of hydrocarbon having carbon number of 6 or less (mol / 22.4 × 10⁻³ m³) | Content (mol / 22.4 × 10⁻³ m³) of hydrocarbon having carbon number of 6 or less | Proportion (mol %) of cyclopentane | Proportion (mol %) of hydrocarbon having boiling point of from-50 °C to 5 °C | Average boiling point (°C) of hydrocarbon having carbon number or 6 or less |
|---|---|---|---|---|---|---|---|---|---|---|---|---|
| Comparative Example 2-6 | Cyclopentane / HFO 1233zd / isobutane | 15.0 | 101 | 38.1 | 0.78 | 0.187 | 0.025 | 0.246 | 0.221 | 84.6 | 15.4 | 39.9 |
| Comparative Example 2-7 | Cyclopentane / HFO 1233zd / isobutane | 3.5 | 68 | 19.0 | 0.98 | 0.983 | 0.129 | 1.293 | 1.164 | 84.5 | 15.5 | 39.8 |
| Comparative Example 2-8 | Cyclopentane / HFO 1233zd / isobutane | 5.7 | 85 | 25.1 | 0.86 | 0.462 | 0.061 | 0.607 | 0.546 | 84.6 | 15.4 | 39.9 |
| Comparative Example 2-9 | Cyclopentane / isobutane | 5.7 | 85 | 25.1 | 0.91 | 0.223 | 0.000 | 0.548 | 0.548 | 40.7 | 59.3 | 13.1 |
| Comparative Example 2-10 | Cyclopentane / HFO 1233zd | 3.5 | 75 | 20.6 | 0.70 | 0.814 | 0.059 | 0.873 | 0.814 | 100.0 | 0.0 | 49.3 |
| Comparative Example 2-11 | Cyclopentane / HFO 1233zd | 3.5 | 75 | 20.6 | 0.73 | 0.796 | 0.058 | 0.854 | 0.796 | 100.0 | 0.0 | 49.3 |
| Comparative Example 2-12 | Cyclopentane / HFO 1233zd / propane | 5.7 | 89 | 26.0 | 0.96 | 0.321 | 0.039 | 0.491 | 0.452 | 71.0 | 29.0 | 22.8 |
| Comparative Example 2-13 | Cyclopentane / HFO 1233zd / propane | 5.7 | 89 | 26.0 | 0.99 | 0.312 | 0.038 | 0.478 | 0.440 | 70.9 | 29.1 | 22.7 |

EP 3 159 375 A1

[Table 9]

| High-boiling hydrocarbon used | High-boiling hydrocarbon extracted in chloroform from foam (by boiling point) (g / 22.4 × 10⁻³m³) | | | | | | | Coefficient a | Coefficient a' | Coefficient a" | Coefficient b | Coefficient b' | Coefficient b" | Coefficient c | Coefficient c' | Coefficient c" |
|---|---|---|---|---|---|---|---|---|---|---|---|---|---|---|---|---|
| | Boiling point from 120 to 140 °C | Boiling point from 140 to 160 °C | Boiling point from 160 to 550 °C | Boiling point from 160 to 350 °C | Boiling point from 350 to 450 °C | Boiling point from 450 to 550 °C | Boiling point from 120 to 550 °C | | | | | | | | | |
| Example 2-1<br>JIS class 1 diesel oil | 0.0 | 0.0 | 9.2 | 8.3 | 0.9 | 0.0 | 9.2 | 24.69 | 20.72 | 16.76 | 1.12 | 1.78 | 2.43 | 29.19 | 24.26 | 19.33 |
| Example 2-2<br>JIS class 1 diesel oil | 0.0 | 0.0 | 9.1 | 8.3 | 0.8 | 0.0 | 9.1 | 25.74 | 21.57 | 17.40 | 0.88 | 1.44 | 1.99 | 26.81 | 22.07 | 17.34 |
| Example 2-3<br>JIS class 1 diesel oil | 0.0 | 0.0 | 9.3 | 8.4 | 0.9 | 0.0 | 9.3 | 26.65 | 22.29 | 17.94 | 0.67 | 1.15 | 1.62 | 23.92 | 19.43 | 14.93 |
| Example 2-4<br>JIS class 1 diesel oil | 0.0 | 0.1 | 14.4 | 13.0 | 1.4 | 0.0 | 14.5 | 25.80 | 21.61 | 17.43 | 0.87 | 1.42 | 1.97 | 19.25 | 15.14 | 11.04 |
| Example 2-5<br>JIS class 1 diesel oil | 0.0 | 0.0 | 9.7 | 8.8 | 0.9 | 0.0 | 9.7 | 25.39 | 21.29 | 17.19 | 0.96 | 1.55 | 2.14 | 27.92 | 23.09 | 18.26 |
| Example 2-6<br>Cosmo White P 120 | 0.0 | 0.0 | 10.9 | 1.6 | 7.3 | 2.0 | 10.9 | 26.08 | 21.84 | 17.60 | 0.80 | 1.33 | 1.86 | 27.95 | 23.12 | 18.29 |
| Example 2-7<br>JIS class 1 diesel oil | 0.0 | 0.0 | 7.4 | 6.7 | 0.7 | 0.0 | 7.4 | 28.15 | 23.49 | 18.84 | 0.33 | 0.67 | 1.00 | 28.72 | 23.83 | 18.94 |
| Example 2-8<br>JIS class 1 diesel oil | 0.0 | 0.0 | 8.9 | 8.1 | 0.8 | 0.0 | 8.9 | 23.70 | 19.93 | 16.17 | 1.35 | 2.10 | 2.84 | 27.35 | 22.57 | 17.79 |
| Example 2-9<br>JIS class 1 kerosene oil | 0.2 | 2.4 | 22.3 | 22.2 | 0.1 | 0.0 | 24.9 | 26.31 | 22.02 | 17.74 | 0.75 | 1.26 | 1.76 | 27.14 | 22.38 | 17.62 |
| Example 2-10<br>Normal decane | 0.0 | 0.0 | 13.2 | 13.2 | 0.0 | 0.0 | 13.2 | 26.61 | 22.26 | 17.92 | 0.68 | 1.16 | 1.64 | 27.31 | 22.54 | 17.76 |
| Example 2-11<br>Normal nonane | 0.0 | 6.7 | 0.0 | 0.0 | 0.0 | 0.0 | 6.7 | 26.64 | 22.28 | 17.93 | 0.67 | 1.16 | 1.63 | 27.31 | 22.54 | 17.76 |

| | High-boil-ing hydro-carbon used | High-boiling hydrocarbon extracted in chloroform from foam (by boiling point) (g / 22.4 × 10⁻³m³) | | | | | | | Coeffi-cient a | Coeffi-cient a' | Coeffi-cient a" | Coeffi-cient b | Coeffi-cient b' | Coeffi-cient b" | Coeffi-cient c | Coeffi-cient c' | Coeffi-cient c" |
| | | Boiling point of from 120 to 140 °C | Boiling point of from 140 to 160 °C | Boiling point of from 160 to 550 °C | Boiling point of from 160 to 350 °C | Boiling point of from 350 to 450 °C | Boiling point of from 450 to 550 °C | Boiling point of from 120 to 550 °C | | | | | | | | | |
| Example 2-12 | JIS class 1 diesel oil | 0.0 | 0.0 | 1.2 | 1.1 | 0.1 | 0.0 | 1.2 | 26.75 | 22.37 | 18.00 | 0.65 | 1.12 | 1.58 | 27.38 | 22.60 | 17.82 |
| Example 2-13 | Cosmo White P 260 | 0.0 | 0.0 | 6.2 | 0.1 | 2.8 | 3.3 | 6.2 | 27.03 | 22.60 | 18.17 | 0.58 | 1.03 | 1.46 | 27.95 | 23.12 | 18.29 |
| Example 2-14 | Cosmo White P 120 | 0.0 | 0.0 | 10.2 | 1.5 | 6.8 | 1.9 | 10.2 | 27.72 | 23.15 | 18.58 | 0.43 | 0.81 | 1.18 | 28.02 | 23.18 | 18.35 |
| Example 2-15 | JIS class 1 diesel oil | 0.0 | 0.1 | 13.8 | 12.5 | 1.3 | 0.0 | 13.9 | 22.15 | 18.70 | 15.25 | 1.71 | 2.60 | 3.47 | 28.02 | 23.18 | 18.35 |
| Example 2-16 | JIS class 1 diesel oil | 0.0 | 0.0 | 3.8 | 3.4 | 0.4 | 0.0 | 3.8 | 22.26 | 18.78 | 15.31 | 1.68 | 2.56 | 3.43 | 28.02 | 23.18 | 18.35 |
| Example 2-17 | JIS class 1 diesel oil | 0.0 | 0.1 | 17.7 | 16.1 | 1.6 | 0.0 | 17.8 | 27.91 | 23.30 | 18.70 | 0.38 | 0.74 | 1.10 | 28.72 | 23.83 | 18.94 |
| Example 2-18 | JIS class 1 diesel oil | 0.0 | 0.0 | 1.2 | 1.1 | 0.1 | 0.0 | 1.2 | 27.96 | 23.34 | 18.73 | 0.37 | 0.73 | 1.08 | 28.72 | 23.83 | 18.94 |

[Table 10]

| | High-boiling hydrocarbon used | High-boiling hydrocarbon extracted in chloroform from foam (by boiling point) (g / 22.4 × 10⁻³ m³) | | | | | | | Coefficient a | Coefficient a' | Coefficient a" | Coefficient b | Coefficient b' | Coefficient b" | Coefficient c | Coefficient c' | Coefficient c" |
| | | Boiling point of from 120 to 140 °C | Boiling point of from 140 to 160 °C | Boiling point of from 160 to 550 °C | Boiling point of from 160 to 350 °C | Boiling point of from 350 to 450 °C | Boiling point of from 450 to 550 °C | Boiling point of from 120 to 550 °C | | | | | | | | | |
|---|---|---|---|---|---|---|---|---|---|---|---|---|---|---|---|---|---|
| Example 2-19 | JIS class 1 diesel oil | 0.0 | 0.0 | 9.3 | 8.4 | 0.9 | 0.0 | 9.3 | 26.74 | 22.37 | 17.99 | 0.65 | 1.12 | 1.58 | 17.84 | 13.85 | 9.86 |
| Example 2-20 | JIS class 1 diesel oil | 0.0 | 0.1 | 18.2 | 16.4 | 1.8 | 0.0 | 18.3 | 26.66 | 22.30 | 17.95 | 0.67 | 1.15 | 1.62 | 17.53 | 13.57 | 9.61 |
| Example 2-21 | JIS class 1 diesel oil | 0.0 | 0.1 | 16.0 | 14.5 | 1.5 | 0.0 | 16.1 | 27.61 | 23.06 | 18.52 | 0.45 | 0.84 | 1.22 | 26.00 | 21.33 | 16.67 |
| Example 2-22 | JIS class 1 diesel oil | 0.0 | 0.1 | 26.2 | 23.8 | 2.4 | 0.0 | 26.3 | 27.56 | 23.02 | 18.49 | 0.46 | 0.86 | 1.24 | 25.93 | 21.27 | 16.61 |
| Comparative Example 2-1 | - | 0.0 | 0.0 | 0.0 | 0.0 | 0.0 | 0.0 | 0.0 | 24.63 | 20.67 | 16.73 | 1.14 | 1.80 | 2.45 | 30.00 | 25.00 | 20.00 |
| Comparative Example 2-2 | JIS class 1 diesel oil | 0.0 | 0.0 | 12.6 | 11.4 | 1.2 | 0.0 | 12.6 | 31.57 | 26.23 | 20.89 | -0.46 | -0.43 | -0.41 | 30.00 | 25.00 | 20.00 |
| Comparative Example 2-3 | JIS class 1 diesel oil | 0.0 | 0.0 | 12.4 | 11.2 | 1.2 | 0.0 | 12.4 | 31.57 | 26.23 | 20.89 | -0.46 | -0.43 | -0.41 | 30.00 | 25.00 | 20.00 |
| Comparative Example 2-4 | JIS class 1 diesel oil | 0.0 | 0.0 | 16.7 | 15.1 | 1.6 | 0.0 | 16.7 | 30.00 | 24.98 | 19.95 | -0.10 | 0.07 | 0.24 | 12.02 | 8.52 | 5.02 |
| Comparative Example 2-5 | Cosmo White P 120 | 0.0 | 0.0 | 38.2 | 5.8 | 25.4 | 7.0 | 38.2 | 26.31 | 22.02 | 17.74 | 0.75 | 1.26 | 1.76 | 27.98 | 23.15 | 18.32 |

| | High-boil-ing hydro-carbon used | High-boiling hydrocarbon extracted in chloroform from foam (by boiling point) (g / 22.4 × 10⁻³ m³) | | | | | | | Coeffi-cient a | Coeffi-cient a' | Coeffi-cient a" | Coeffi-cient b | Coeffi-cient b' | Coeffi-cient b" | Coeffi-cient c | Coeffi-cient c' | Coeffi-cient c" |
|---|---|---|---|---|---|---|---|---|---|---|---|---|---|---|---|---|---|
| | | Boil-ing point of from 120 to 140 °C | Boiling point of from 140 to 160 °C | Boiling point of from 160 to 550 °C | Boiling point of from 160 to 350 °C | Boiling point of from 350 to 450 °C | Boiling point of from 450 to 550 °C | Boiling point of from 120 to 550 °C | | | | | | | | | |
| Compara-tive Exam-ple 2-6 | JIS class 1 diesel oil | 0.0 | 0.0 | 6.4 | 5.8 | 0.6 | 0.0 | 6.4 | 29.40 | 24.49 | 19.59 | 0.04 | 0.27 | 0.49 | 29.16 | 24.23 | 19.30 |
| Compara-tive Exam-ple 2-7 | JIS class 1 diesel oil | 0.0 | 0.0 | 8.3 | 7.5 | 0.8 | 0.0 | 8.3 | 20.16 | 17.10 | 14.05 | 2.16 | 3.24 | 4.30 | 25.67 | 21.03 | 16.39 |
| Compara-tive Exam-ple 2-8 | Normal heptane | 0.0 | 0.0 | 0.0 | 0.0 | 0.0 | 0.0 | 0.0 | 26.21 | 21.94 | 17.67 | 0.77 | 1.29 | 1.80 | 27.95 | 23.12 | 18.29 |
| Compara-tive Exam-ple 2-9 | Cosmo White P 120 | 0.0 | 0.0 | 10.4 | 1.6 | 6.9 | 1.9 | 10.4 | 28.98 | 24.16 | 19.34 | 0.14 | 0.40 | 0.66 | 30.00 | 25.00 | 20.00 |
| Compara-tive Exam-ple 2-10 | JIS class 1 diesel oil | 0.0 | 0.1 | 23.7 | 21.5 | 2.2 | 0.0 | 23.8 | 22.12 | 18.67 | 15.22 | 1.71 | 2.61 | 3.49 | 28.02 | 23.18 | 18.35 |
| Compara-tive Exam-ple 2-11 | JIS class 1 diesel oil | 0.0 | 0.0 | 1.5 | 1.4 | 0.1 | 0.0 | 1.5 | 22.33 | 18.84 | 15.35 | 1.67 | 2.54 | 3.40 | 28.05 | 23.21 | 18.38 |
| Compara-tive Exam-ple 2-12 | JIS class 1 diesel oil | 0.0 | 0.2 | 28.8 | 26.1 | 2.7 | 0.0 | 29.0 | 27.84 | 23.25 | 18.66 | 0.40 | 0.77 | 1.13 | 28.69 | 23.80 | 18.91 |
| Compara-tive Exam-ple 2-13 | JIS class 1 diesel oil | 0.0 | 0.0 | 0.3 | 0.3 | 0.0 | 0.0 | 0.3 | 27.95 | 23.33 | 18.72 | 0.37 | 0.73 | 1.08 | 28.72 | 23.83 | 18.94 |

[Table 11]

| | Foam density (kg/m³) | Closed cell ratio (%) | Average cell diameter (μm) | Void area ratio (%) | Initial thermal conductivity (W/m·K) | | Thermal conductivity (W/m·K) after acceleration test | | Difference in thermal conductivity (W/m·K) before and after acceleration test | |
|---|---|---|---|---|---|---|---|---|---|---|
| | | | | | 10°C | 23°C | 10°C | 23°C | 10°C | 23°C |
| Example 2-1 | 30.3 | 97.3 | 127 | 0.08 | 0.0167 | 0.0181 | 0.0172 | 0.0187 | 0.0005 | 0.0006 |
| Example 2-2 | 30.1 | 96.9 | 129 | 0.09 | 0.0166 | 0.0182 | 0.0173 | 0.0189 | 0.0007 | 0.0007 |
| Example 2-3 | 30.4 | 97.0 | 126 | 0.07 | 0.0166 | 0.0181 | 0.0174 | 0.0189 | 0.0008 | 0.0008 |
| Example 2-4 | 34.1 | 94.9 | 129 | 0.12 | 0.0164 | 0.0178 | 0.0175 | 0.0189 | 0.0011 | 0.0011 |
| Example 2-5 | 31.6 | 98.1 | 125 | 0.05 | 0.0167 | 0.0182 | 0.0171 | 0.0186 | 0.0004 | 0.0004 |
| Example 2-6 | 32.0 | 98.2 | 118 | 0.06 | 0.0166 | 0.0180 | 0.0169 | 0.0183 | 0.0003 | 0.0003 |
| Example 2-7 | 27.9 | 94.7 | 127 | 0.09 | 0.0168 | 0.0181 | 0.0175 | 0.0188 | 0.0007 | 0.0007 |
| Example 2-8 | 32.8 | 98.4 | 123 | 0.04 | 0.0173 | 0.0185 | 0.0176 | 0.0188 | 0.0003 | 0.0003 |
| Example 2-9 | 32.4 | 93.6 | 127 | 0.16 | 0.0171 | 0.0186 | 0.0184 | 0.0199 | 0.0013 | 0.0013 |
| Example 2-10 | 31.5 | 97.1 | 118 | 0.05 | 0.0166 | 0.0180 | 0.0168 | 0.0182 | 0.0002 | 0.0002 |
| Example 2-11 | 31.3 | 97.2 | 117 | 0.06 | 0.0181 | 0.0191 | 0.0184 | 0.0195 | 0.0003 | 0.0004 |
| Example 2-12 | 31.0 | 99.1 | 116 | 0.05 | 0.0179 | 0.0189 | 0.0182 | 0.0192 | 0.0003 | 0.0003 |
| Example 2-13 | 30.1 | 98.4 | 108 | 0.06 | 0.0172 | 0.0187 | 0.0175 | 0.0190 | 0.0003 | 0.0003 |
| Example 2-14 | 30.3 | 98.6 | 107 | 0.08 | 0.0175 | 0.0190 | 0.0181 | 0.0196 | 0.0006 | 0.0006 |

(continued)

| | Foam density (kg/m³) | Closed cell ratio (%) | Average cell diameter (μm) | Void area ratio (%) | Initial thermal conductivity (W/m·K) | | Thermal conductivity (W/m·K) after acceleration test | | Difference in thermal conductivity (W/m·K) before and after acceleration test | |
|---|---|---|---|---|---|---|---|---|---|---|
| | | | | | 10 °C | 23 °C | 10 °C | 23 °C | 10 °C | 23 °C |
| Example 2-15 | 31.9 | 95.7 | 136 | 0.09 | 0.0170 | 0.0183 | 0.0178 | 0.0191 | 0.0008 | 0.0008 |
| Example 2-16 | 31.5 | 98.1 | 126 | 0.08 | 0.0178 | 0.0184 | 0.0182 | 0.0188 | 0.0004 | 0.0004 |
| Example 2-17 | 29.7 | 97.1 | 119 | 0.10 | 0.0171 | 0.0186 | 0.0180 | 0.0195 | 0.0009 | 0.0009 |
| Example 2-18 | 29.2 | 98.8 | 107 | 0.08 | 0.0175 | 0.0187 | 0.0182 | 0.0194 | 0.0007 | 0.0007 |

[Table 12]

| | Foam density (kg/ m³) | Closed cell ratio (%) | Average cell diameter (μm) | Void area ratio (%) | Initial thermal conductivity (W/m·K) | | Thermal conductivity (W/ m·K) after acceleration test | | Difference in thermal conductivity (W/ m·K) before and after acceleration test | |
|---|---|---|---|---|---|---|---|---|---|---|
| | | | | | 10 °C | 23 °C | 10 °C | 23 °C | 10 °C | 23 °C |
| Example 2-19 | 33.9 | 97.7 | 124 | 0.08 | 0.0163 | 0.0178 | 0.0171 | 0.0186 | 0.0008 | 0.0008 |
| Example 2-20 | 34.5 | 93.7 | 126 | 0.16 | 0.0164 | 0.0179 | 0.0181 | 0.0196 | 0.0017 | 0.0017 |
| Example 2-21 | 31.8 | 97.9 | 109 | 0.08 | 0.0167 | 0.0182 | 0.0172 | 0.0187 | 0.0005 | 0.0005 |
| Example 2-22 | 32.2 | 93.6 | 112 | 0.18 | 0.0168 | 0.0183 | 0.0184 | 0.0198 | 0.0016 | 0.0015 |
| Comparative Example 2-1 | 29.5 | 99.1 | 145 | 0.08 | 0.0235 | 0.0216 | 0.0238 | 0.0219 | 0.0003 | 0.0003 |
| Comparative Example 2-2 | 30.3 | 96.1 | 135 | 0.10 | 0.0198 | 0.0213 | 0.0206 | 0.0221 | 0.0008 | 0.0008 |
| Comparative Example 2-3 | 30.2 | 97.1 | 123 | 0.09 | 0.0194 | 0.0208 | 0.0201 | 0.0215 | 0.0007 | 0.0007 |
| Comparative Example 2-4 | 37.6 | 84.7 | 135 | 0.21 | 0.0169 | 0.0184 | 0.0212 | 0.0226 | 0.0043 | 0.0042 |
| Comparative Example 2-5 | 31.5 | 84.4 | 138 | 0.29 | 0.0175 | 0.0189 | 0.0238 | 0.0251 | 0.0063 | 0.0062 |
| Comparative Example 2-6 | 24.7 | 86.9 | 132 | 0.34 | 0.0173 | 0.0187 | 0.0226 | 0.0240 | 0.0053 | 0.0053 |
| Comparative Example 2-7 | 37.4 | 99.2 | 107 | 0.06 | 0.0203 | 0.0208 | 0.0206 | 0.0211 | 0.0003 | 0.0003 |
| Comparative Example 2-8 | 29.8 | 96.2 | 128 | 0.07 | 0.0238 | 0.0217 | 0.0241 | 0.0223 | 0.0003 | 0.0006 |
| Comparative Example 2-9 | 29.6 | 98.8 | 118 | 0.05 | 0.0188 | 0.0206 | 0.0192 | 0.0211 | 0.0004 | 0.0005 |
| Comparative Example 2-10 | 32.3 | 86.7 | 142 | 0.24 | 0.0167 | 0.0181 | 0.0192 | 0.0205 | 0.0025 | 0.0024 |
| Comparative Example 2-11 | 31.4 | 97.9 | 124 | 0.04 | 0.0197 | 0.0199 | 0.0201 | 0.0203 | 0.0004 | 0.0004 |

EP 3 159 375 A1

| | Foam density (kg/ m³) | Closed cell ratio (%) | Average cell diameter (μm) | Void area ratio (%) | Initial thermal conductivity (W/m·K) | | Thermal conductivity (W/ m·K) after acceleration test | | Difference in thermal conductivity (W/ m·K) before and after acceleration test | |
|---|---|---|---|---|---|---|---|---|---|---|
| | | | | | 10 °C | 23 °C | 10 °C | 23 °C | 10 °C | 23 °C |
| Comparative Example 2-12 | 30.1 | 88.3 | 121 | 0.23 | 0.0169 | 0.0183 | 0.0192 | 0.0205 | 0.0023 | 0.0022 |
| Comparative Example 2-13 | 29.2 | 98.8 | 106 | 0.04 | 0.0189 | 0.0196 | 0.0195 | 0.0202 | 0.0006 | 0.0006 |

INDUSTRIAL APPLICABILITY

The present disclosure provides a phenol resin foam that has low initial thermal conductivity and that retains low thermal conductivity for a long period of time, and the present disclosure also provides a method for producing such a phenol resin foam. Thus, the phenol resin foam according to the present disclosure is preferable for use as a thermal insulation material for constructions, vehicles, devices, and others.

REFERENCE SIGNS LIST

| | |
|---|---|
| 1 | Phenol resin |
| 2 | High-boiling hydrocarbon having boiling point of from 120 °C to 550 °C |
| 3 | Foaming agent |
| 4 | Curing catalyst |
| 5 | Foamable phenol resin composition |
| 6 | Surface material |
| 10 | Lower slat conveyor |
| 20 | Upper slat conveyor |
| 30 | Heat retaining material |
| 31 | Air supply fan |
| 32 | Air exhaust fan |
| 33 | Mixing machine |
| 34 | Cutting device |
| 40 | Panel-shaped phenol resin foam |
| 41 | Molding device |
| a | Mixing part |
| b | Mixing part |
| c | Distribution part |
| d | Stirring rotator |
| e | Discharge nozzle |

**Claims**

1. A phenol resin foam that contains a cyclopentane and a high-boiling hydrocarbon with a boiling point of from 120 °C to 550 °C and that has a density of from 10 kg/m$^3$ to 150 kg/m$^3$, wherein
a content X, in mol, of the cyclopentane per 22.4 x 10$^{-3}$ m$^3$ space volume in the phenol resin foam is from 0.25 to 0.85,
a proportion of the cyclopentane in a hydrocarbon having a carbon number of 6 or less included in the phenol resin foam is from 60 mol% to 100 mol%, and
an extracted amount Y, in gram, of the high-boiling hydrocarbon with a boiling point of from 120 °C to 550 °C that is extracted in chloroform per 22.4 $\times$ 10$^{-3}$ m$^3$ space volume in the phenol resin foam when the phenol resin foam is ground and subject to extraction processing in chloroform is within the range from a coefficient b, which is calculated by the equation (2) below, to a coefficient a, which is calculated by the equation (1) below:

$$a = -11.61\,X + 31.57 \ldots (1);$$

and

$$b = 2.67\,X - 0.46 \ldots (2).$$

2. The phenol resin foam according to claim 1, wherein the high-boiling hydrocarbon with a boiling point of from 120 °C to 550 °C is in the form of liquid at a pressure of 101.325 kPa and a temperature of 30 °C.

3. The phenol resin foam according to claim 1 or 2, wherein

the hydrocarbon having a carbon number of 6 or less included in the phenol resin foam includes from 60 mol% to 99.9 mol% of the cyclopentane, and
the hydrocarbon having a carbon number of 6 or less has an average boiling point of from 25 °C to 50 °C.

4. The phenol resin foam according to claim 1 or 2, wherein
the hydrocarbon having a carbon number of 6 or less included in the phenol resin foam includes from 60 mol% to 99.9 mol% of the cyclopentane and from 0.1 mol% to 40 mol% of at least one type selected from any hydrocarbon having a boiling point of from - 50 °C to 5 °C, and
the hydrocarbon having a carbon number of 6 or less has an average boiling point of from 25 °C to 50 °C, and a content of the hydrocarbon having a carbon number of 6 or less in the phenol resin foam is from 0.3 mol to 1.0 mol per $22.4 \times 10^{-3}$ m$^3$ space volume in the phenol resin foam.

5. The phenol resin foam according to any one of claims 1 to 4, having a thermal conductivity of 0.0200 W/m·K or less both under a 10 °C environment and under a 23 °C environment.

6. The phenol resin foam according to any one of claims 1 to 5, wherein
the hydrocarbon having a carbon number of 6 or less included in the phenol resin foam includes a hydrocarbon having a boiling point of from - 50 °C to 5 °C, and
the hydrocarbon having a boiling point of from - 50 °C to 5 °C contains isobutane.

7. The phenol resin foam according to any one of claims 1 to 6, further containing at least one of a hardly water-soluble metal hydroxide that discharges water at 150 °C or more and a hardly water-soluble phosphorus-based flame retardant that has a decomposition temperature of 150 °C or more.

8. The phenol resin foam according to any one of claims 1 to 7, having a closed cell ratio of 90 % or more and an average cell diameter of from 40 $\mu$m to 300 $\mu$m.

9. The phenol resin foam according to any one of claims 1 to 8, having a void area ratio of 0.2 % or less.

10. The phenol resin foam according to any one of claims 1 to 9, further containing a hydrofluoroolefin having a carbon number of 3 or 4, wherein
a content Z, in mol, of the hydrofluoroolefin having a carbon number of 3 or 4 per $22.4 \times 10^{-3}$ m$^3$ space volume in the phenol resin foam is from 0.01 to 0.4, and
a sum, in mol, of a content of the hydrocarbon having a carbon number of 6 or less per $22.4 \times 10^{-3}$ m$^3$ space volume in the phenol resin foam and a content Z, in mol, of the hydrofluoroolefin having a carbon number of 3 or 4 per $22.4 \times 10^{-3}$ m$^3$ space volume in the phenol resin foam is from 0.3 to 0.9.

11. The phenol resin foam according to claim 10, wherein the extracted amount Y, in gram, is a coefficient c or less, the coefficient c being calculated by the equation (3) below:

$$c = - 33.6\, Z + 30.0 \ldots (3).$$

12. A method for producing a phenol resin foam according to any one of claims 1 to 9, the method comprising:

mixing a foamable phenol resin composition containing at least a phenol resin, a surfactant, a high-boiling hydrocarbon having a boiling point of from 120 °C to 550 °C, a foaming agent including a cyclopentane, and an acid curing catalyst, with use of a mixing machine; discharging the foamable phenol resin composition from a distribution part of the mixing machine; and subsequently, in a process of foaming and curing the foamable phenol resin composition by heating, pressurizing the foamable phenol resin composition from an upper and a lower direction to produce a phenol resin foam molded in a plate shape.

13. A method for producing a phenol resin foam according to claim 10 or 11, the method comprising:

mixing a foamable phenol resin composition containing at least a phenol resin, a surfactant, a high-boiling hydrocarbon having a boiling point of from 120 °C to 550 °C, a foaming agent including a cyclopentane and a hydrofluoroolefin having a carbon number of 3 or 4, and an acid curing catalyst, with use of a mixing machine;

discharging the foamable phenol resin composition from a distribution part of the mixing machine; and subsequently, in a process of foaming and curing the foamable phenol resin composition by heating, pressurizing the foamable phenol resin composition from an upper and a lower direction to produce a phenol resin foam molded in a plate shape.

14. The method, according to claim 12 or 13, for producing a phenol resin, wherein a pressure at the distribution part is from 0.3 MPa to 10 MPa.

15. The method, according to any one of claims 12 to 14, for producing a phenol resin, wherein
a content of water contained in the phenol resin to be charged into the mixing machine is from 2 % by mass to 20 % by mass, and wherein
in the process of foaming and curing the foamable phenol resin composition, the foamable phenol resin composition is pressurized with use of a double conveyor, and
a temperature in the double conveyor is from 60 °C to 100 °C.

16. The method, according to any one of claims 12 to 15, for producing a phenol resin, wherein
in the process of foaming and curing the foamable phenol resin composition, the foamable phenol resin composition is pressurized with use of a double conveyor, and
a coefficient R, which is calculated from a content P, in % by mass, of water contained in the phenol resin to be charged into the mixing machine and a temperature Q, in °C, in the double conveyor by the equation (4) below, is from 20 to 36:

$$R = P + 0.2286\,Q \ldots (4).$$

# FIG. 1

# FIG. 2

## INTERNATIONAL SEARCH REPORT

| | International application No. |
|---|---|
| | PCT/JP2015/003040 |

| A. CLASSIFICATION OF SUBJECT MATTER |
|---|
| *C08J9/14*(2006.01)i |

According to International Patent Classification (IPC) or to both national classification and IPC

| B. FIELDS SEARCHED |
|---|

Minimum documentation searched (classification system followed by classification symbols)
C08J9/00-9/42

Documentation searched other than minimum documentation to the extent that such documents are included in the fields searched
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)
CAplus(STN), JSTPlus/JST7580/JSTChina(JDreamIII)

| C. DOCUMENTS CONSIDERED TO BE RELEVANT |
|---|

| Category* | Citation of document, with indication, where appropriate, of the relevant passages | Relevant to claim No. |
|---|---|---|
| A | JP 11-140216 A (Asahi Chemical Industry Co., Ltd.), 25 May 1999 (25.05.1999), entire text (Family: none) | 1-16 |
| A | WO 99/11697 A1 (Asahi Chemical Industry Co., Ltd.), 11 March 1999 (11.03.1999), entire text & AU 8888698 A & KR 10-0370995 B | 1-16 |
| A | CN 103435970 A (China Building Materials Academy), 11 December 2013 (11.12.2013), entire text (Family: none) | 1-16 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 01 September 2015 (01.09.15) | 15 September 2015 (15.09.15) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (July 2009)

**INTERNATIONAL SEARCH REPORT**

| International application No. |
| --- |
| PCT/JP2015/003040 |

C (Continuation).  DOCUMENTS CONSIDERED TO BE RELEVANT

| Category* | Citation of document, with indication, where appropriate, of the relevant passages | Relevant to claim No. |
| --- | --- | --- |
| P,A | WO 2014/092086 A1  (Asahi Kasei Construction Materials Corp.), 19 June 2014 (19.06.2014), entire text & CN 10485174 A        & KR 10-2015-0081449 A | 1-16 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11140216 A
- WO 9911697 A1
- JP 2007131803 A
- JP 2000218635 A